# EUROPEAN PATENT APPLICATION

(11) **EP 3 648 042 A1**
(43) Date of publication of application: **06.05.2020**
(21) Application number: 19206461.6
(22) Date of filing: 31.10.2019
(51) Int. Cl.: G06Q 30/06

(54) **AIRCRAFT MODIFICATION MARKETPLACE**

(30) Priority: 31.10.2018 US 201862753914 P; 17.09.2019 US 201916573486; 17.09.2019 US 201916573526; 17.09.2019 US 201916573572
(71) Applicant: The Boeing Company, Chicago, IL 60606-1596 (US)
(72) Inventor: FAHEY, Patrick C., Chicago, IL 60606-1596 (US); GILLEY, Sheldon D., Chicago, IL 60606-1596 (US); BOWE, Mark A., Chicago, IL 60606-1596 (US)
(74) Representative: Durling, Barbara Eleanor Ravenhill

(57) **Abstract**

Methods and systems for managing aircraft modifications. A link to a customer information database is established in response to receiving a launch input for a modification marketplace entered by a user via a graphical user interface. The customer information database includes identification information and customer information associated with the user. A determination is made as to whether the user is authorized to access the modification marketplace using the identification information. A link to an engineering database containing aircraft product information is established in response to a determination that the user is authorized to access the modification marketplace. A selected level of access to the aircraft product information in the engineering database is provided, via the graphical user interface, based on the customer information associated with the user.

## Description

### FIELD

The present disclosure relates generally to managing modifications to aircraft and, more particularly, to methods and systems for providing a virtual aircraft marketplace that determines whether a user is authorized to make modifications to an aircraft and manages the ordering of such modifications via the virtual aircraft marketplace.

### BACKGROUND

Oftentimes, the ordering and purchasing of complex products is more time-consuming and difficult than desired. For example, the ordering of retrofit features for a complex product, such as an airplane, or the building of a brand new configuration for an aircraft may require a customer having to search through numerous static documents, such as product catalogs, requirements, service bulletins, and other types of documents. Some currently used e-commerce systems allow a customer to view the static documents and files for products online and allow the online purchase of products. This type of e-commerce is often used between businesses to conduct commercial transactions. However, these e-commerce systems may be unable to provide the customer with a way of placing orders for products and making purchases with the desired level of speed and efficiency. For example, these e-commerce systems may require that the customer spend more time than desired to make informed decisions about products. Further, these systems may provide a generic ordering and purchase experience and may be unable to distinguish between the needs and business strategies of different customers. Thus, systems and methods for improving customer experience are desired.

### SUMMARY

In one example, the disclosure provides a method for managing aircraft modification according to independent claim 1. In another example, the disclosure provides a system for managing modifications to aircraft according to independent claim 15. Optional features are described in the dependent claims.

In one example embodiment, a method is provided for managing modifications to aircraft. A link to a customer information database is established in response to receiving a launch input for a modification marketplace entered by a user via a graphical user interface. The customer information database includes identification information and customer information associated with the user. A determination is made as to whether the user is authorized to access the modification marketplace using the identification information associated with the user. A link to an engineering database containing aircraft product information is established in response to a determination that the user is authorized to access the modification marketplace. A selected level of access to the aircraft product information in the engineering database is provided, via the graphical user interface, based on the customer information associated with the user.

In another example embodiment, a method for managing aircraft modification is provided. A link is established to a customer information database in response to receiving a launch input for a modification marketplace entered by a user via a graphical user interface. The customer information database includes identification information and customer information associated with the user. A determination is made as to whether the user is authorized to access the modification marketplace using the identification information associated with the user. A link to at least one of a plurality of data systems containing aircraft product information is established in response to a determination that the user is authorized to access the modification marketplace. A selected level of access to the aircraft product information is provided, via the graphical user interface, based on the customer information associated with the user. User input selecting a set of aircraft is received via the graphical user interface. A feature selection to modify the set of aircraft is received, via the graphical user interface. Corresponding information from at least one of the plurality of data systems is retrieved in response to receiving the feature selection. A determination is made as to whether the feature selection includes a feature already installed on at least one of the set of aircraft selected based on the corresponding information retrieved. The user is alerted, via the graphical user interface, that the feature was previously installed on the at least one of the set of aircraft.

In yet another example embodiment, a system is provided for managing modifications to aircraft. The system includes a graphical user interface for display on a display system and a modification marketplace presented to a user via the graphical user interface. The modification marketplace comprises an access manager and a retrofit manager. The access manager establishes a link to a customer information database in response to receiving a launch input for a modification marketplace entered by the user via a graphical user interface. The customer information database includes identification information and customer information associated with the user. The access manager determines whether the user is authorized to access the modification marketplace using the identification information associated with the user. The access manager establishes a link to at least one of a plurality of data systems containing aircraft product information in response to a determination that the user is authorized to access the modification marketplace. The access manager provides, via the graphical user interface, a selected level of access to the aircraft product information based on the customer information associated with the user. The retrofit manager receives, via the graphical user interface, user input selecting a set of aircraft and customizes an experience of the user within the modification marketplace based on the set of aircraft selected.

The features and functions can be achieved independently in various embodiments of the present disclosure or may be combined in yet other embodiments in which further details can be seen with reference to the following description and drawings.

### BRIEF DESCRIPTION OF THE DRAWINGS

The novel features believed characteristic of the illustrative embodiments are set forth in the appended claims. The illustrative embodiments, however, as well as a preferred mode of use, further objectives and features thereof, will best be understood by reference to the following detailed description of an illustrative embodiment of the present disclosure when read in conjunction with the accompanying drawings, wherein:
**Figure 1** is a block diagram of a virtual aircraft marketplace in accordance with an example embodiment.
**Figure 2** is a more detailed block diagram of a modification marketplace within the virtual aircraft marketplace in accordance with an example embodiment.
**Figure 3** is a more detailed block diagram of a production marketplace within the virtual aircraft marketplace in accordance with an example embodiment.
**Figure 4** is an illustration of a graphical user interface presenting a virtual aircraft marketplace in accordance with an illustrative embodiment.
**Figure 5** is another illustration of the graphical user interface presenting a virtual aircraft marketplace in accordance with an illustrative embodiment.
**Figure 6** is another illustration of the graphical user interface presenting a virtual aircraft marketplace in accordance with an illustrative embodiment.
**Figure 7** is an illustration of the graphical user interface presenting a modification marketplace in accordance with an illustrative embodiment.
**Figure 8** is another illustration of the graphical user interface presenting the modification marketplace in accordance with an illustrative embodiment.
**Figure 9** is another illustration of the graphical user interface presenting the modification marketplace in accordance with an illustrative embodiment.
**Figure 10** is another illustration of the graphical user interface presenting the modification marketplace in accordance with an illustrative embodiment.
**Figure 11** is another illustration of the graphical user interface presenting the modification marketplace in accordance with an illustrative embodiment.
**Figure 12** is another illustration of the graphical user interface presenting the modification marketplace in accordance with an illustrative embodiment.
**Figure 13** is another illustration of the graphical user interface presenting the modification marketplace in accordance with an illustrative embodiment.
**Figure 14** is another illustration of the graphical user interface presenting the modification marketplace in accordance with an illustrative embodiment.
**Figure 15** is another illustration of the graphical user interface presenting the modification marketplace in accordance with an illustrative embodiment.
**Figure 16** is another illustration of the graphical user interface presenting the modification marketplace in accordance with an illustrative embodiment.
**Figure 17** is another illustration of the graphical user interface presenting the modification marketplace in accordance with an illustrative embodiment.
**Figure 18** is another illustration of the graphical user interface presenting the modification marketplace in accordance with an illustrative embodiment.
**Figure 19** is another illustration of the graphical user interface presenting the modification marketplace in accordance with an illustrative embodiment.
**Figure 20** is another illustration of the graphical user interface presenting the modification marketplace in accordance with an illustrative embodiment.
**Figure 21** is another illustration of the graphical user interface presenting the modification marketplace in accordance with an illustrative embodiment.
**Figure 22** is another illustration of the graphical user interface presenting the modification marketplace in accordance with an illustrative embodiment.
**Figure 23** is another illustration of the graphical user interface presenting the modification marketplace in accordance with an illustrative embodiment.
**Figure 24** is another illustration of the graphical user interface presenting the modification marketplace in accordance with an illustrative embodiment.
**Figure 25** is another illustration of the graphical user interface presenting the modification marketplace in accordance with an illustrative embodiment.
**Figure 26** is another illustration of the graphical user interface presenting the modification marketplace in accordance with an illustrative embodiment.
**Figure 27** is another illustration of the graphical user interface presenting the modification marketplace in accordance with an illustrative embodiment.
**Figure 28** is another illustration of the graphical user interface presenting the modification marketplace in accordance with an illustrative embodiment.
**Figure 29** is another illustration of the graphical user interface presenting the modification marketplace in accordance with an illustrative embodiment.
**Figure 30** is another illustration of the graphical user interface presenting the modification marketplace in accordance with an illustrative embodiment.
**Figure 31** is another illustration of the graphical user interface presenting the modification marketplace in accordance with an illustrative embodiment.
**Figure 32** is another illustration of the graphical user interface presenting the modification marketplace in accordance with an illustrative embodiment.
**Figure 33** is another illustration of the graphical user interface presenting the modification marketplace in accordance with an illustrative embodiment.
**Figure 34** is another illustration of the graphical user interface presenting the modification marketplace in accordance with an illustrative embodiment.
**Figure 35** is an illustration of the graphical user interface presenting a simulation marketplace in accordance with an illustrative embodiment.
**Figure 36** is an illustration of the graphical user interface presenting a callout window for a simulation marketplace in accordance with an illustrative embodiment.
**Figure 38** is an illustration of the graphical user interface presenting a callout window for a simulation marketplace in accordance with an illustrative embodiment.
**Figure 39** is an illustration of the graphical user interface presenting a callout window for a simulation marketplace in accordance with an illustrative embodiment.
**Figure 40** is a flowchart of a process for managing modifications to an aircraft in accordance with an illustrative embodiment.
**Figure 41** is a flowchart of a process for managing modifications to an aircraft in accordance with an illustrative embodiment.
**Figure 42** is a flowchart of a process for managing modifications to an aircraft in accordance with an illustrative embodiment.
**Figure 43** is a flowchart of a process for managing modifications to an aircraft in accordance with an illustrative embodiment.
**Figure 44** is a flowchart of a process for managing modifications to an aircraft in accordance with an illustrative embodiment.
**Figure 45** is a flowchart of a process for managing a build of a configuration for a new aircraft in accordance with an illustrative embodiment.
**Figure 46** is a flowchart of a process for managing a build of a configuration for a new aircraft in accordance with an illustrative embodiment.
**Figure 47** is a flowchart of a process for managing modifications to an aircraft via a graphical user interface in accordance with an illustrative embodiment.
**Figure 48** is a flowchart of a process for managing modifications to an aircraft via a graphical user interface in accordance with an illustrative embodiment.
**Figure 49** is a block diagram of a data processing system in accordance with an example embodiment.
**Figure 50** is a block diagram of an aircraft manufacturing and service method in accordance with an example embodiment.
**Figure 51** is a block diagram of an aircraft in accordance with an example embodiment.

### DETAILED DESCRIPTION

The example embodiments described below provide various related methods and systems for configuring an aircraft. In particular, the example embodiments provide methods and apparatuses for modifying an aircraft that is already in use, configuring a new aircraft that has already been ordered, and pre-configuring an aircraft for purchase in a virtual aircraft marketplace. For example, the example embodiments described below provide a modification marketplace that allows a user to access an engineering database containing aircraft product information provided by an aircraft manufacturer for various aircraft. This aircraft product information includes modification information that identifies, for example, modifications that are available for a particular aircraft. The modification marketplace ensures that only authorized users are allowed to access such modification information. The example embodiments described below also provide a production marketplace that allows a user to explore production options for a new aircraft or to pre-configure a new aircraft.

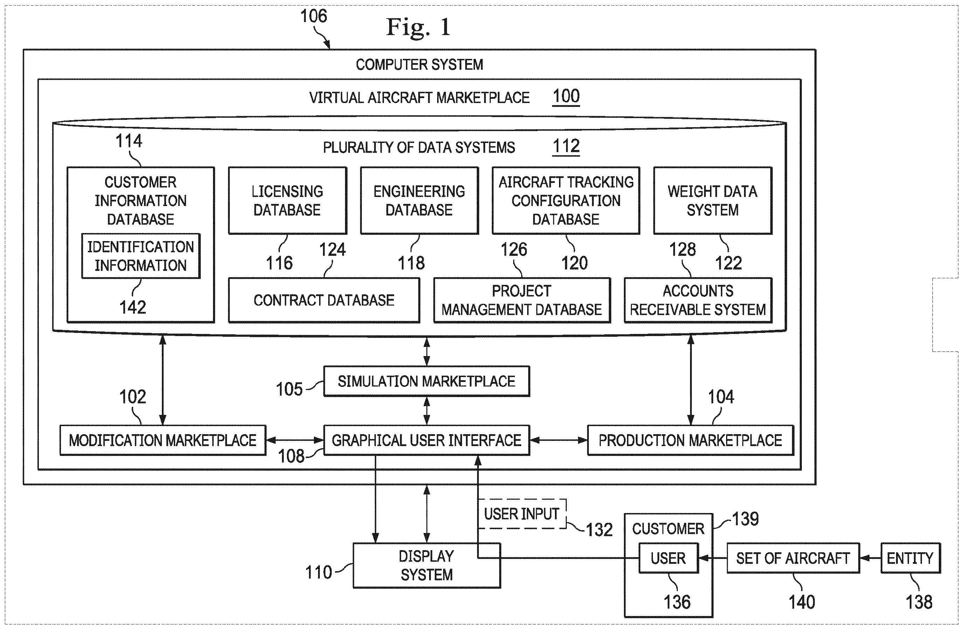

Referring now to the figures, **Figure 1** is a block diagram of a virtual aircraft marketplace **100** in accordance with an illustrative embodiment. Virtual aircraft marketplace **100** is an overall virtual environment that allows a user to customize both existing and new aircraft. This overall virtual environment may include any number of individual or integrated virtual environments. Virtual aircraft marketplace **100** may include, for example, modification marketplace **102**, production marketplace **104**, simulation marketplace **105**, or a combination thereof.

Modification marketplace **102** and production marketplace **104** may exist separately and independently or may be integrated and thereby function in combination. Simulation marketplace **105** exists separately and independently of modification marketplace **102** and production marketplace **104.** But in other illustrative examples, modification marketplace **102** and simulation marketplace **105**, production marketplace **104** and simulation marketplace **105**, or a combination of all three may be integrated.

Each of virtual aircraft marketplace **100**, modification marketplace **102**, production marketplace **104**, and simulation marketplace **105** may be implemented using software, hardware, firmware, or a combination thereof. When software is used, the operations performed by each of virtual aircraft marketplace **100**, modification marketplace **102**, production marketplace **104**, and simulation marketplace **105** may be implemented using, for example, without limitation, program code configured to run on a processor unit. When firmware is used, the operations performed by each of virtual aircraft marketplace **100**, modification marketplace **102**, production marketplace **104**, and simulation marketplace **105** may be implemented using, for example, without limitation, program code and data stored in persistent memory to run on a processor unit.

When hardware is employed, the hardware may include one or more circuits that operate to perform the operations performed by each of virtual aircraft marketplace **100**, modification marketplace **102**, production marketplace **104**, and simulation marketplace **105**. Depending on the implementation, the hardware may take the form of a circuit system, an integrated circuit, an application specific integrated circuit (ASIC), a programmable logic device, or some other suitable type of hardware device configured to perform any number of operations. A programmable logic device may be configured to perform certain operations. The device may be permanently configured to perform these operations or may be reconfigurable. A programmable logic device may take the form of, for example, without limitation, a programmable logic array, programmable array logic, a field programmable logic array, a field programmable gate array, or some other type of programmable hardware device.

Depending on the desired implementation, virtual aircraft marketplace **100** may be implemented using computer system **106**, a cloud computing system, a set of virtual machines, or a combination thereof. The set of virtual machines may include one or more virtual machines. Although the below description of virtual aircraft marketplace **100** is discussed with respect to computer system **106**, this description may also be applicable when virtual aircraft marketplace **100** is additionally or alternatively implemented using a cloud computing system, a set of virtual machines, or both. Computer system **106** may comprise one computer or multiple computers in communication with each other. Computer system **106** may comprise one computer or multiple computers in communication with each other

Virtual aircraft marketplace **100** may be presented to a user in graphical user interface **108** displayed on a display system **110** in communication with computer system **106.** Display system **110** may communicate with computer system **106** over any number of or combination of wired, wireless, optical, or other types of communications links. Display system **110** may include one or more display devices. In some illustrative examples, display system **110** is implemented as part of computer system **106.** In some illustrative examples, display system **110** is implemented using a virtual reality system or an augmented reality system.

Virtual aircraft marketplace **100** is in communication with plurality of data systems **112** using any number of communications links. Each communications link may include a wired communications link, wireless communications link, optical communications link, other type of communications link, or combination thereof. Each data system of plurality of data systems **112** may be an organized collection of data, data structure, data storage, or combination thereof implemented using software, hardware, firmware, or a combination thereof. For example, a data system of plurality of data systems **112** may include at least one of a database, a data repository, a spreadsheet, a table, a file, a server, a group of servers, cloud storage, associative memory, a computer-based platform, an Internet-based platform, some other type of data system, or a combination thereof. In one or more examples, a data system includes multiple servers (*e*.*g*., a web server, a database server, a file server, etc.) in communication with each other.

In one or more illustrative examples, each of plurality of data systems **112** is stored within computer system **106.** In other illustrative examples, each of plurality of data systems **112** may be stored within computer system **106**, implemented as part of computer system **106**, located remotely with respect to computer system **106**, or a combination thereof. Plurality of data systems **112** may include, for example, without limitation, customer information database **114**, licensing database **116**, engineering database **118**, aircraft tracking configuration (ACT) database **120**, weight data system **122**, contract information database **124**, project management database **126**, accounting receivable system **128.** The different types of information stored in these databases are discussed in greater detail below.

Virtual aircraft marketplace **100** allows user **136**, if user **136** is so authorized, to explore, analyze, and manage information provided by entity **138.** Entity **138** may be, for example, an aircraft manufacturer. Entity **138** may be considered as "hosting" virtual aircraft marketplace **100** and thereby, modification marketplace **102** and production marketplace **104.** User **136** is associated with customer **139** by either being customer **139** or representing customer **139** of entity **138.** For example, user **136** may be an employee, agent, or other type of representative of customer **139.** Customer **139** may be, for example, an aircraft purchaser, aircraft owner, aircraft lessor, aircraft operator, an airline, an air freight company, an aircraft charter company, an aircraft leasing company, a third-party aircraft modification center, or some other type of customer. References herein to "customer **139**" with respect to virtual aircraft marketplace **100** may generally be considered interchangeable with "user **136**," who is or represents customer **139.** For example, a reference to user input entered by customer **139** via graphical user interface **108** may generally be considered as meaning a user input entered by user **136**, who is or represents customer **139**, via graphical user interface **108.**

In one illustrative example, customer **139** owns set of aircraft **140**, which may have been provided (*e*.*g*., manufactured) by entity **138.** Set of aircraft **140** may include one or more aircraft, such as one or more airplanes. When set of aircraft **140** includes multiple aircraft, set of aircraft **140** may be referred to as a fleet. Modification marketplace **102** allows customer **139** to identify modifications for set of aircraft **140.** For example, modification marketplace **102** may allow customer **139** to identify modifications available from entity **138** for retrofitting to set of aircraft **140.**

In other illustrative examples, customer **139** may be looking to purchase one or more new aircraft to add to set of aircraft **140** or one or more aircraft that will be the first of its fleet. Production marketplace **104** allows customer **139** to explore production options available for a new aircraft or for pre-configuring a new aircraft. In some cases, customer **139** is a repeat customer of entity **138.** In other cases, customer **139** is a new customer.

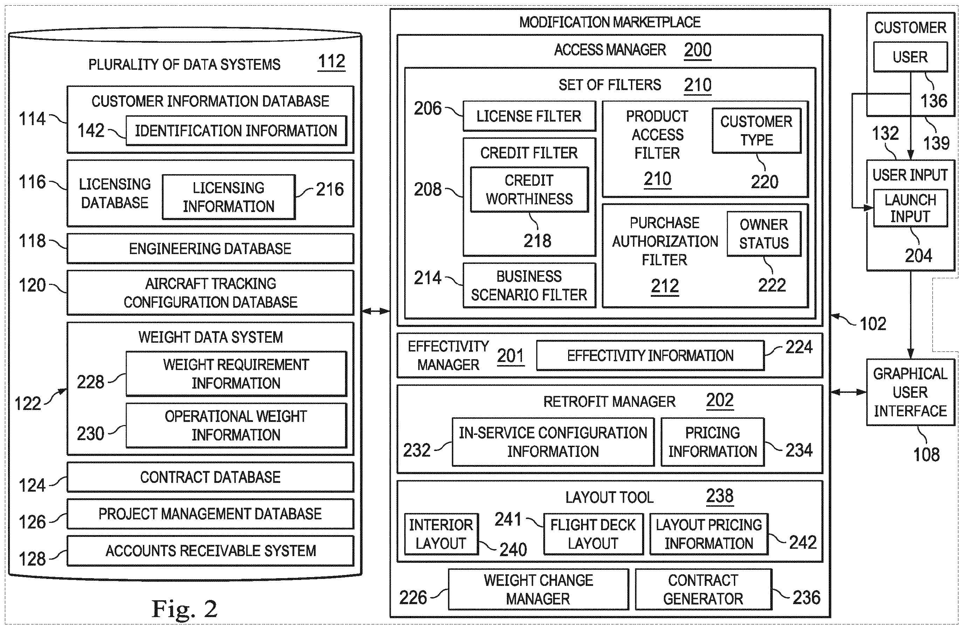

In some examples, customer **139** is looking to purchase features for one or more flight simulators. For example, customer **139** may be a flight training company, a flight simulator manufacturer, or an airline with a flight training simulator. Simulation marketplace **105** allows customer **139** to explore the feature options available for purchase a flight simulator. In these illustrative examples, simulation marketplace **105** may be implemented using many of the same, if not the same, components as modification marketplace **102** described in **Figure 1** and in **Figure 2** below. In certain examples, simulation marketplace **105** and modification marketplace **102** may be integrated. In still other example, simulation marketplace **105** may be implemented as part of modification marketplace **102.** In some illustrative examples, simulation marketplace **105** may be entirely independent of modification marketplace **102.**

When customer **139** enters virtual aircraft marketplace **100**, customer **139** enters input (*e*.*g*., a username and password, a key, or other login credentials) via graphical user interface **108** in order to gain access to virtual aircraft marketplace **100.** Customer **139** is allowed access to virtual aircraft marketplace **100** if the input entered by customer **139** is matched to corresponding identification information stored in customer information database **114.** For example, identification information **142** is may be stored in customer information database **114** for customer **139.**

Identification information **142** may include, for example, a user name, a user password, a company name, a company password, other types of login credentials, security clearance information, other types of identifying information, or a combination thereof. Identification information **142** may be stored in customer information database **114.** Identification information **142** is used to determine the level of access to virtual aircraft marketplace **100** given to customer **139.** Once within virtual aircraft marketplace **100**, customer **139** is provided an option for selecting modification marketplace **102**, production marketplace **104**, or both.

**Figure 2** is a schematic diagram of modification marketplace **102** from **Figure 1** in accordance with an illustrative embodiment. As customer **139** makes selections within modification marketplace **102**, modification marketplace **102** communicates with plurality of data systems **112** to retrieve information for use in managing modifications to set of aircraft **140.**

Modification marketplace **102** includes access manager **200**, effectivity manager **201**, and retrofit manager **202.** In these illustrative examples, access manager **200** is able to establish a link with at least customer information database **114**, licensing database **116**, and accounts receivable system **128.** As previously described, customer information database **114** stores identification information **142** about the customers of entity **138.**

Licensing database **116** stores licensing information indicating whether a given customer has a license in place with entity **138.** Accounts receivable system **128** stores credit information. In some examples, accounts receivable system **128** is capable of connecting to and retrieving information from one or more credit reporting agencies.

Graphical user interface **108** presents virtual aircraft marketplace **100** from **Figure 1** to customer **139.** Graphical user interface **108** allows customer **139** to select modification marketplace **102** or production marketplace **104.** At any given point during the user's experience within virtual aircraft marketplace **100**, graphical user interface **108** may display any number of graphical controls. As used herein, a graphical control may take the form of selectable text, a button, an icon, a selectable image, a search box, a check box, a radio button, a text box, a slide bar, or some other type of graphical control that is selectable or controllable in some manner by the user. For example, graphical user interface **108** displays a graphical control that allows customer **139** to enter launch input **204.** This graphical control may be selectable text, a button, an icon, a selectable image, or some other type of graphical control.

Access manager **200** receiving launch input **204** via graphical user interface **108** triggers the display of modification marketplace **102** within graphical user interface **108.** Further, access manager **200** receiving launch input **204** also triggers back-end operations that are performed to validate customer **139** and customize the level of access given to customer **139**, if customer **139** is validated. In these illustrative examples, these back-end operations are performed nearly instantaneously upon receipt of launch input **204** but before the full display of modification marketplace **102** within graphical user interface **108.**

When access manager **200** receives launch input **204**, access manager **200** uses set of filters **203** to determine whether customer **139** is allowed access to modification marketplace **102** and to determine the extent to which customer **139** may use modification marketplace **102.** Set of filters **203** includes, for example, license filter **206**, credit filter **208**, product access filter **210**, purchase authorization filter **212**, and business scenario filter **214.**

Access manager **200** uses license filter **206** to determine whether customer **137** has a license with entity 138. In these examples, license filter **206** uses identification information **142** for customer **139** to search licensing information **216** stored in licensing database **116** to thereby determine whether customer **139** has a license with entity **138.** Access manager **200** denies access to modification marketplace **102** if customer **139** does not have a license with entity **138.** A license with entity **138** may be a general license or may provide a specific level of access to modification marketplace **102.** For example, customers with a first type of license may be given full access to modification marketplace **102**, while customers with a second type of license may be given only partial access to modification marketplace **102.** In some cases, customers with a third type of license may be given full access to modification marketplace **102** but only partial access to the modifications actually available via modification marketplace **102.** In this manner, licensing information **216** is used to determine the level of one type of authorization to provide customer **139** within modification marketplace **102.**

Access manager **200** uses credit filter **208** to determine credit worthiness **218** associated with customer **139.** In one or more examples, credit worthiness **218** is based on a credit rating of customer **139** with respect to a history of orders made from and payments made to entity **138.**

In one illustrative example, credit filter **208** uses information stored in accounts receivable system **128** to identify credit worthiness **218.** The information stored in accounts receivable system **128** may identify credit worthiness **218** or information that credit filter **208** can use to compute credit worthiness **218.** Credit filter **208** uses credit worthiness **218** to determine whether or not to allow or deny access to modification marketplace **102** based on whether credit worthiness **218** meet certain criteria (*e*.*g*., a threshold credit rating).

Access manager **200** uses product access filter **210** to determine which types of product information should be accessible to customer **139** via modification marketplace **102.** In one or more examples, product access filter **210** uses the information stored in customer information database **114** to determine customer type **220** for customer **139.** In one or more examples, customer type **220** is selected from one of a commercial airline, an aircraft leasing company, an air freight company, a business jet company, a third-party modification center, or some other type of customer. Product access filter **210** limits how much access is given or customizes the access given to customer **139** based on customer type **220.**

For example, commercial airlines and aircraft leasing companies may only be allowed to access the product information in commercial airline catalogs. Air freight companies may only be allowed to access the product information in freighter aircraft catalogs. Business jet companies may only be allowed to access the product information in business jet catalogs. Further, third-party modification centers may only be allowed to access the product information in support catalogs.

Access manager **200** uses purchases authorization filter **212** to determine owner status **222** of customer **139.** In these illustrative examples, owner status **222** of customer **139** is either an owner or a non-owner of aircraft. In one or more examples, purchase authorization filter **212** uses the information in customer information database **114** to determine owner status **222.** Purchase authorization filter **212** limits how much access is given to customer **139** based on owner status **222.** For example, when customer **139** is an aircraft owner, access manager **200** allows customer **139** to use modification marketplace **102** to create firm proposals and contracts for purchasing modifications, as well as to purchase retrofit modifications. However, when customer **139** is not an aircraft owner, access manager **200** only allows customer **139** to plan for purchases and create rough order of magnitude (ROM) proposals.

Additionally, access manager **200** uses business scenario filter **214** to determine what types of business scenarios are applicable to customer **139** and will be displayed to customer **139** to help customer **139** more easily search through and browse available modifications in the catalog(s). In one or more examples, business scenario filter **214** uses customer type **220** to filter the available business scenarios. A business scenario is a category that corresponds to a particular group of features or modifications. A business scenario allows customer **139** to access a group of features targeted for a specific business purpose.

In this manner, each of set of filters **203** provides a different way of validating customer **139**, and thereby customer **139**, and customizing the level of access to modification marketplace **102** given to customer **139**, and thereby customer **139.** Access manager **200** uses set of filters **203** to quickly and easily link to the various data systems of plurality of data systems **112**, as described above, and retrieve information for use in customizing access to modification marketplace **102.**

Once customer **139** has been provided access to modification marketplace **102**, effectivity manager **201** manages the particular aircraft for which modifications are being sought. Effectivity manager **201** retrieves information stored in aircraft tracking configuration (ACT) database **120** to present effectivity information **224** via graphical user interface **108.** In these illustrative examples, effectivity information **224** includes an effectivity for each aircraft of a plurality of aircraft owned, leased, operated, or otherwise in the control of customer **139.**

An "effectivity" for an aircraft or airplane may include, for example, a variable number, a registration number, a manufacturer serial number (MSN), a line number, or a combination thereof. In one example, the effectivity of an aircraft includes each of a variable number, a registration number, a manufacturer serial number (MSN), and a line number. Each of these different numbers may be comprised of one or more digits, one or more letters, one or more symbols, or a combination thereof. A variable number for an aircraft is a number that helps identification of the particular generation of the model of that aircraft. A registration number for an aircraft is the number issued by a regulatory agency for that aircraft (*e*.*g*., a number provided by the Federal Aviation Administration (FAA). A line number of an aircraft refers to the aircraft's position in a production line. In some cases, the effectivity also includes a current configuration identifier that identifies a particular configuration of a particular aircraft model.

Based on user input, effectivity manager **201** tracks the aircraft selected by customer **139** for modification and uses the corresponding effectivity information to customize the product information that is presented to customer **139.** Modification marketplace **102** tailors the experience provided to customer **139** based not only the results provided by access manager **200** but also on the effectivity information corresponding to the aircraft selected for modification.

Retrofit manager **202** tracks retrofit features that were previously installed on aircraft after the aircraft left the factory. Retrofit manager **202** ensures that customer **139** is prevented from purchasing or planning to purchase a retrofit feature that was already previously installed. Retrofit manager **202** uses the information stored in project management database **126** to track previously installed retrofit features.

Project management database **126** stores information about projects. In one or more examples, a project corresponds to the order of a particular aircraft and the configuration for that aircraft. A configuration of an aircraft includes, for example, the wiring, hardware components, software components, firmware components, and other types of components or features of the aircraft. In some examples, a project corresponds to the order for a feature or group of features for a particular aircraft. In yet other examples, a project corresponds to the order for a retrofit feature or group of retrofit features for a particular aircraft.

In one illustrative example, user input selects a retrofit feature in modification marketplace **102** to modify an aircraft (or set of aircraft) that have already left the factory. Retrofit manager **202** communicated with effectivity manager **201** to identify the aircraft to be modified based on the effectivities selected by customer **139.** Based on the information stored in project management database **126** for the selected aircraft, retrofit manager **202** determines whether the selected retrofit feature was previously installed on the aircraft. This check may be referred to as a "configuration check."

Retrofit manager **202** prevents customer **139** from adding the selected retrofit feature to virtual cart **225** if the retrofit feature was previously installed on the aircraft. But if the retrofit feature was not previously installed, retrofit manager **202** allows customer **139** to add the selected retrofit feature to virtual cart **225.** Virtual cart **225** tracks any features selected by customer **139** via modification marketplace **102** and allows customer **139** to make a firm proposal, a rough order of magnitude proposal, or a purchase for each selected feature, depending on the level of access granted to customer **139.**

In some illustrative examples, the addition of a selected retrofit feature to virtual cart **225** requires that one or more additional retrofit features be installed prior to or installed simultaneously with the selected retrofit feature. These one or more additional retrofit features are referred to as "prerequisite retrofit features." Retrofit manager **202** prevents customer **139** from automatically adding the selected retrofit feature to virtual cart **225** if the one or more prerequisite retrofit features were not previously installed. Retrofit manager **202** may generate a notification to alert customer **139** via graphical user interface **108** that the one or more prerequisite features need to be either installed before or simultaneously with the selected retrofit feature. In some cases, if customer **139** chooses to continue adding the selected retrofit feature to virtual cart **225**, retrofit manager **202** automatically adds the one or more prerequisite retrofit features also to virtual cart **225.**

In one or more illustrative examples, retrofit manager **202** uses in-service configuration information **232** to provide pricing information **234** for selected retrofit features that are configuration-dependent. A configuration-dependent retrofit feature is a feature that requires a review of an aircraft's current configuration in order to provide pricing information **234** for adding that retrofit feature to the aircraft. A retrofit feature that is not configuration-dependent (*i*.*e*., a configuration-independent retrofit feature) is one for which pricing information **234** is independent of the current configuration of the aircraft to which the retrofit feature is to be added.

In-service configuration information **232** includes information obtained from at least one of engineering database **118**, aircraft tracking configuration database **120**, project management database **126**, or some other data system in plurality of data systems **112.** In some cases, in-service configuration information **232** also includes information obtained from customer information database **114.** As one illustrative example, in-service configuration information **232** includes information obtained from wiring diagrams, engineering drawings, project databases, filled out forms, service bulletins, and other items stored in these various data systems. In some examples, retrofit manager **202** uses one or more tools to communicate with these data systems and obtain at least a portion of in-service configuration information **232** that is needed. Retrofit manager **202** uses in-service configuration information **232** provided by this tool to generate pricing information **234.**

Pricing information **234** includes a price for purchasing the selected retrofit feature(s) for a particular aircraft or set of aircraft. In these illustrative examples, pricing information **234** takes into account the cost of parts, hardware, wiring, software, engineering labor house for developing the modification package to add the selected retrofit feature(s), certification, other factors, or a combination thereof. In some examples, pricing information **234** also takes into account the travel by employees of entity **138** to the location of the aircraft for installation of the selected retrofit feature(s).

In some examples, modification marketplace **102** also includes weight change manager **226.** In these examples, modification marketplace **102** allows customer **139**, and thereby customer **139**, to purchase or generate proposals for features that alter the weight and balance of one or more aircraft. Weight change manager **226** communicates with effectivity manager to identify the one or more aircraft based on the effectivities selected by customer **139.** Further, weight change manager **226** is in communication with weight data system **122** to manage the weight and balance information for the selected aircraft.

Weight data system **122** stores operational weight information **228** and weight requirement information **230.** Operational weight information **228** includes information about weight and pricing for aircraft that are already in-service. As one example, for each in-service aircraft, operational weight information **228** includes current operational weights for that in-service aircraft and the paid weight for that in-service aircraft. Current operational weights for an aircraft include, for example, the current weight quantities for a takeoff weight, a taxi weight, a landing weight, and a zero fuel weight for that aircraft. The paid weight for an in-service aircraft represents the maximum operational weights paid for by customer **139.**

Weight requirement information **230** may include information about the requirements or limits for the different operational weights for aircraft. For example, weight requirement information **230** may include a maximum takeoff weight (MTOW), a maximum taxi weight (MTW), a maximum landing weight (MLW), and a maximum zero fuel weight (MZFW).

Weight change manager **226** allows customer **139** to request a weight change in an aircraft (or set of aircraft). The requested weight change may be a quantity in, for example, pounds. Based on this requested weight change, weight change manager **226** is able to retrieve information from weight data system **122** to determine whether the requested weight change exceeds weight requirements for the aircraft. Weight change manager **226** also determines a pricing for the requested weight change.

Further, weight change manager **226** also allows customer **139** to request alternate weights and leased weights. For example, customer **139** may purchase a landing weight change, as well as two alternate landing weight changes, for a particular aircraft. These different landing weights may be used, for example, at different airports. In some examples, weight change manager **226** also allows customer **139** to lease certain operational weights for a limited period of time.

In some illustrative examples, customer **139** owns a fleet of aircraft. The fleet may include, for example, several hundred airplanes. When customer **139** requests a weight change within modification marketplace **102**, weight change manager **226** processes each airplane in the fleet to obtain weight information and pricing for that airplane. Weight change manager **226** may group airplanes that have the same weight information and pricing into packages.

In these illustrative examples, modification marketplace **102** also includes interior layout tool **236.** Interior layout tool **236** allows customer **139** to customize the interior of an aircraft (*e*.*g*., the cabin interior of an airplane). In one or more examples, interior layout tool **236** includes interactive layout **238** which represents the interior of the aircraft. Interactive layout **238** may be, for example, a map of the interior of the aircraft. Customer **139** may be able to interact with and manipulate interactive layout **238** via graphical user interface **108.**

Interior layout tool **236** allows customer **139** to create a new interior for an aircraft or reconfigure an existing interior. An existing interior may be reconfigured to, for example, support a new flight route, improve passenger cabin service, improve passenger convenience and comfort, achieve some other objective, or a combination thereof. Based on the one or more selected effectivities, interior layout tool **236** presents available interior features such as, for example, seats, galleys, closets, lavatories, overhead baggage bins, passenger entertainment system components, and other types of interior features. These interior features may be available for building a new interior or reconfiguring an existing interior. In other illustrative examples, interior layout tool **236** allows customer **139** to interact with interactive layout **238** to rearrange current or existing interior features.

Further, interior layout tool **236** provides interior pricing information **240** to customer **139.** Interior pricing information **240** may be, for example, a rough order of magnitude price quote. Interior layout tool **236** provides customer **139** with the option to add this price quote, and thereby the selected modification (*i*.*e*., one or more interior features), to virtual cart **225.** From virtual cart **225**, customer **139** can request a firm proposal with contract to purchase the selected modification.

In one or more illustrative examples, modification marketplace **102** includes contract generator **242.** Contract generator **242** electronically generates a contract for the purchase of one or more features (or modifications) that have been added to virtual cart **225.** If customer **139** accepts (*e*.*g*., electronically signs) this contract via graphical user interface **108**, the purchase transaction becomes final, legal, and binding. Further, in response to the acceptance of the contract, contract generator **242** triggers the generation of a new project within project management database **126.** In one or more examples, the creation of this new project triggers the preparation of the necessary documents for performing the modification, the assembly of kits for installation of the modification, the development of software, and the development of updates to engineering drawings, wiring diagrams, or both. Updates to software and the engineering drawings and wiring diagrams may be made up until the point that the one or more features purchased are shipped to customer **139.**

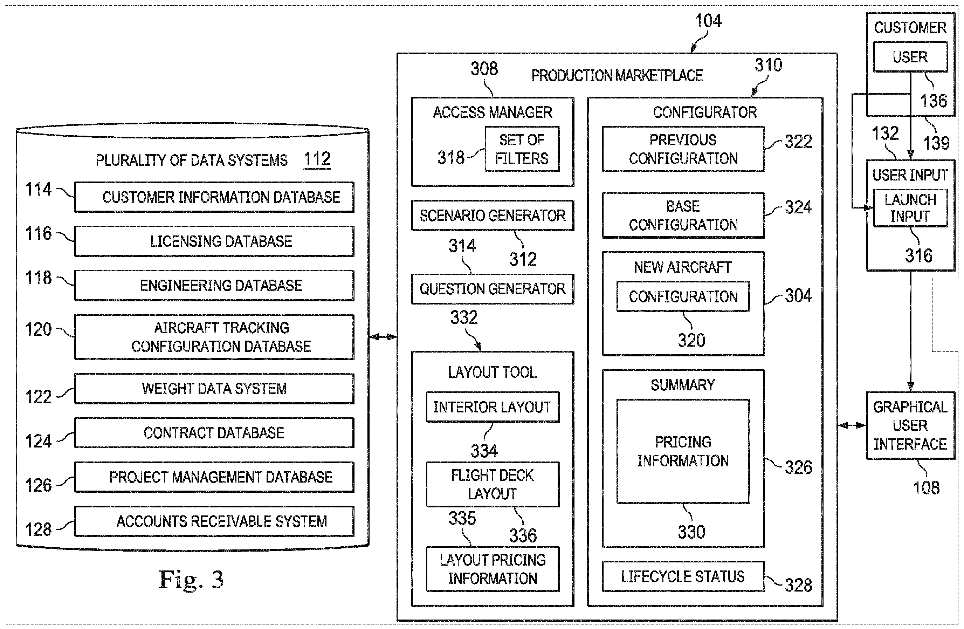

**Figure 3** is a block diagram of production marketplace **104** and plurality of data systems **112** from **Figure 1** depicted in in accordance with an illustrative embodiment. Production marketplace **104** operates in a manner similar to modification marketplace **102** but allows customer **139** to create a customized configuration for new aircraft **304.** In some cases, customer **139** can use production marketplace **104** to create a fleet of new aircraft, each having this with customized configuration.

In some examples, production marketplace **104** is independent from modification marketplace **102** in virtual aircraft marketplace **100** in **Figure 1****.** In other examples, production marketplace **104** is integrated fully within modification marketplace **102.** In still other examples, production marketplace **104** and modification marketplace **102** are partially integrated with each other.

In one or more examples, production marketplace **104** includes access manager **308**, configurator **310**, scenario generator **312**, and question generator **314.** In some examples, scenario generator **312** and question generator **314** are implemented, at least partially, as part of configurator **310.**

Access manager **308** may operate in a manner similar to access manager **200** of modification marketplace **102** described above in **Figure 2****.** For example, graphical user interface **108** presents virtual aircraft marketplace **100** from **Figure 1** to customer **139.** Graphical user interface **108** allows customer **139** to select production marketplace **104.** For example, graphical user interface **108** displays a graphical control that allows customer **139** to enter launch input **316** to select production marketplace **104.** The graphical control may be selectable text, a button, an icon, a selectable image, or some other type of graphical control.

Access manager **308** receiving launch input **316** via graphical user interface **108** triggers the display of production marketplace **104** within graphical user interface **108.** Further, access manager **308** receiving launch input **316** also triggers back-end operations that are performed to validate customer **139** and customize the level of access given to customer **139**, if customer **139** is validated. In these illustrative examples, these back-end operations are performed nearly instantaneously upon receipt of launch input **316** but before the full display of production marketplace **104** within graphical user interface **108.**

When access manager **308** receives launch input **316**, access manager **308** uses set of filters **318** to determine whether customer **139** is allowed access to modification marketplace **102** and to determine the extent to which customer **139** may use production marketplace **104.** In some illustrative examples, set of filters **318** includes one or more filters similar to those in set of filters **203** in **Figure 2**, but customized for production marketplace **104.** In other illustrative examples, set of filters **318** may be the same as set of filters **203** and each of set of filters **203** may be used for performing validation and the filtering of access for both modification marketplace **102** and production marketplace **104.**

For example, access manager **308** may communicate with licensing database **116** to determine whether customer **139** has a valid license with entity **138** to purchase and configure new aircraft **304.** Access manager **308** denies access to production marketplace **104** if customer **139** does not have a valid license with entity **138.** A license with entity **138** may be a general license or may provide a specific level of access to production marketplace **104.** For example, customers with a first type of license may be given full access to production marketplace **104**, while customers with a second type of license may be given only partial access to production marketplace **104.** If customer **139** has a license with entity **138**, access manager **308** may also use information provided by accounts receivable system **128** to determine whether customer **139** has a sufficient credit rating to purchase and configure new aircraft **304.**

In these illustrative examples, access manager **308** determines customer type **220** for customer **139** using the information stored in customer information database **114.** Access manager **308** uses customer type **220** to customize the experience of production marketplace **104** for customer **139.** For example, if customer type **220** is a commercial airline, access manager **308** filters all of the available aircraft models and available aircraft features to present to customer **139** only those aircraft models and aircraft features related to commercial use.

Further, access manager **200** uses the information in customer information database **114** to determine owner status **222** of customer **139.** In some examples, access manager **200** uses owner status **222** to further customize the experience of production marketplace **104** for customer **139.** In other examples, owner status **222** is used by other components of production marketplace **104** to customize the experience of production marketplace **104** for customer **139.**

Once access manager **308** has fully processed launch input **316** and determined whether customer **139** should be given access to production marketplace **104** and, if so, the extent to which customer **139** should be given access to production marketplace **104**, configurator **310** of production marketplace **104** helps customer **139** build configuration **320** for new aircraft **304.**

Configurator **310** guides customer **139** through the process of building configuration **320** for new aircraft **304** in a way that is completely tailored (*i*.*e*., customized) for customer **139** based on the information corresponding to customer **139**, as obtained from plurality of data systems **112.** In particular, configurator **310** helps guide customer **139** to build configuration **320** that is optimized for customer **139** based on customer type **220** and known objectives for customer type **220** and customer **139**, specifically. In other words, configurator **310** tailors the experience of production marketplace **104** in a manner that targets the specific needs and strategy of customer **139.**

Configurator **310** allows customer **139** to build configuration **320** based on previous configuration **322.** For example, if owner status **222** indicates that customer **139** is an aircraft owner, configurator **310** may use information provided by at least one of customer information database **114**, aircraft tracking configuration database **120**, engineering database **118**, contract information database **124**, or project management database **126** to identify the different configurations for the different aircraft owned by customer **139.**

Configurator **310** may present all or some subset of the previous configurations of aircraft purchased by customer **139** via graphical user interface **108.** Customer **139** is allowed to select one of these previous configurations as previous configuration **322** off of which configuration **320** for new aircraft **304** is to be built. In one or more illustrative examples, the previous configurations identified by configurator **310** include any modifications (*e*.*g*., retrofit feature modifications) made to aircraft after the aircraft left the factory. By allowing customer **139** to begin building configuration **320** from previous configuration **322**, the amount of time customer **139** needs to spend building configuration **320** is reduced. Further, customer **139** can focus only on the areas of configuration **320** that need to be updated based on new objectives, an updated strategy, new flight route information, other factors, or a combination thereof.

In one or more examples, configurator **310** uses scenario generator **312** to present information to customer **139** in graphical user interface **108** based on customized business scenarios. With respect to production marketplace **104**, business scenarios may include, for example, but are not limited to, passenger experience, cabin and crew equipment, connectivity, branding, ground operations, flight operations, engines, other types of business scenarios, or a combination thereof.

Scenario generator **312** uses different types of information to customize the business scenarios presented to customer **139** via graphical user interface **108.** For example, scenario generator **312** may use information about customer **139** (*e*.*g*., customer type **220**, information in aircraft tracking configuration database **120** corresponding to customer **139**, etc.) to provide customized business scenarios via graphical user interface **108.** In some cases, scenario generator **312** is able to connect to at least one of the Internet, a web server, or some other application to identify media content associated with customer **139** for use in customizing business scenarios for customer **139.** In these illustrative examples, scenario generator **312** may use data obtained from any combination of configuration information, design models, engineering drawings, three-dimensional (3D) geometry, prices, weight information, customer brochures, brochures provided by entity **138**, feature promotion information, media content, or other type of information to customize business scenarios.

In addition to customizing business scenarios, scenario generator **312** may provide recommendations for configuring new aircraft **304.** In some illustrative examples, scenario generator **312** provides recommendations for reconfiguring existing aircraft in the fleet owned by customer **139** based on configuration **320** built for new aircraft **304.**

In one or more examples, configurator **310** also uses question generator **314** to customize the experience of production marketplace **104** for customer **139.** Question generator **314** may use information, similar to the information used by scenario generator **312**, to generate questions that are presented to customer **139** via graphical user interface **108.** In particular, question generator **314** generates questions that are selected to help customize the options presented to customer **139** for building configuration **320** for new aircraft **304.** For example, question generator **314** may generate customer strategy questions and market-driven questions.

Customer **139** enters responses to these questions via graphical user interface **108.** Configurator **310** processes these responses. In particular, configurator **310** uses the responses to create base configuration **324**, which may also be referred to as a template configuration, preliminary configuration, or pre-configuration. Base configuration **324** includes auto-populated features that are populated or selected based on the responses of customer **139.** In some cases, base configuration **324** includes identifiers or prompts indicating where customer **139** should provide further clarification. In other cases, base configuration **324** includes multiple recommendations for a particular type of feature. For example, for the overhead bins of new aircraft **304**, configurator **310** may use the responses of customer **139** to provide multiple options for this feature type.

In one or more examples, configurator **310** uses responses to provide multiple base configurations and a comparison of these base configurations. Configurator **310** may prompt customer **139** for input via graphical user interface **108** to select one of these base configurations from which to build configuration **320.**

In these illustrative examples, when customer **139** makes a feature selection for addition to configuration **320**, configurator **310** adds the one or more features included in this feature selection to configuration **320.** In one or more examples, configurator **310** analyzes the feature selection to determine whether any additional features are required to be included along with the feature selection.

As one illustrative example, when customer **139** selects a main feature for addition to configuration **320**, configurator **310** analyzes information from engineering database **118** to determine whether there are features related to this main feature. If any of these related features is associated with at least one attribute choice (*e*.*g*., type, length width, color, etc.), configurator **310** presents the at least one choice to customer **139.** For example, a lavatory selected as a main feature may be related to multiple features, including the lavatory door. The lavatory door may be selected from one of different types of lavatory doors. In these cases, configurator **310** presents the various choices for the different types of lavatory door (*e*.*g*., single panel door, bifold door, etc.) to customer **139.** In one or more examples, configurator **310** requires input from customer **139** making selections for the one or more attributes of each related feature prior to fully adding the main feature to configuration **320.**

In some illustrative examples, a related feature may not be associated with any selectable attribute. In these examples, configurator **310** automatically adds the related feature to configuration **320.** In some illustrative examples, a portion of the features related to a main feature may include one or more selectable attributes, while a portion of the features related to a main feature may include no selectable attributes.

Configurator **310** allows customer **139** to manage multiple configurations. In one or more examples, configurator **310** allows customer **139** to print configuration reports and share configurations with other customers. In some cases, configurator **310** allows customer **139** to merge multiple configurations into a single configuration file that identifies duplicate selections or other types of issues.

In one or more examples, in response to receiving corresponding user input **132**, configurator **310** generates summary **326.** Summary **326** may also be referred to as a "build completion status." Summary **326** may be generated at any point during the building of configuration **320.** Summary **326** provides an overview of the various features already added to configuration **320** and the various features that still need to be added to configuration **320.** Summary **326** may also provide an indication of which feature selections are required for new aircraft **304** and which feature selections are optional.

In some cases, summary **326** may also indicate, of the optional feature selections, which are recommended by entity **138.** For example, summary **326** may indicate which feature selections are recommended by the engineering group of entity **138.** Configurator **310** may present links in summary **326** to one or more file attachments (*e*.*g*., documents, images, slide deck, etc.) that includes relevant information about features.

Configurator **310** may also have the capability to provide lifecycle status **328.** Lifecycle status **328**, in some cases, may be included as part of summary **326.** Lifecycle status **328** indicates the status of new aircraft **304** in the configuration lifecycle. In other examples, lifecycle status **328** may indicate the physical build status of new aircraft **304** based on configuration **320** built by customer **139.**

In one or more examples, production marketplace **104** includes interior layout tool **332.** Interior layout tool **332** may be implemented in a manner similar to interior layout tool **236** of modification marketplace **102** described in **Figure 2****.** Interior layout tool **332** allows customer **139** to customize the interior configuration of new aircraft **304** (*e*.*g*., the cabin interior of a new airplane). For example, interior layout tool **332** may include interactive layout **334** which represents the interior of new aircraft **304.** Interactive layout **334** may be, for example, a map of the interior of the aircraft. Customer **139** may be able to interact with and manipulate interactive layout **334** via graphical user interface **108** to build the interior configuration of new aircraft **304.** Further, interior layout tool **332** provides interior pricing information **336** to customer **139.** Interior pricing information **335** may be, for example, a rough order of magnitude price quote.

The illustrations of virtual aircraft marketplace **100** in **Figure 1**, modification marketplace in **Figures 1** and **2**, and production marketplace **104** in **Figures 1** and **3** are not meant to imply physical or architectural limitations to the manner in which an example embodiment may be implemented. The blocks are presented to illustrate functional components. Other components in addition to or in place of the ones illustrated may be used. Some components may be optional. Further, one or more of these blocks may be combined, divided, or combined and divided into different blocks when implemented in an example embodiment.

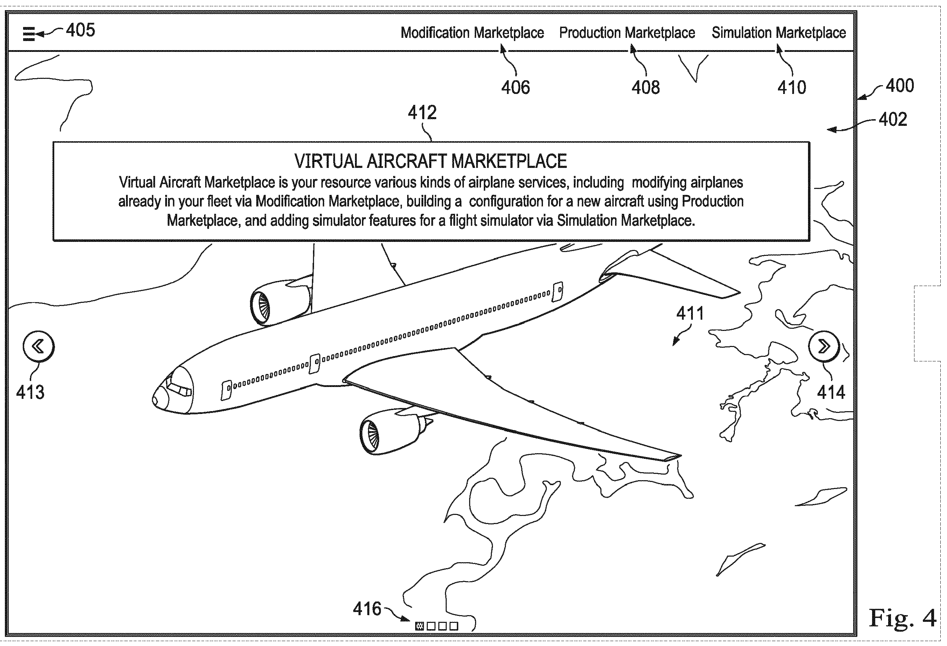

**Figures 4-38** are illustrations of a graphical user interface presenting a virtual aircraft marketplace in accordance with an example embodiment. In describing these figures, references to "customer" may generally be considered interchangeable with "user," who is or represents the customer. For example, a reference to user input entered by the user via graphical user interface **108** may generally be considered as meaning a user input entered by the customer because the customer. Thus, in some cases, a reference to the "customer" may not be distinguishable from the "user," while in other cases, a reference to the "customer" may be distinguishable from the "user." For example, a reference to the identification number for a customer may not be equivalent to an identification number for the user.

Further, these illustrations are meant to be examples of how the graphical user interface may be implemented. In other examples, wording, placement of graphical controls, arrangement of menus and menu options, other elements of visual configuration, or a combination thereof may be varied with respect to the graphical user interface. As one example, in describing these figures, references to an "order" may refer to an order for one or more features (*e*.*g*., a purchase order) or may refer to a request for a firm proposal based on one or more features. Thus, in general, the descriptions of **Figures 4-38** below may refer to either a purchase order or request for a firm proposal even though the illustration itself may present details with respect to one of these.

Various graphical controls are depicted in **Figures 4-38****.** These are example graphical controls and in other illustrative examples, different graphical controls may be used to accomplish the same purpose. Additionally, when a user is described as selecting a graphical control, this selection may made in various ways. For example, a selection may be made by clicking on a graphical control, hovering a cursor over the graphical control, sliding the graphical control, applying touch pressure to the graphical control, gazing at the graphical control for at least a threshold period of time, or performing some other type of gesture that indicates a "selection."

**Figure 4** is an illustration of a graphical user interface presenting a virtual aircraft marketplace in accordance with an example embodiment. Graphical user interface **400** is an example of one implementation for graphical user interface **108** in **Figures 1-2** above. Graphical user interface **400** presents virtual aircraft marketplace **402.** Specifically, graphical user interface **400** displays home page **404** for virtual aircraft marketplace **402.** In one or more examples, home page **404** is scrollable.

Home page **404** includes menu control **405**, modification marketplace control **406**, production marketplace control **408**, and simulation marketplace control **410.** Each of these controls is selectable via user input for launching the corresponding marketplace. For example, a selection of menu control **405** displays a menu of options available to the user. A selection of modification marketplace control **406** may constitute the launch input for launching the modification marketplace. Similarly, a selection of production marketplace control **408** may constitute the launch input for launching the production marketplace. A selection of simulation marketplace control **410** may constitute the launch input for launching the simulation marketplace.

In one example, home page **404** presents image **411** and description **412.** Description **412** is a general description of the services available through virtual aircraft marketplace **401.** In this example, image **411** and description **412** are changeable. For example, a user may use arrow **413** or arrow **414** to change image **411** and description **412** presented on home page **404.** In the example depicted in **Figure 4**, a user may switch between four different views, as indicated by image selection controls **416.**

In other illustrative examples, other graphical elements, controls, or both may be presented in graphical user interface **400** in addition to those shown, in place of those shown, or both. For example, in some cases, graphical user interface **400** may include a graphical control linked to the launching of a proposal request manager that allows the user to request proposals.

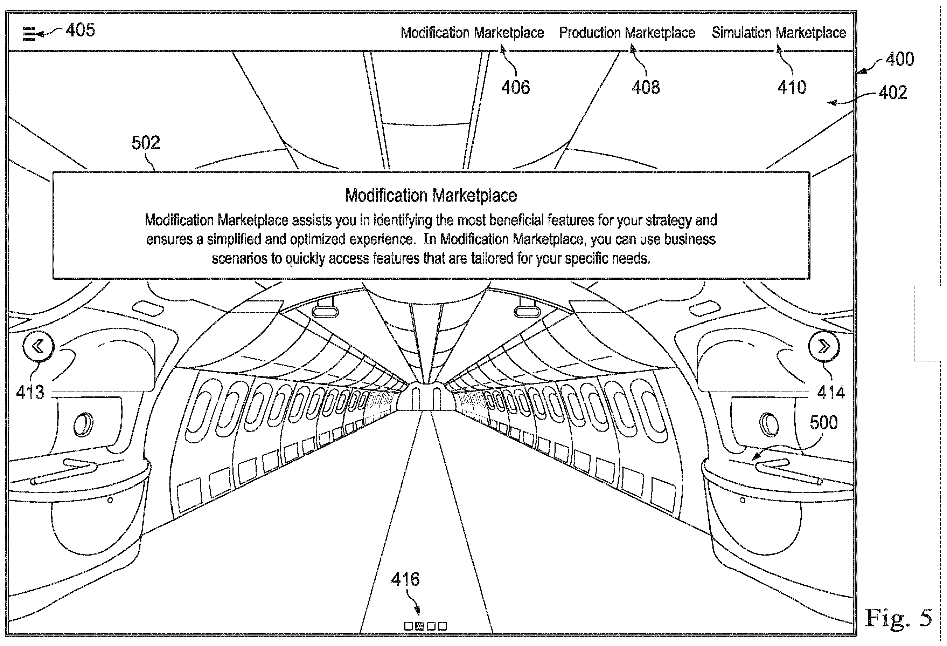

**Figure 5** is another illustration of graphical user interface **400** presenting a different view of home page **404** of virtual aircraft marketplace **402** from **Figure 4** in accordance with an example embodiment. In this illustrative example, image **500** and description **502** are presented in graphical user interface **400.** Image **500** provides a user with a brief description of modification marketplace. The remaining two views (not shown) of home page **404** may provide an image and corresponding description for the production marketplace and the simulation marketplace.

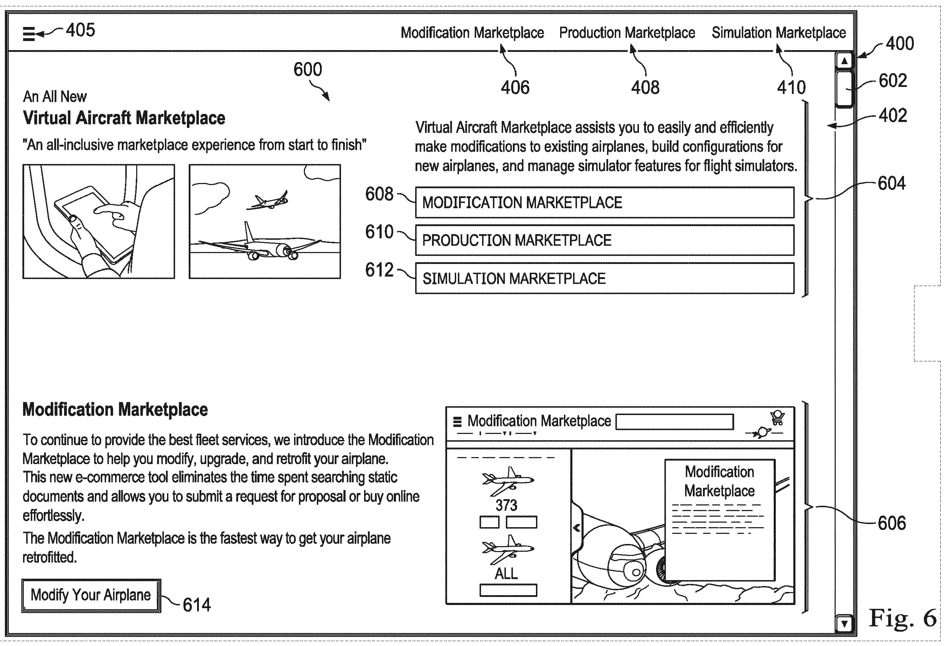

**Figure 6** is another illustration of graphical user interface **400** presenting menu **600** of virtual aircraft marketplace **402** in accordance with an example embodiment. Menu **600** is displayed in response to a user selecting an option available to the user via menu control **405.** In one or more examples, menu **600** is scrollable. The portion of menu **600** displayed is based on the scrolled position of menu **600** selected by the user.

As one illustrative example, as depicted in **Figure 6**, menu **600** is displayed at scrolled position **602.** At scrolled position **602**, menu **600** includes general menu section **604** as well as modification marketplace section **606.** General menu section **604** presents information about the various marketplaces or tools available to a user via virtual aircraft marketplace **402.** For example, general menu section **604** includes modification marketplace control **608**, production marketplace control **610**, and simulation marketplace control **612.** Modification marketplace control **608**, production marketplace control **610**, and simulation marketplace control **612** may be used to access a user interface for a modification marketplace, a production marketplace, and a simulation marketplace, respectively. Modification marketplace section **606** includes modification marketplace control **614**, which also provides access the user interface for the modification marketplace.

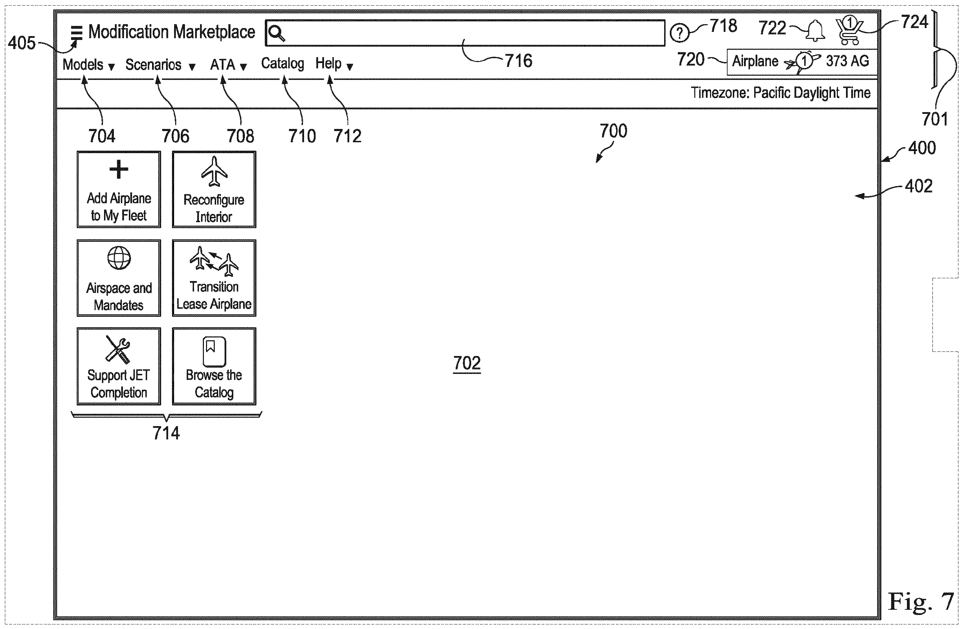

**Figure 7** is an illustration of graphical user interface **400** presenting modification marketplace **700** in accordance with an example embodiment. When graphical user interface **400** presents modification marketplace **700**, graphical user interface **400** may be referred to as a "modification interface," a "modification user interface," or "an aircraft modification user interface." Prior to modification marketplace **700** being displayed in graphical user interface **400**, a number of

In **Figure 7**, graphical user interface **400** displays navigation section **701** and main page **702**. Navigation section **701** includes models menu control **704**, scenarios menu control **706**, category menu control **708**, catalog control **710**, and help menu control **712**, each of which is a graphical control that displays a corresponding menu when selected. When selected, models menu control **704** presents a menu identifying various aircraft models.

When selected, scenarios menu control **706** presents a menu of scenarios, such as business scenarios. The scenarios presented are tailored based on the information provided when the user logged into virtual aircraft marketplace **100.** In other words, the scenarios presented are customized for the user. Main page **702** includes scenario tiles **714.** In this illustrative example, each of scenario tiles **714** matches a corresponding scenario presented upon the selection of scenarios menu control **706.**

Category menu control **708**, when selected, presents a menu of categories grouping various features. In one or more examples, the categories included in this menu correspond to Air Transport Association (ATA) chapters of the ATA 100 numbering system. Catalog control **710**, when selected, presents a searchable catalog of features (*e*.*g*., products, services, software, etc.) to the user. Further, help menu control **712**, when selected presents a help menu to the user.

Navigation section **701** also includes search box **716**, help icon **718**, selected aircraft display **720**, notifications **722**, and cart control **724.** Search box **716** allows a user to search through a catalog of available features based on user input. For example, a user may enter a product number, a product name, or some other type of identifier in search box **716** in order to quickly and efficiently search for different products. Help icon **718** allows a user to view a help menu or some other visual form of help options. Selected aircraft display **720** displays information about the particular aircraft model selected by the user. In some cases, selected aircraft display **720** also displays the quantity selected for that particular aircraft model. Notifications **722** is a graphical control that allows a user to quickly identify when a notification is present and to view that notification.

Cart control **724** is selectable to display a virtual cart, implemented similarly to virtual cart **225** described in **Figure 2**, in graphical user interface **400.** The virtual cart tracks any features selected by the customer via modification marketplace **700** and allows the customer to make a firm proposal, a rough order of magnitude proposal, or a purchase for each selected feature, depending on the level of access granted to the customer. In some illustrative examples, the addition of a selected retrofit feature to the virtual cart requires that one or more additional retrofit features be installed prior to or installed simultaneously with the selected retrofit feature. For example, retrofit manager **202** described in **Figure 2** may prevent the customer from automatically adding the selected retrofit feature to the virtual cart if the one or more prerequisite retrofit features were not previously installed.

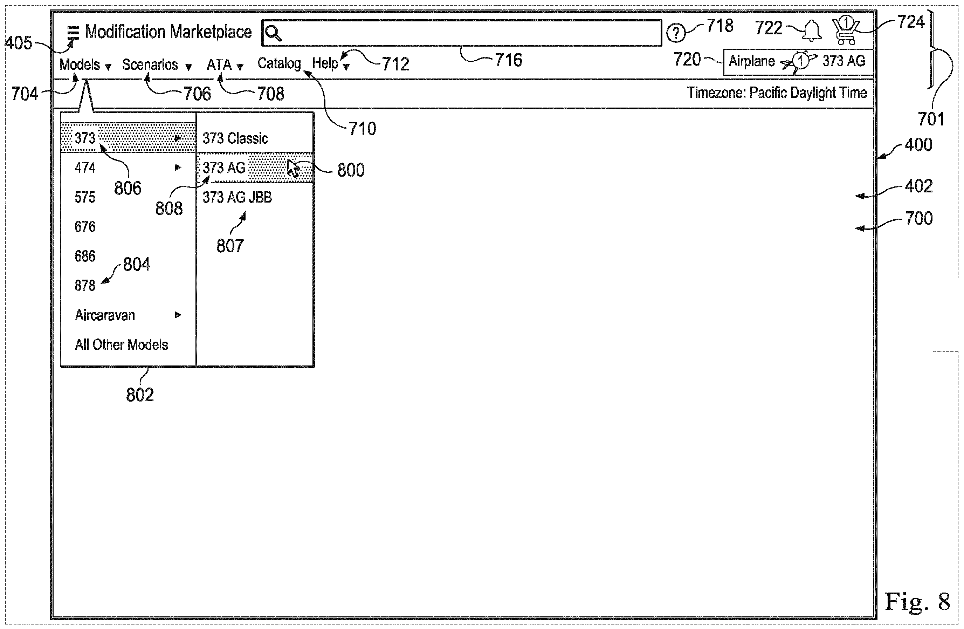

**Figure 8** is another illustration of graphical user interface **400** presenting modification marketplace **700** in accordance with an example embodiment. In **Figure 8**, in response to models menu control **704** being selected via cursor **800** (*e*.*g*., clicked on or hovered over with cursor **800**), menu **802** is displayed. Menu **802** identifies plurality of aircraft model groups **804**, each of which is associated with a sub-menu. For example, a user may select model group **806** to display a sub-menu that identifies plurality of models **807** that fall within that selected model group **806.** As illustrated, a user may then select a particular aircraft model, such as model **808**, to display customized information within modification marketplace **700.**

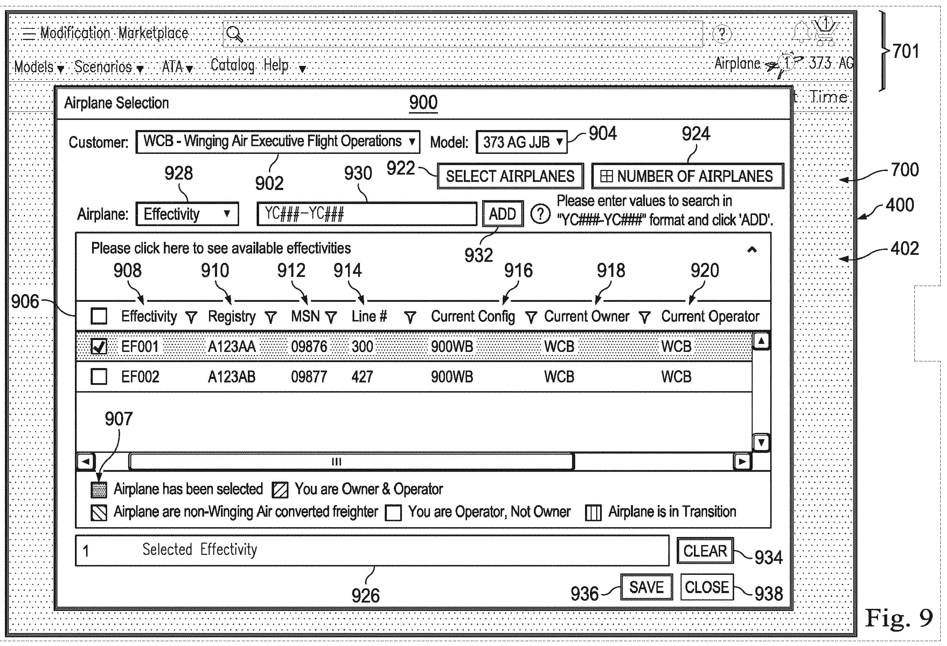

**Figure 9** is another illustration of graphical user interface **400** presenting modification marketplace **700** in accordance with an example embodiment. In **Figure 9**, effectivity selector **900** is displayed. Effectivity selector **900** enables a user to select a particular set of aircraft. Effectivity selector includes, for example, without limitation, customer selector **902**, model selector **904**, effectivity identifier **906**, and legend **907.** Customer selector **902** may be, for example, a drop-down menu that allows a particular customer or customer type to be selected. Model selector **904** may be, for example, a drop-down menu that allows a particular model or model group to be selected.

Effectivity identifier **906** identifies the aircraft effectivities available for selection by the user. For example, effectivity identifier **906** displays effectivity information for the various aircraft corresponding to the customer selected via customer selector **902** and the model selected via model selector **904.** Effectivity identifier **906** identifies effectivity information within, for example, variable number column **908**, registration number column **910**, manufacturer serial number column **912**, line number column **914**, current configuration column **916**, current owner column **918**, and current operator column **920.**

For each aircraft identified in effectivity identifier **906**, variable number column **908** identifies a variable number that helps identification of the particular generation of the model of that aircraft. For each aircraft identified in effectivity identifier **906**, registration number column **910** identifies a registration number for issued by a regulatory agency for that aircraft (*e*.*g*., a number provided by the Federal Aviation Administration (FAA). For each aircraft identified in effectivity identifier **906**, manufacturer serial number column **912** identifies a manufacturer serial number for that aircraft.

Further, for each aircraft identified in effectivity identifier **906**, line number column **914** identifies a line number indicating the position in a production line for that aircraft. Further, for each aircraft identified in effectivity identifier **906**, current configuration column **916** includes a current configuration identifier that identifies a particular configuration of the particular model of the aircraft. For each aircraft identified in effectivity identifier **906**, current owner column **918** identifies a current owner of that aircraft. Similarly, for each aircraft identified in effectivity identifier **906**, current operator column **920** identifies the current operator of that aircraft.

Legend **907** provides information about how a user may read the information presented in effectivity identifier **906.** For example, a user may use legend **907** to determine whether a particular aircraft in effectivity identifier **906** has been selected, whether the user has been identified as both an owner and operator of the aircraft, whether the aircraft is a freighter, whether the user has been identified as an operator but is not the owner, and whether the aircraft is in transition.

Effectivity selector **900** also includes aircraft selector **922** and quantity selector **924.** Aircraft selector **922** allows the user to select a set of aircraft for use all computations performed in or via modification marketplace **700.** For example, aircraft selector **922** may be a graphical control that enables the user to select any of the aircraft that have been selected or "checked" in effectivity identifier **906.** Quantity selector **924** enables the user to adjust the overall number of aircraft selected or the number of aircraft selected for each type of effectivity selected. Effectivity selector **900** also includes selection display **926.** Selection display **926** identifies the number of aircraft selected from the aircraft identified in effectivity identifier **906.**

Effectivity selector **900** includes search category **928**, text field **930**, and adder **932.** Search category **928** allows the user to select a category for searching, which may be, for example, by effectivity. Text field **930** allows the user to enter an effectivity. And adder **932** allows the user to add the aircraft corresponding to that effectivity, if any, to what is displayed via effectivity identifier **906.**

Effectivity selector **900** also includes clear control **934**, save control **936**, and close control **938.** Clear control **934**, when pressed or otherwise selected with via the user, clears the entries displayed via effectivity identifier **906.** Save control **936** allows the user to save any selections made. Close control **938** allows the user to close effectivity selector **900.**

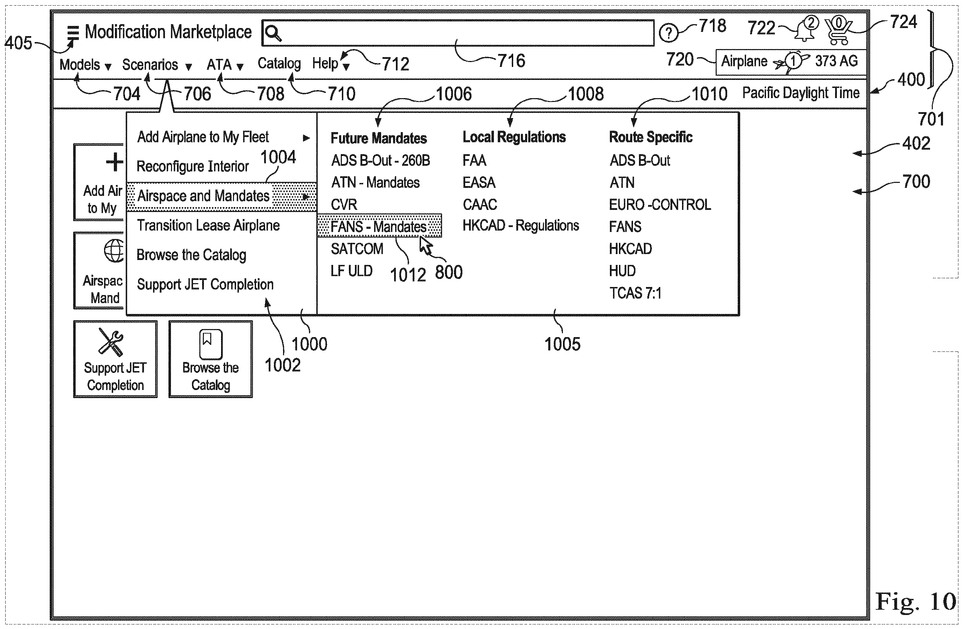

**Figure 10** is another illustration of graphical user interface **400** presenting modification marketplace **700** in accordance with an example embodiment. In **Figure 10**, in response to a selection of scenarios menu control **706**, scenarios menu **1000** is displayed. Scenarios menu **1000** presents a plurality of scenarios **1002** such as, for example, business scenarios. Scenarios **1002** are tailored based on the information provided when the user logged into virtual aircraft marketplace **100.** In other words, scenarios **1002** presented are customized for the user.

In this illustrative example, the user has selected airspace and mandates scenario **1004** from scenarios **1002.** In response to this selection, airspace and mandates menu **1005** is displayed. Airspace and mandates menu **1005** displays submenus, each providing a list of options. These submenus include future mandates submenu **1006**, local regulations submenu **1008**, and route specific mandates submenu **1010.** The user may select any one of the options listed in the submenus. In this illustrative example, the user has selected option **1012.** Option **1012** represents future air navigation system (FANS) mandates.

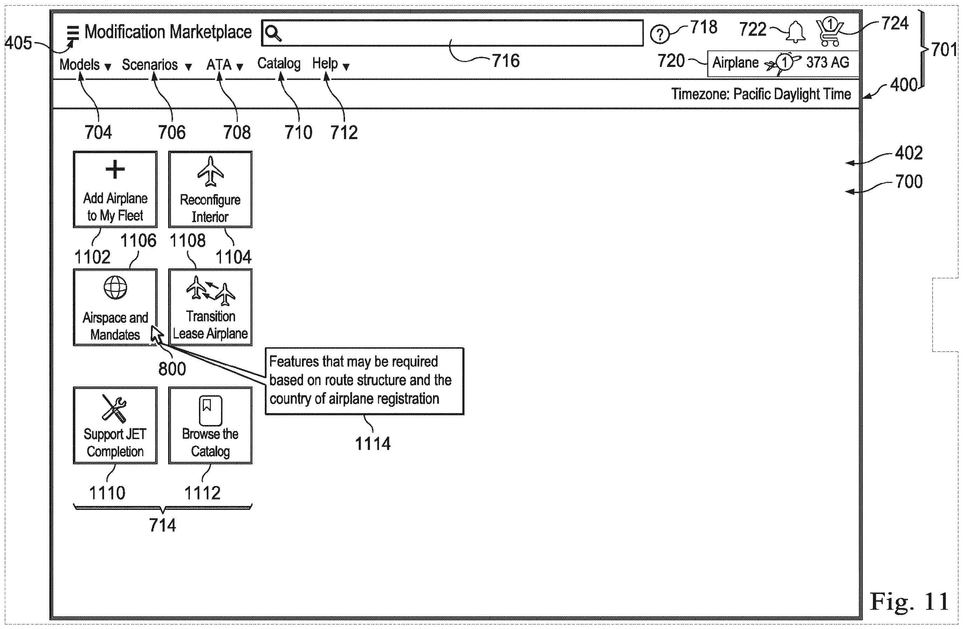

**Figure 11** is another illustration of graphical user interface **400** presenting modification marketplace **700** in accordance with an illustrative embodiment. As shown in **Figure 11**, instead of using scenarios the user may select a scenario using scenario tiles **714** instead of via scenarios menu control **706.** Scenario tiles **714** include tile **1102**, tile **1104**, tile **1106**, tile **1108**, tile **1110**, and tile **1112**, with each of these tiles representing a different scenario or business scenario. Scenario tiles **714** represent the same scenarios as presented within scenarios menu **1000** in **Figure 10****.**

Tile **1102** represents the scenario "add airplane to my fleet." Tile **1104** represents the scenario "reconfigure interior." Tile **1106** represents the scenario "airspace and mandates," which is the same as airspace and mandates scenario **1004** in **Figure 10****.** Tile **1108** represents the scenario "transition lease airplane." Tile **1110** represents the scenario "support JET completion." Tile **1112** represents the tile "browse the catalog."

Scenario tiles **714** are interactive control elements that allow the user to select a particular scenario and allow the user to quickly glean general information about each of the different scenarios. For example, when the user hovers cursor **800** over tile **1106**, pop-up window **1114** is displayed in which pop-up window **1114** provides a description of the "airspace and mandates" scenario represented by tile **1106.** The user may select the "airspace and mandates" scenario by selecting tile **1106.**

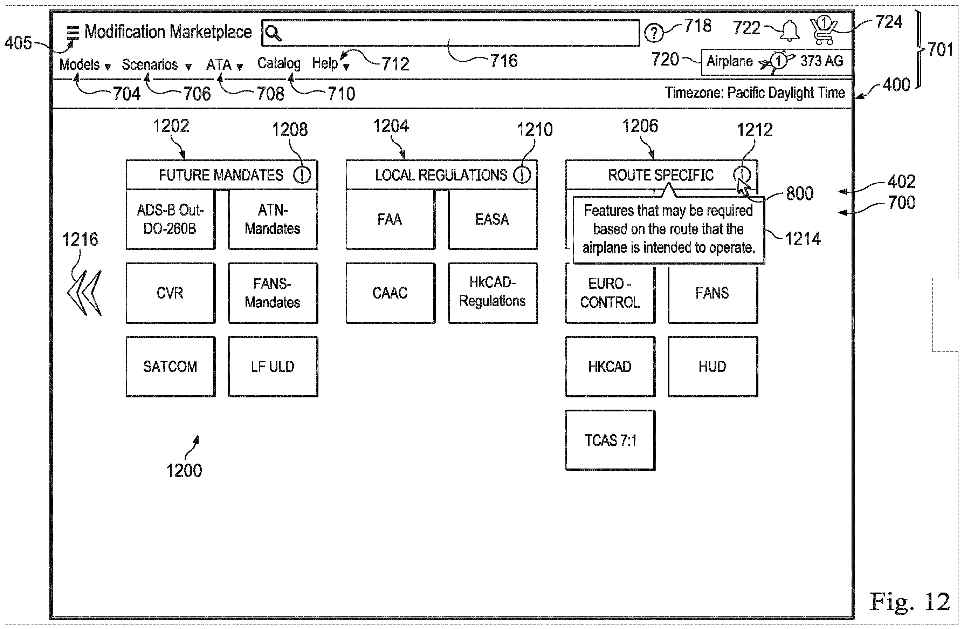

**Figure 12** is another illustration of graphical user interface **400** presenting modification marketplace **700** in accordance with an illustrative embodiment. In this illustrative example, tiled submenus **1200** are displayed in modification marketplace **700** in response to the user selecting tile **1106** in **Figure 11****.**

Tiled submenus **1200** include future mandates tiled submenu **1202**, local regulations tiled submenu **1204**, and route specific tiled submenu **1206**, which correspond with future mandates submenu **1006**, local regulations submenu **1008**, and route specific mandates submenu **1010**, respectively, in **Figure 10****.** Each of these tiled submenus includes a plurality of selectable tiles.

Further, each of future mandates tiled submenu **1202**, local regulations tiled submenu **1204**, and route specific tiled submenu **1206** includes a control that allows a user to learn more information about each submenu. For example, future mandates tiled submenu **1202** includes information control **1208**, local regulations tiled submenu **1204** includes information control **1210**, and route specific tiled submenu **1206** includes information control **1212.** The user may hover over or select any one of these information controls. When the user hovers over or selects information control **1212**, pop-up window **1214** is displayed and provides a description of the options provided by route specific tiled submenu **1206.**

The user may return to the previous display by selecting back button **1216.** For example, when the user selects back button **1216**, the display may be returned to the display of scenario tiles **714** as shown in **Figure 11**.

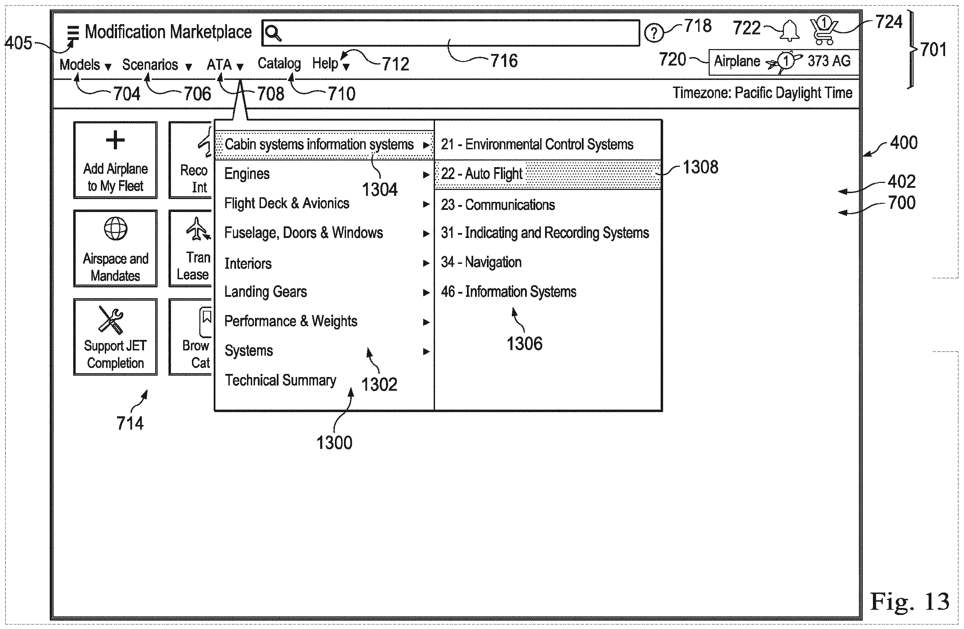

**Figure 13** is another illustration of graphical user interface **400** presenting modification marketplace **700** in accordance with an illustrative embodiment. In **Figure 13**, in response to a selection of category menu control **708**, category menu **1300** is displayed. Category menu **1300** presents a plurality of categories **1302** to the user. In one or more illustrative examples, categories **1302** are tailored based on the information provided when the user logged into virtual aircraft marketplace **100.** In other words, categories **1302** presented are customized for the user.

In this illustrative example, the user first hovered cursor over cabin systems information systems category **1304**, which caused submenu **1306** to be displayed. In other illustrative examples, the user may need to select cabin systems information systems category **1304** via cursor **800** to cause submenu **1306** to be displayed. Submenu **1306** provides options for different types of cabin systems and information systems and orders these options by their ATA numbering. In this illustrative example, the user is hovering cursor **800** over option **1308**, which represents an auto flight system.

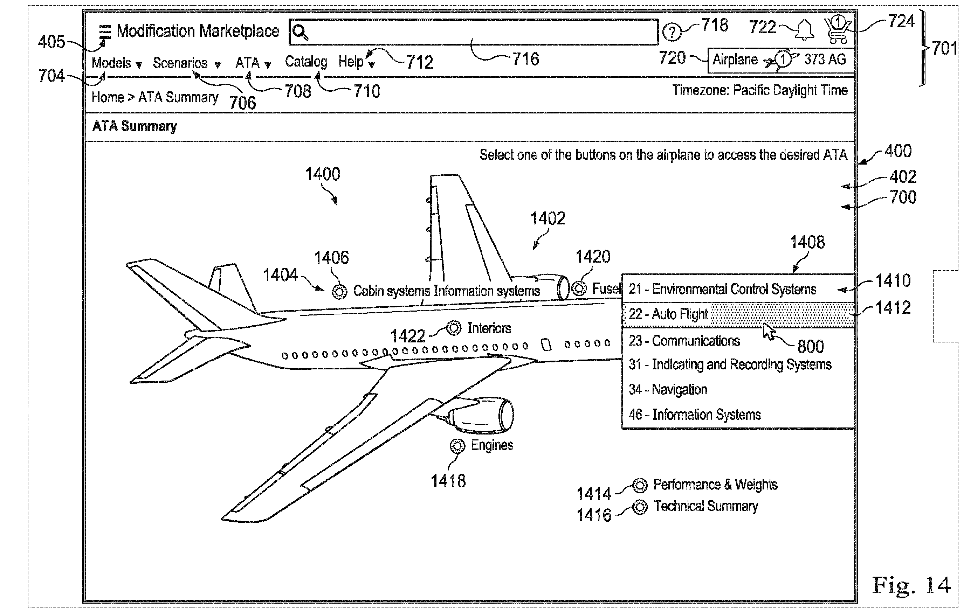

**Figure 14** is another illustration of graphical user interface **400** presenting modification marketplace **700** in accordance with an illustrative embodiment. In **Figure 14**, category selection interface **1400** is displayed in modification marketplace **700.** Category selection interface **1400** includes aircraft **1402** and category buttons **1404.** Aircraft **1402** may be, for example, a representation of the particular aircraft model shown in selected aircraft display **720.**

Category buttons **1404** surround aircraft **1402** and, in some illustrative examples, may include a button for each of categories **1302** shown in **Figure 13****.** In this illustrative example, the user has cabin systems information systems button **1406.** In response to this selection, options menu **1408** is displayed. Options menu **1408** displays the same category options as submenu **1306** in **Figure 13****.** In this example, out of options **1410** displayed in options menu **1408**, the user has hovered cursor **800** over or used cursor **800** to select auto flight option **1412.**

In this illustrative example, category buttons **1404** further include performance and weights button **1414**, technical summary button **1416**, engines button **1418**, fuselage button **1420**, and interiors button **1422.** Category buttons **1404** may also include other buttons not shown in this view.

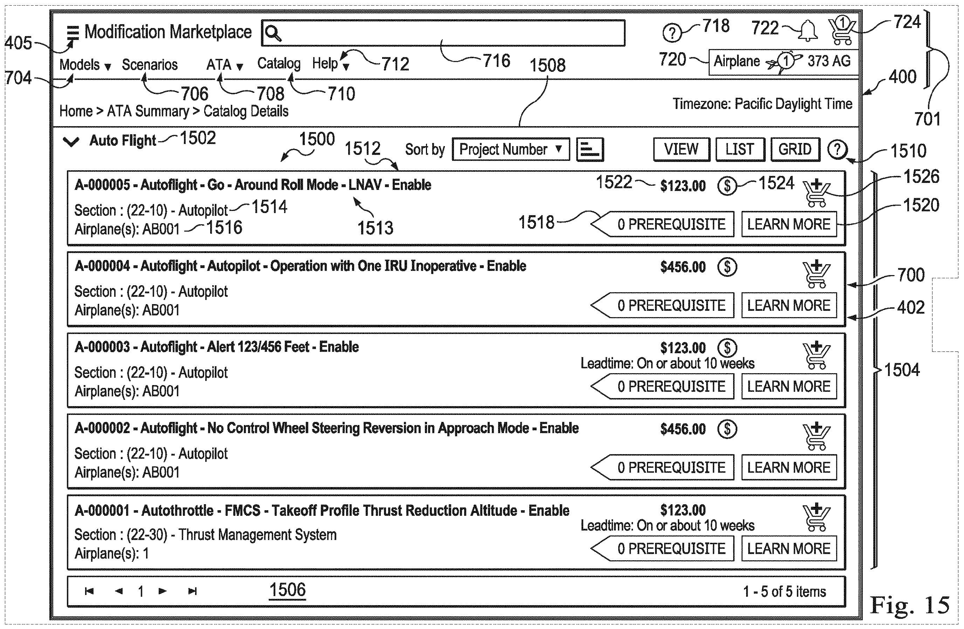

**Figure 15** is another illustration of graphical user interface **400** presenting modification marketplace **700** in accordance with an illustrative embodiment. In **Figure 15**, auto flight catalog **1500** is displayed in modification marketplace **700** in response to a user selection of option **1412** in **Figure 14** or option **1308** in **Figure 13****.** Auto flight catalog **1500** includes auto flight features that may be added to an aircraft. Auto flight catalog identifier **1502** identifies that the features presented are auto flight features. Auto flight catalog identifier **1502** is also an interactive element that allows the user to collapse the auto flight features (*e*.*g*., hide from display) if desired.

Feature entries **1504** are displayed in this illustrative example. Each of feature entries identifies a particular feature. Auto flight catalog **1500** only includes the five feature entries shown, in this example. But in other illustrative examples, auto flight catalog **1500** may include many more feature entries than can be displayed at once. In these other examples, catalog navigation section **1506** allows the user to navigate through the various pages of auto flight catalog **1500.** Sort control **1508** allows the user to sort the feature entries presented in auto flight catalog **1500.** In this illustrative example, feature entries **1504** are sorted by project number. The user may use help button **1510** to view help or support information for auto flight catalog **1500** (*e*.*g*., information about navigating through auto flight catalog **1500**).

Feature entry **1512** is an example of one of feature entries **1504.** Feature entry **1512** may include, for example, feature identifier **1513**, category identifier **1514**, aircraft identifier **1516**, prerequisite information **1518**, detailed information button **1520**, price information **1522**, additional pricing button **1524**, and add to cart button **1526.** Feature identifier **1513** identifies the particular feature represented by feature entry **1512.** In this illustrative example, feature identifier **1513** identifies a feature for enabling an "Autoflight Go-Around Roll Mode" for lateral navigation. In some examples, the user may select feature identifier **1513** to cause additional information about the identified feature to be presented. Category identifier **1514**, which may also be referred to as a section identifier, identifies the particular catalog category to which the identified feature belongs. Aircraft identifier **1516** identifies, for example, the particular aircraft to which the identified feature may be added.

Prerequisite information **1518** indicates whether any prerequisite features are required to have been previously installed or simultaneously installed on the aircraft in order for the identified feature to be installed. Detailed information button **1520** allows the user to view additional, detailed information about the identified feature. This detailed information may include some of the information presented when feature identifier **1513** is selected, as well as other detailed information about the identified feature. Price information **1522** indicates a purchase price for the identified features. Additional pricing button **1524** allows the user to find additional pricing information. Add to cart button **1526** allows the user to quickly and easily add the identified feature to a virtual "cart" for purchase.

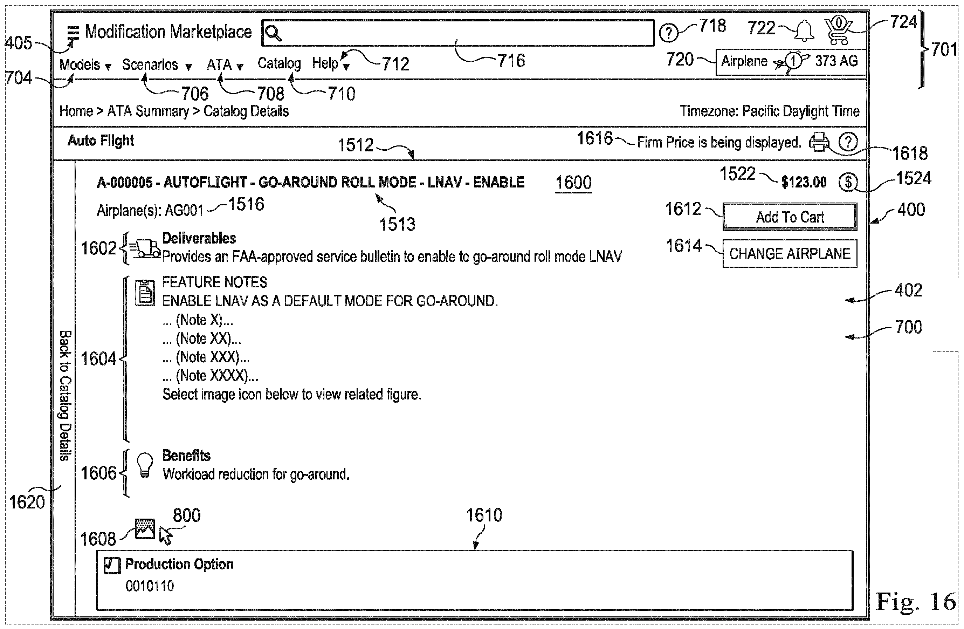

**Figure 16** is another illustration of graphical user interface **400** presenting modification marketplace **700** in accordance with an illustrative embodiment. In this illustrative example, detailed display **1600** is presented in modification marketplace **700** in response to the user having selected detailed information button **1520** in **Figure 15****.** As illustrated, detailed display **1600** may include at least some of the information, graphical controls, or both presented in auto flight catalog **1500** in **Figure 15****.**

Detailed display **1600** includes deliverable information **1602**, notes section **1604**, benefits section **1606**, image button **1608**, and production option section **1610.** Deliverable information **1602** identifies a brief description of what the user is actually purchasing with the identified feature. Notes section **1604** includes, for example, further notes or details about the identified feature. Benefits section **1606** includes benefits or advantages of the identified feature. When present, image button **1608** allows the user to view an image, screenshot, model, or other visual representation of the identified feature. Production option section **1610** identifies options for production.

Detailed display **1600** also includes add to cart button **1612** and change airplane button **1614.** Add to cart button **1612** is similar to add to cart button **1526** and allows the user to quickly and easily add the identified feature to his or her virtual "cart" for purchase. Change airplane button **1614** allows the user to change the aircraft selected so that this feature may be considered with respect to a different aircraft. Price description **1616** indicates whether the price presented by price information **1522** is a firm price for use in a firm proposal. Print button **1618** allows the user to print the displayed information.

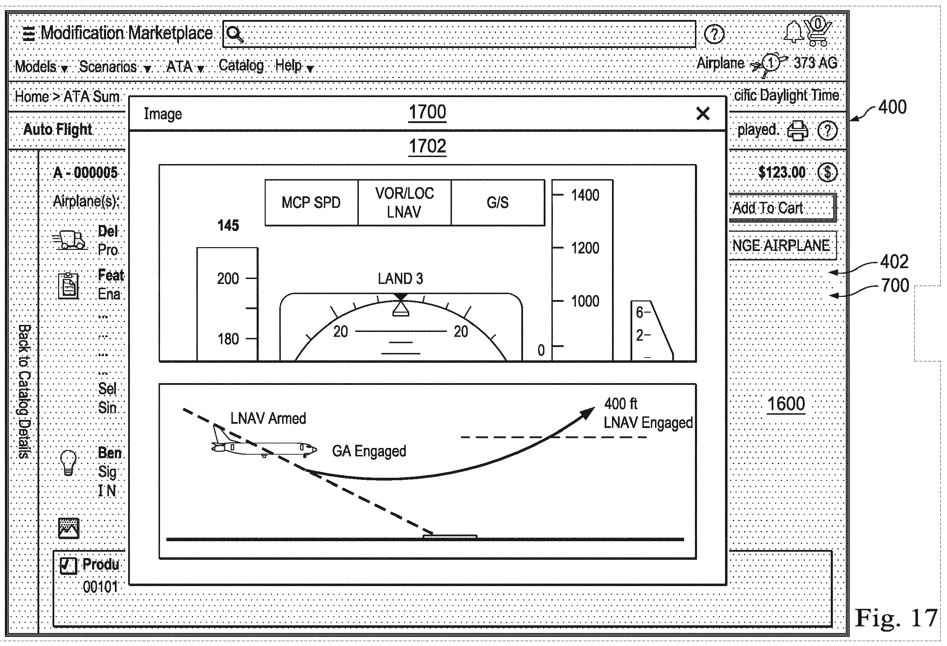

**Figure 17** is another illustration of graphical user interface **400** presenting modification marketplace **700** in accordance with an illustrative embodiment. In this illustrative example, window **1700** is displayed in response to the user selecting image button **1608** in **Figure 16****.** Window **1700** includes image **1702** that helps the user better understand what the "Autoflight Go-Around Roll Mode" feature for lateral navigation provides. Image **1702** is displayed directly over detailed display **1600.**

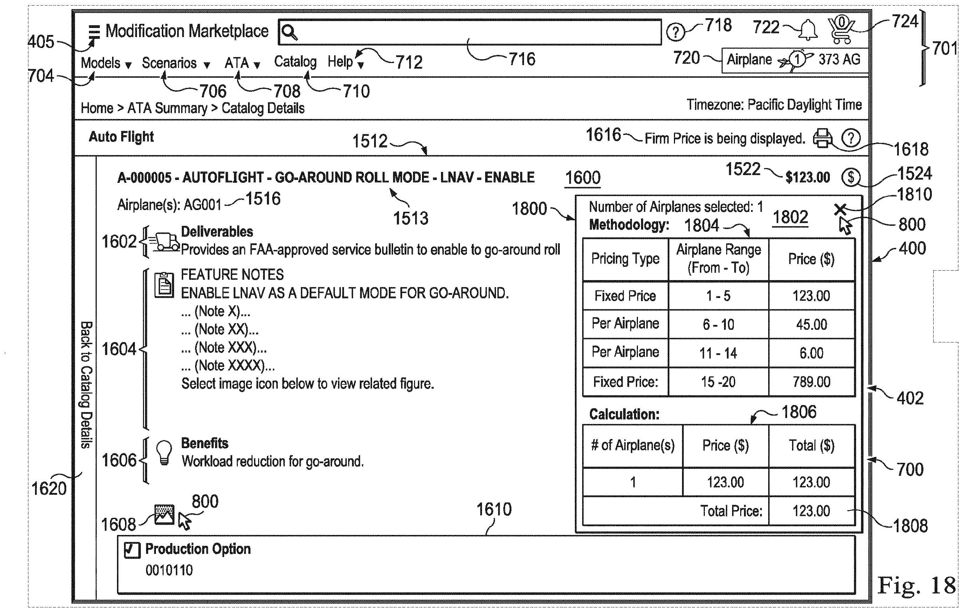

**Figure 18** is another illustration of graphical user interface **400** presenting modification marketplace **700** in accordance with an illustrative embodiment. In this illustrative example, pricing window 1800 is displayed in response to the user selecting or hovering or rolling cursor **800** over additional pricing button **1524** shown in **Figure 16****.** Pricing window **1800** displays detailed pricing information **1802** for the "Autoflight Go-Around Roll Mode" feature.

Detailed pricing information **1802** includes methodology information **1804** and calculation information **1806.** Methodology information **1804** identifies how the price for the feature changes based on the quantity of aircraft for which the feature is being ordered. Calculation information **1806** indicates the expected total price **1808** for adding this feature based on the number of aircraft selected, as indicated by selected aircraft display **720.** Close button **1810** allows the user to close pricing window **1800** and return to detailed display **1600.**

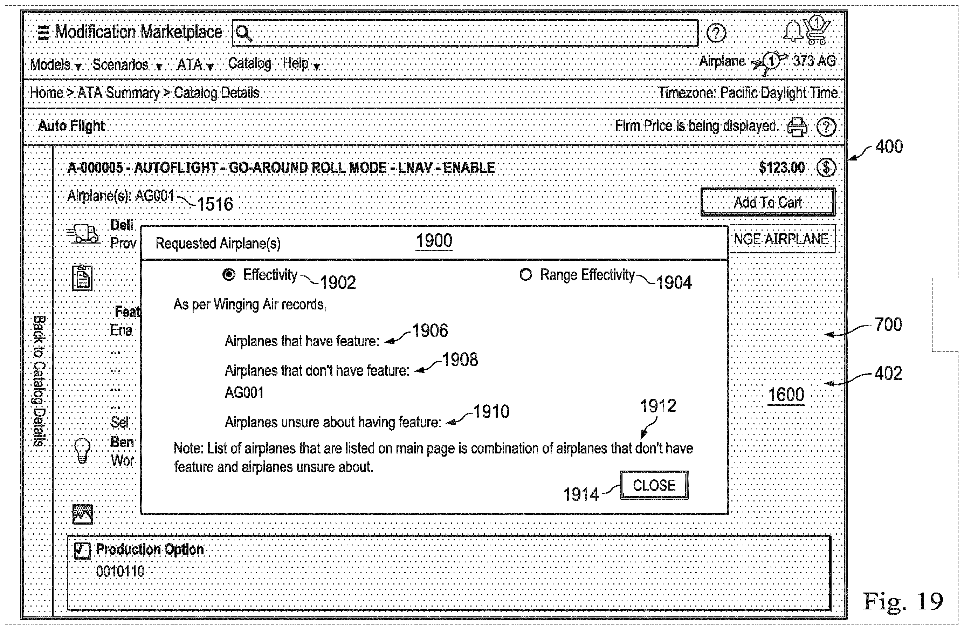

**Figure 19** is another illustration of graphical user interface **400** presenting modification marketplace **700** in accordance with an illustrative embodiment. In this illustrative example, window **1900** is displayed in response to the user selecting aircraft identifier **1516.** Window **1900** is displayed over detailed display **1600.** Window **1900** includes effectivity selector **1902** and range effectivity selector **1904**, one of which may be selected by the user at a given time.

Window **1900** presents information about whether the "Autoflight Go-Around Roll Mode" feature is present or not present in any of the aircraft identified by aircraft identifier **1516** from **Figures 15** and 16. For example, present category **1906** lists any aircraft in which the feature is already installed. Not present category **1908** lists any aircraft in which the feature is not already installed. And unsure category **1910** lists any category for which the installation status of the feature is unclear. Note **1912** provides additional information to help the user understand the breakdown of information presented in window **1900** as compared to the aircraft listed by aircraft identifier **1516.** Close button **1914** allows the user to close window **1900** and return to detailed display **1600.**

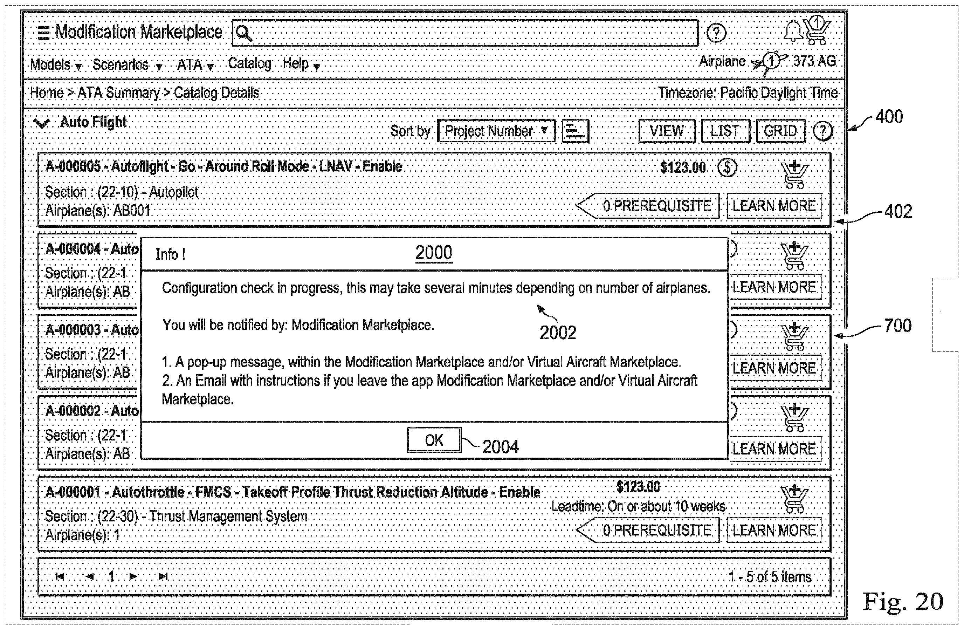

**Figure 20** is another illustration of graphical user interface **400** presenting modification marketplace **700** in accordance with an illustrative embodiment. In this illustrative example, the user has added a feature (*e*.*g*., the "Autoflight Go-Around Roll Mode" feature) to a virtual cart by selecting add to cart button **1526** from **Figure 15****.** In other illustrative examples, the feature may be added to the virtual cart by the user selecting add to cart button **1612** from **Figure 16****.**

Once one of these "add to cart" buttons has been selected, window **2000** is displayed. Window **2000** presents in progress information **2002** to the user. In progress information **2002** gives the user an indication of how long it will take to complete the process of adding the feature to the virtual cart given the number of aircraft selected, as indicated by selected aircraft display **720.** For example, a configuration check may be performed to determine whether the selected feature was previously installed on the aircraft, can be installed on the aircraft based on any needed prerequisites, or both.

Further, in progress information **2002** indicates one or more ways in which the user may be notified when this process is complete. Once the user has read in progress information **2002**, the user may select ok button **2004** to close window **2000.** The add to cart process is performed in the background.

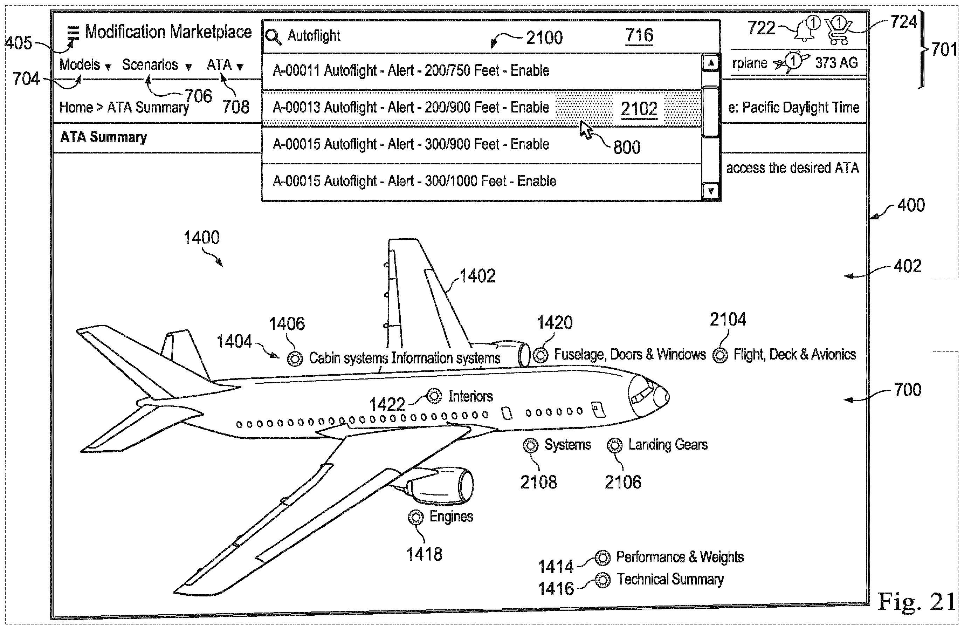

**Figure 21** is another illustration of graphical user interface **400** presenting modification marketplace **700** in accordance with an illustrative embodiment. In some examples, the user may wish to search for a feature directly by its identification number. For example, the user may use search box **716** to perform a keyword search. In this illustrative example, the user has entered the keyword "autoflight" in search box **716**, which causes list of features **2100** to be displayed under search box **716.** Each feature in list of features **2100** is one that belongs to the autoflight category or has the word "autoflight" in its title or description. For example, feature **2102** includes "autoflight" in its title. If the user selects a feature, such as feature **2102**, a feature entry, similar to feature entry **1512** in **Figure 15**, that corresponds to the selected feature is displayed to the user. Flight, deck, and avionics button **2104** of category buttons **1404** is visible in this view.

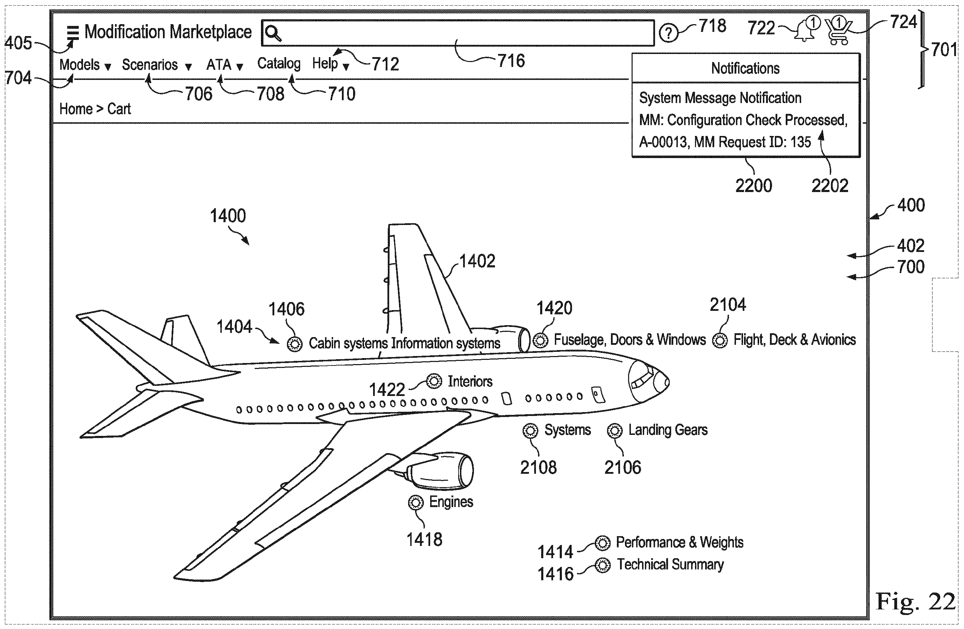

**Figure 22** is another illustration of graphical user interface **400** presenting modification marketplace **700** in accordance with an illustrative embodiment. As previously discussed, the process of adding a feature to the virtual cart may take place in the background while the user continues to navigate or explore modification marketplace **700.** Notifications **722** track any notifications that are generated specific to the user. For example, when the process of adding a feature to the virtual cart is complete, a notification may be generated, and the user may be alerted to this notification via notifications **722.**

In response to the user selecting notifications **722**, notification window **2200** is displayed to the user. Notification window **2200** may include one or more notifications. In this illustrative example, notification window **2200** includes notification **2202** that provides a status of the configuration check that was performed. In particular, notification **2202** signals to the user that the process of adding the feature to the virtual cart has been completed. The user may select notification **2202** (*e*.*g*., by clicking anywhere within notification **2202**) to view additional information.

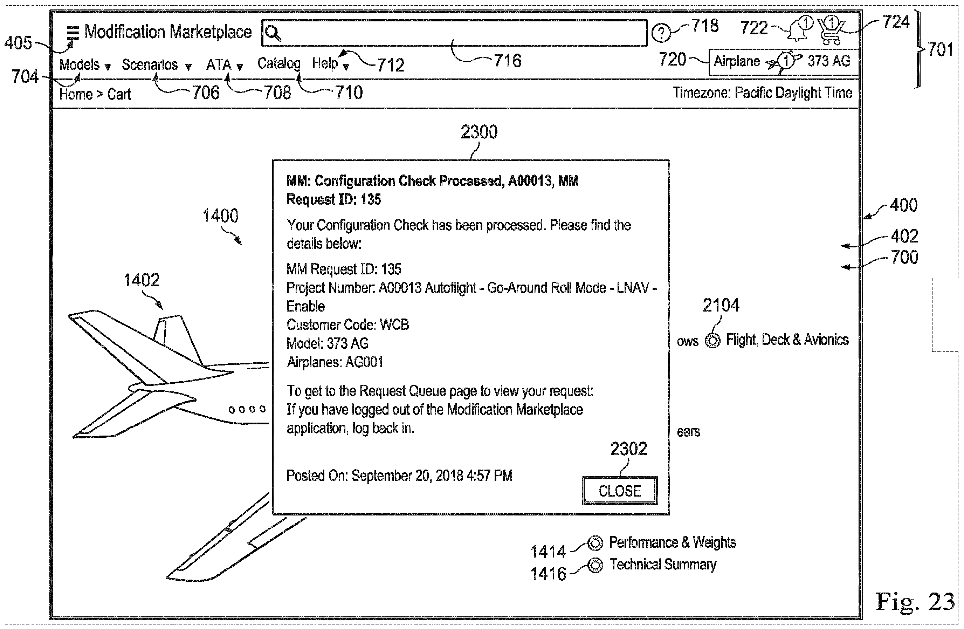

**Figure 23** is another illustration of graphical user interface **400** presenting modification marketplace **700** in accordance with an illustrative embodiment. In this illustrative example, detailed status update **2300** is presented to the user in response to the user selecting notification **2202** in **Figure 22****.** Detailed status update **2300** provides information to the user regarding the user's request to add the selected feature to the selected aircraft. Close button **2302** allows detailed status update **2300** to be closed and removed from display.

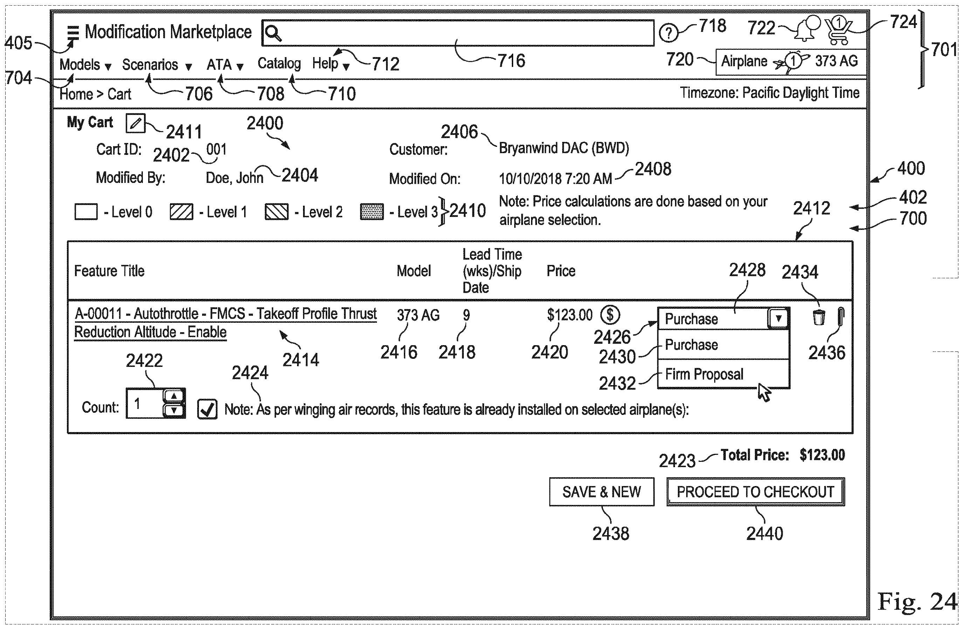

**Figure 24** is another illustration of graphical user interface **400** presenting modification marketplace **700** in accordance with an illustrative embodiment. In this illustrative example, cart display **2400** is presented to the user in response to the user selecting, for example, cart control **724.** In other illustrative examples, cart display **2400** may be presented to the user in response to the user selecting some other type of button or graphical control within modification marketplace **700**.

Cart display **2400** presents cart identification **2402**, modifier **2404**, customer identification **2406**, last modified date **2408**, legend **2410**, and edit button **2411**. Cart identification **2402** identifies the virtual cart to which one or more features have been added. In some cases, cart identification **2402** identifies an order id that corresponds to an "instance" of the virtual cart. Modifier **2404** identifies the user that is making changes to the virtual cart, such as adding features to the virtual cart. Customer identification **2406** identifies the customer, which may be the user or an entity represented by the user. Last modified date **2408** identifies the date and time on which the virtual cart was last modified. In this illustrative example, legend **2410** identifies the color coding or pattern coding used to provide visual information about the different features in the virtual cart. In some illustrative examples, edit button **2411** allows the user to make changes to at least some portion of cart display **2400.**

Additionally, cart display **2400** presents contents section **2412** to the user. Contents section **2412** identifies the one or more features in the virtual cart. In this illustrative example, the virtual cart only includes a single feature. Contents section **2412** includes feature identifier **2414**, aircraft model identifier **2416**, lead time **2418**, price **2420**, quantity selector **2422**, note **2424**, and purchase type selector **2426.** The area surrounding this information may be color-coded or pattern-coded to indicate certain types of information about the corresponding feature, as defined by legend **2410.**

Feature identifier **2414** identifies the feature. Aircraft model identifier **2416** identifies the aircraft model to which the feature is being added. Lead time **2418** identifies the number of weeks to delivery. In some instances, lead time **2418** identifies a ship or delivery date. Price **2420** identifies the price per unit for the feature. Quantity selector **2422** allows the user to select the number of units of the feature being requested. Note **2424** identifies additional information about the feature that may be relevant to the user.

Purchase type selector **2426** allows the user to select whether the feature is being requested as part of a purchase order or as part of a request for a firm proposal. Box **2428** identifies the current selection, which may be one of purchase option **2430** or firm proposal option **2432.**

Cart display **2400** also includes delete button **2434** and attachment button **2436.** Delete button 2434 allows the user to remove this feature from the virtual cart. Attachment button **2436** may allow the user to upload one or more attachments corresponding to the request, view documentation associated with the feature, or both.

Additionally, cart display **2400** includes save and new button **2438** and checkout button **2440.** Save and new button **2438** allows the user to save any changes made to the virtual cart for that particular "instance" of the virtual cart. The user may also be taken to a different display to allow the user to begin adding a new feature to the virtual cart, working with a new instance of the virtual cart, or working with a different virtual cart. In other illustrative examples, save and new button **2438** may be replaced with just a save button that allows the user to save the instance of the virtual cart and return to a previous display. Proceed to checkout button **2440** allows the user to begin a formal checkout process to finalize the order.

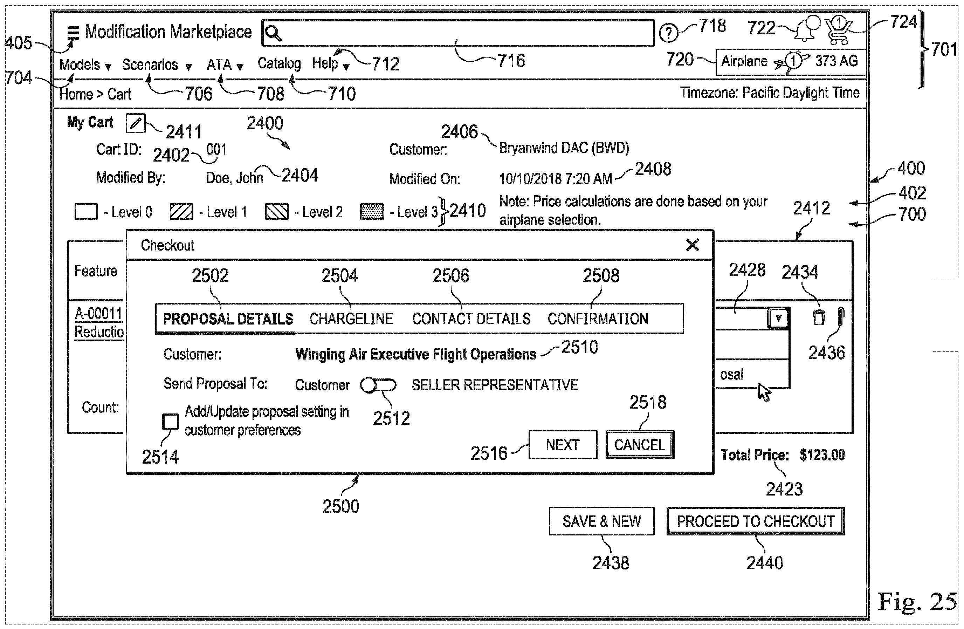

**Figure 25** is another illustration of graphical user interface **400** presenting modification marketplace **700** in accordance with an illustrative embodiment. In this illustrative example, checkout window **2500** is displayed to the user in response to the user selecting checkout button **2440** from **Figure 24****.** Checkout window **2500** is displayed over cart display **2400.** Checkout window **2500** helps facilitate the checkout process. For example, checkout window **2500** first presents a display for proposal details **2502.** As the user progresses through the checkout process, checkout window **2500** then presents a display for each of chargeline **2504**, contact details **2506**, and confirmation **2508.**

When the display for proposal details **2502** is presented, customer identification **2510**, order destination selector **2512**, and add/update proposal setting box **2514** are displayed. Customer identification **2510** identifies the customer for which the order is being placed. Order destination selector **2512** identifies whether the purchase order or proposal is to be sent to the customer or a representative. The representative may be a representative of the customer, a representative of the entity hosting modification marketplace **700**, or some other representative. Add/update proposal setting box **2514** allows the user to update preferences regarding who the proposal is to be sent to based on the selection via order destination selector **2512.** The user may progress to the next step in the checkout process by selecting next button **2516** or may cancel the checkout process by selecting cancel button **2518.**

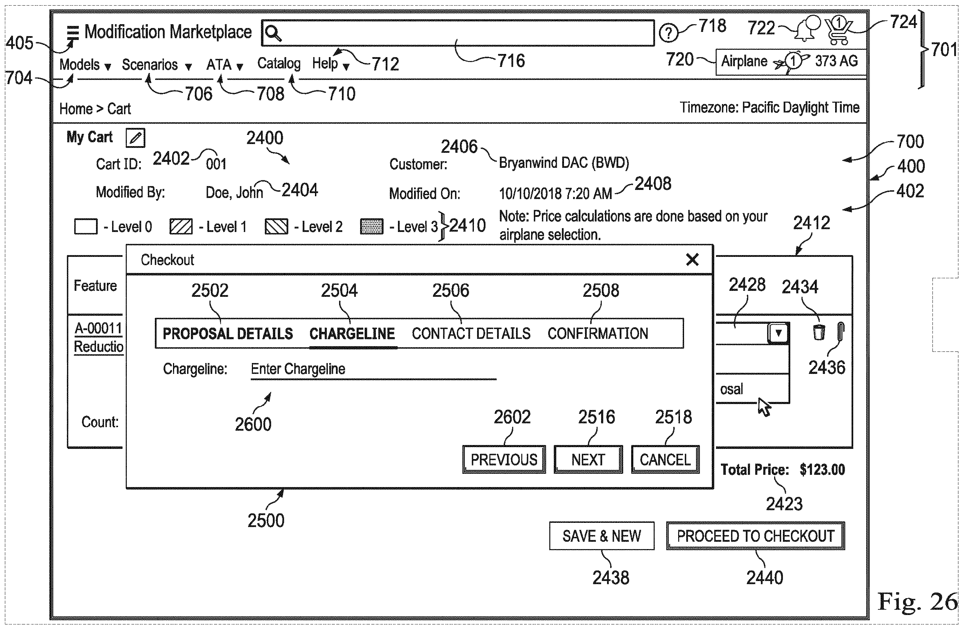

**Figure 26** is another illustration of graphical user interface **400** presenting modification marketplace **700** in accordance with an illustrative embodiment. In this illustrative example, a display for chargeline **2504** is presented in response to the user selecting next button **2516** from **Figure 25****.** In particular, chargeline input **2600** is presented and allows the user to enter, for example, an account number for a chargeline to which the purchase of the feature would be billed. The user may proceed to the next step in the checkout process by selecting next button **2516**, may cancel the checkout process by selecting cancel button **2518**, or may return to the previous display of proposal details **2502** by selecting the previous button **2602.**

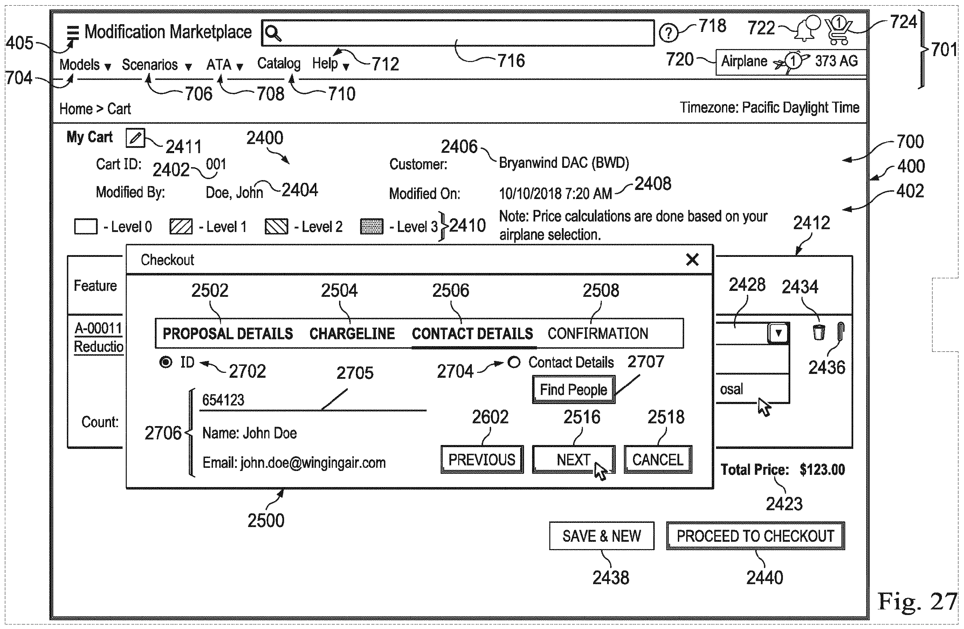

**Figure 27** is another illustration of graphical user interface **400** presenting modification marketplace **700** in accordance with an illustrative embodiment. In this illustrative example, a display for contact details **2506** is presented in response to the user selecting next button **2516** in **Figure 26****.** This display allows the user to enter his or her contact details via an identification number (ID) or by entering his or her contact information. For example, the user may toggle between ID radio button **2702** and contact details radio button **2704.**

When ID radio button **2702** has been selected, the user is allowed to enter an identification number at line **2705** in search section **2706.** The user may select find people button **2707** to search for this identification number. The results of the search are populated within search section **2706.** When contact details radio button **2704** is selected, the user may enter contact information within search section **2706.** This contact information may include at least one of an email address, a name, or a phone number. The user may then select find people button **2707** to find the rest of his or her contact information, which is then populated within search section **2706.** Once the user has ensured that his or her proper contact details have been found, the user may select next button **2516.**

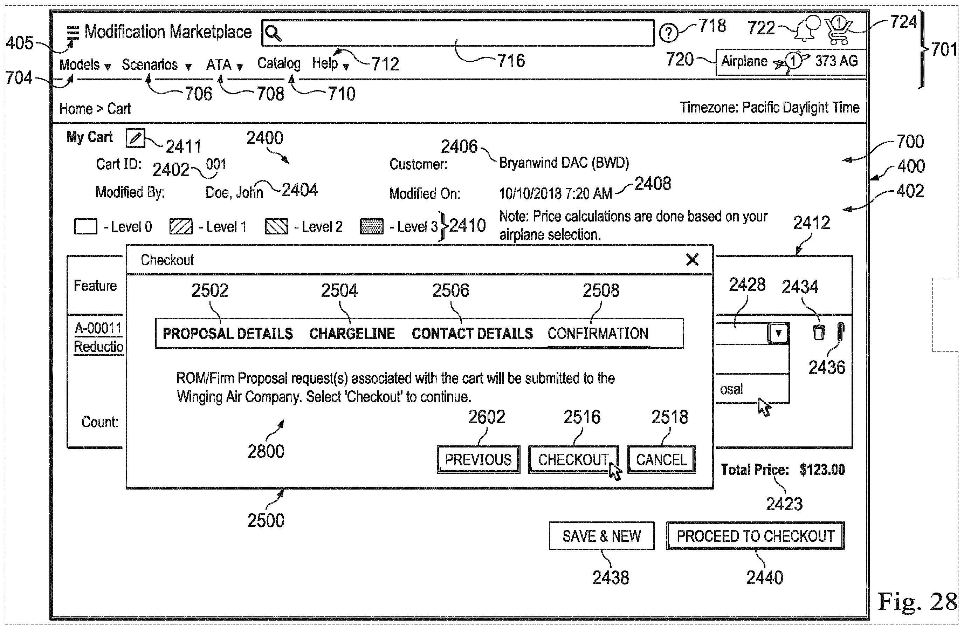

**Figure 28** is another illustration of graphical user interface **400** presenting modification marketplace **700** in accordance with an illustrative embodiment. In this illustrative example, a display for confirmation **2508** is presented in response to the user selecting next button **2516** as described above in **Figure 27****.** This display includes confirmation message **2800** that is presented to the user letting the user know that the checkout process is near completion. The user may select checkout button **2802** to complete the checkout process.

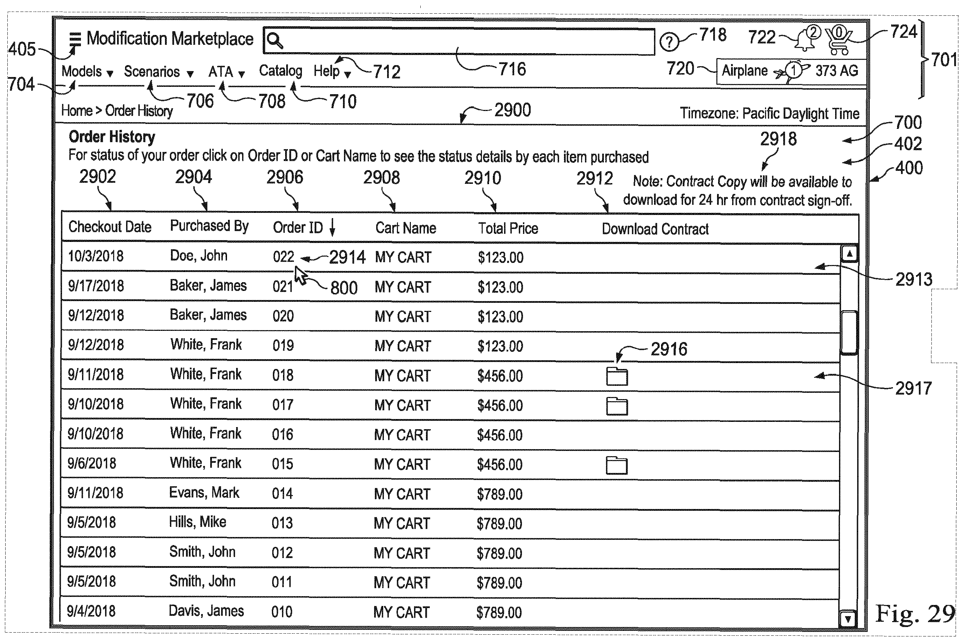

**Figure 29** is another illustration of graphical user interface **400** presenting modification marketplace **700** in accordance with an illustrative embodiment. In this illustrative example, the user may navigate through modification marketplace **700** and cause order history display **2900** to be presented to the user. Order history display **2900** presents information about the various orders that have been placed by the particular customer over time.

For example, order history display **2900** provides information corresponding to checkout date column **2902**, purchased by column **2904**, order ID column **2906**, cart name column **2908**, total price column **2910**, and download contract column **2912.** Checkout date column **2902** identifies the date on which a "checkout process" was completed for a particular order or a purchase request was made. Purchased by column **2904** identifies the user who made requested the particular order. Order ID column **2906** identifies the particular order. In some cases, order ID column **2906** identifies an identifier associated with the virtual cart or an "instance" of the virtual cart for that particular order. Cart name column **2908** identifies a name associated with the virtual cart used for the particular order. Total price column **2910** identifies the total price for the particular order. Download contract column **2912** indicates whether there is a downloadable contract available for that particular order.

Order **2913** is an example of one of the orders presented within order history display **2900.** The user may select order ID **2914** identified in order ID column **2906** for order **2913** to view additional details about order **2913.** Icon **2916** associated with order **2917** is an indication that order **2917** is associated with a downloadable contract.

In some cases, order history display **2900** may also include note **2918**, which may provide different types of information to the user. In this illustrative example, note **2918** indicates that copies of contracts are generally available for download 24 hours after the contract has been signed.

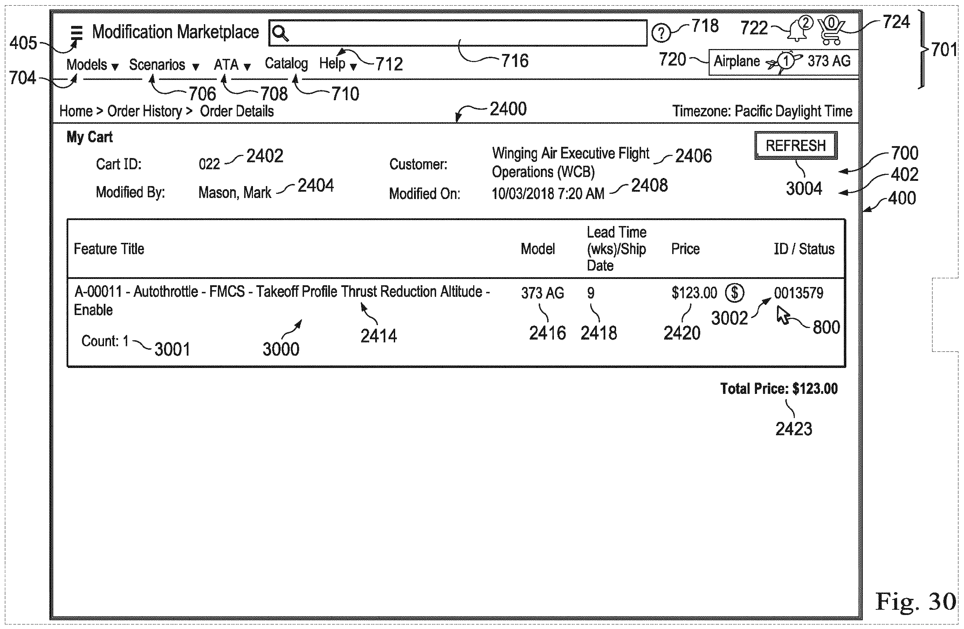

**Figure 30** is another illustration of graphical user interface **400** presenting modification marketplace **700** in accordance with an illustrative embodiment. Cart display **2400** may be presented to the user in response to the user selecting order ID **2914** in **Figure 29****.** Cart display **2400** is similar to cart display **2400** in **Figure 24** but presented with respect to a particular instance of the virtual cart. Thus, **Figure 24** depicts an "in-progress" view of cart display **2400**, while **Figure 30** depicts a "finalized" view of cart display **2400** after the checkout process has been completed.

The finalized view of cart display **2400** in **Figure 30** generally includes the same information as presented in the in-progress view of cart display **2400** in **Figure 24****.** But in **Figure 30**, cart display **2400** does not include legend **2410.** Further, contents section **2412** from **Figure 24** is finalized as features ordered section **3000.** Quantity **3001** represents the final quantity of the feature ordered. Identifier **3002** may indicate, for example, whether this particular order was formed as a purchase or a firm proposal. In this illustrative example, the user may select identifier **3002** to view more details about the particular order.

Refresh button **3004** is included in cart display **2400** in **Figure 30****.** Refresh button **3004** allows the user to "refresh" or otherwise update the information associated with this order. For example, refreshing may cause a change in the identified lead time **2418.** In some examples, refreshing updates the information that is presented in response to the user selecting identifier **3002.**

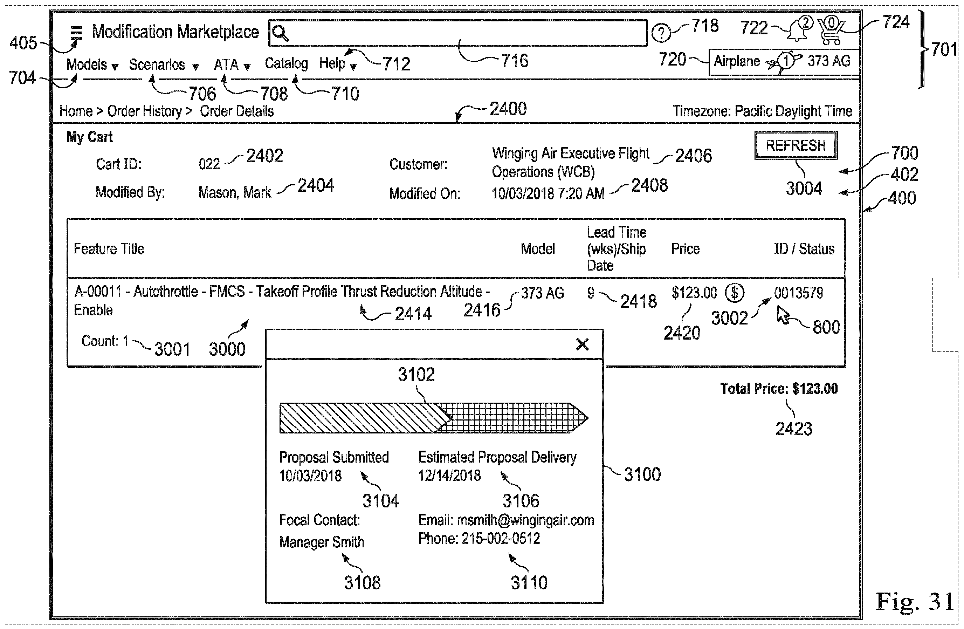

**Figure 31** is another illustration of graphical user interface **400** presenting modification marketplace **700** in accordance with an illustrative embodiment. In this illustrative example, status box **3100** is presented to the user in response to the user having selected identifier **3002** from **Figure 30****.** Status box **3100** gives the user an indication of the current status of the particular order.

For example, status box **3100** includes progress bar **3102** which provides a visual indication of the time remaining before a purchase order or a proposal is delivered. Submitted date **3104** identifies when the purchase order or request for proposal was submitted. In this illustrative example, submitted date **3104** identifies a date for when a request for a firm proposal was made. Estimated delivery date **3106** identifies an estimated date on which the purchased feature or proposal will be delivered. This delivery may include a physical delivery, a virtual delivery, or both. For example, a purchased feature may be delivered physically or virtually (*e*.*g*., via email, downloadable content, etc.). A proposal may be delivered virtually.

Focal contact name **3108** identifies a name of a focal point of contact. For example, focal contact name **3108** may identify the name of an employee or manager overseeing the fulfillment of the particular order. Focal contact information 3110 identifies contact information to help the user contact the focal point of contact. In this illustrative example, focal contact information 3110 includes an email address and a phone number.

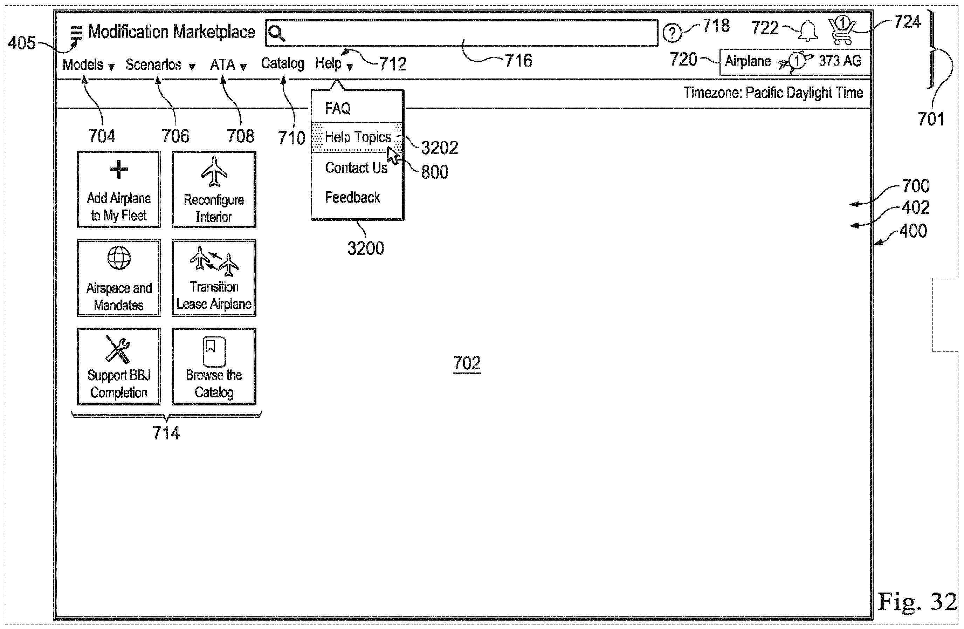

Figure 32 is another illustration of graphical user interface 400 presenting modification marketplace 700 in accordance with an illustrative embodiment. In this illustrative example, help menu 3200 is displayed to the user in response to the user having selecting help menu control 712. Help menu 3200 allows the user to select from various help or support categories. In this illustrative example, the user may select help topics option 3202 to view training information to help the user navigate and use modification marketplace 700.

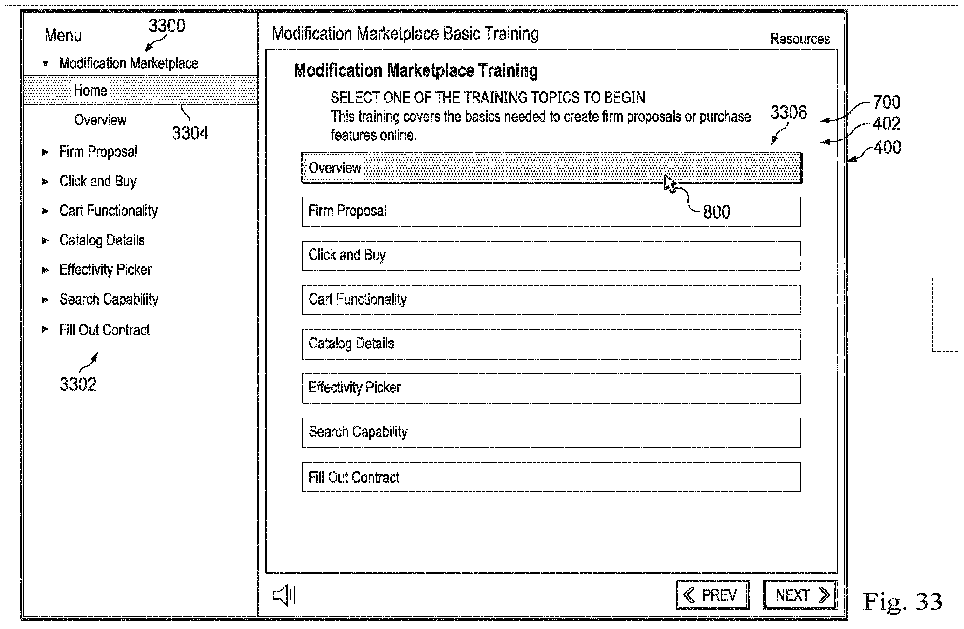

Figure 33 is another illustration of graphical user interface 400 presenting modification marketplace 700 in accordance with an illustrative embodiment. In this illustrative example, help topics menu 3300 is displayed in response to the user having selected help topics option 3202 in Figure 32. Help topics menu 3300 identifies various topics 3302 for which the user can view training information. One or more of these topics 3302 may include a submenu of topics. In this illustrative example, in response to the user selecting topic 3304, training modules menu 3306 is presented to the user. In this illustrative example, each of the training modules identified in training modules menu 3306 is selectable by the user. By selecting a particular training module, the user may be able to at least one of read training information, view one or more training videos, create a mock purchase order or firm proposal, or train in some other manner.

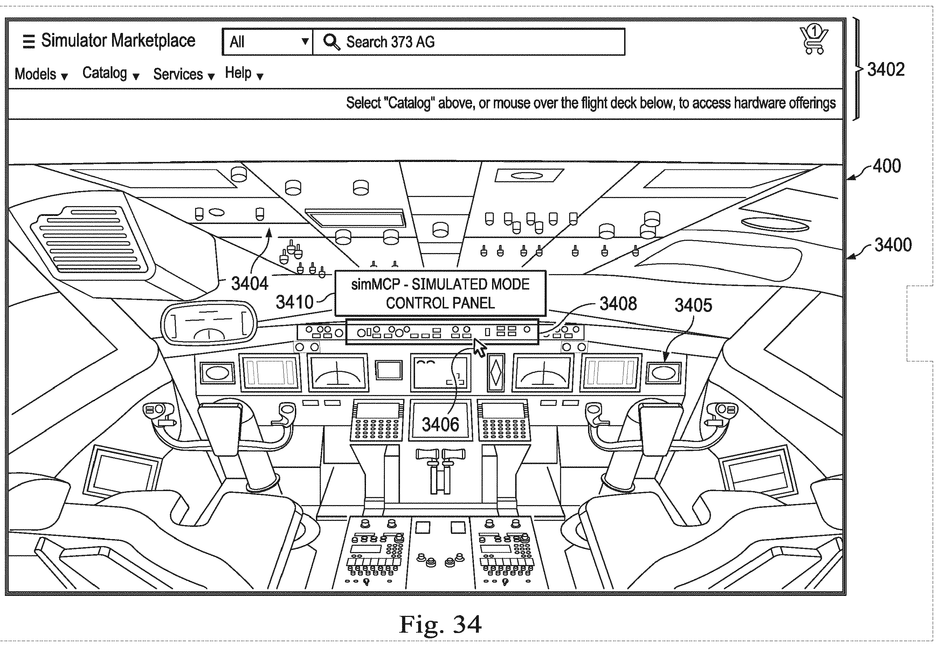

**Figure 34** is an illustration of graphical user interface **400** presenting a simulation marketplace is depicted in accordance with an illustrative embodiment. Simulation marketplace **3400** is an example of one implementation for simulation marketplace **105** in **Figure 1****.** As depicted, simulation marketplace **3400** includes navigation section **3402**, which may be similar to navigation section **701** of modification marketplace **700** described above.

Simulation marketplace **3400** presents interactive layout **3404** to a user. Interactive layout **3404** represents the layout of a flight simulator for a model aircraft, which may be also referred to as an aircraft simulator. In this illustrative example, interactive layout **3404** represents a simulated flight deck. Interactive layout **3404** includes plurality of interactive components **3405**, each of which is selectable. Each of plurality of interactive components **3405** represents a feature included in the flight simulator. In one illustrative example, cursor **3406** may be hovered over interactive component **3408** to display information box **3410.** In this illustrative example, information box **3410** presents an identification (*e*.*g*., name) of the feature represented by interactive component **3408.**

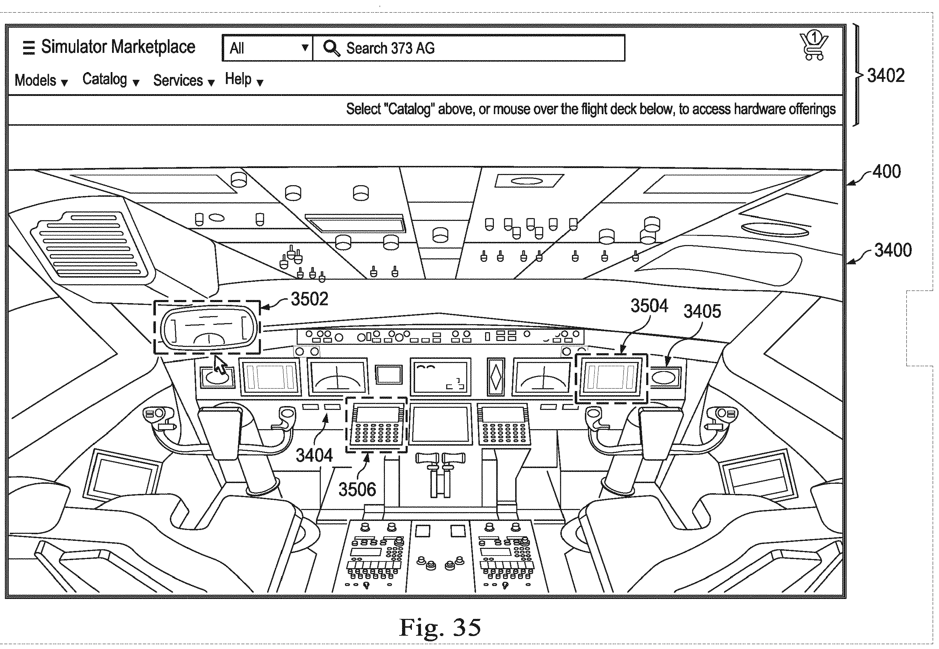

**Figure 35** is another illustration of graphical user interface **400** presenting simulation marketplace **3400** is depicted in accordance with an illustrative embodiment. In this illustrative example, interactive component **3502**, interactive component **3504**, and interactive component **3506** are depicted. Each of these interactive components is selectable to display customized information regarding the feature represented by each interactive component to the user. Interactive component **3502** represents a head up display of the flight simulator. Interactive component **3504** represents a primary flight display unit the flight simulator. Interactive component **3506** represents a multifunctional control and display unit of the flight simulator.

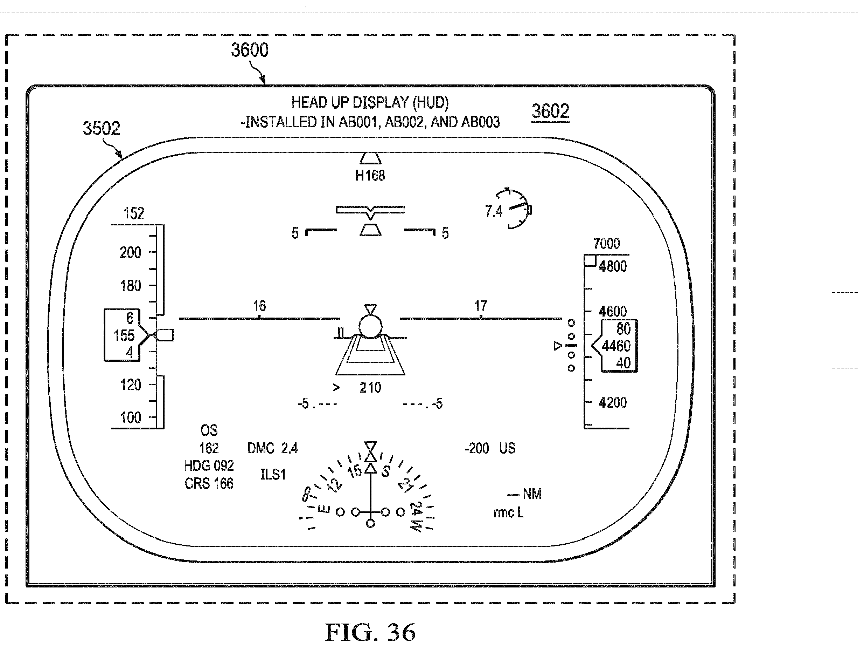

**Figure 36** is another illustration of a callout window for display within simulation marketplace **3400** from **Figures 34-35** in accordance with an illustrative embodiment. Callout window **3600** is an example of a window that may be displayed in response to a selection of interactive component **3502** in **Figure 35****.** In this illustrative example, callout window **3600** includes image **3602** and customized information **3604.** Image **3602** presents an enlarged view of the head up display represented by interactive component **3502** in **Figure 35****.** Customized information **3604** presents information customized for user with respect to the feature. For example, customized information **3604** includes an install status for the feature, which indicates each flight simulator (or model of aircraft) in which the feature was previously installed.

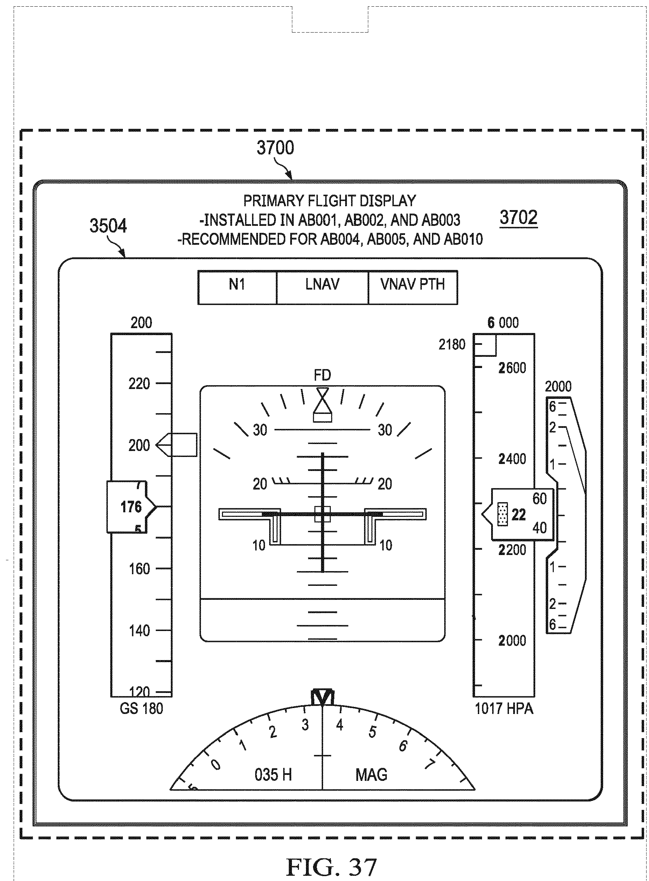

**Figure 37** is another illustration of a callout window displayed for display within simulation marketplace **3400** from **Figures 34-35** in accordance with an illustrative embodiment. Callout window **3700** is an example of a window that may be displayed in response to a selection of interactive component **3504** in **Figure 35****.** In this illustrative example, callout window **3700** includes image **3702** and customized information **3704.** Image **3702** presents an enlarged view of the primary flight display unit represented by interactive component **3504** in **Figure 35****.** Customized information **3704** presents information customized for user with respect to the feature. For example, customized information **3704** includes an install status for the feature, which indicates each flight simulator (or model of aircraft) in which the feature was previously installed.

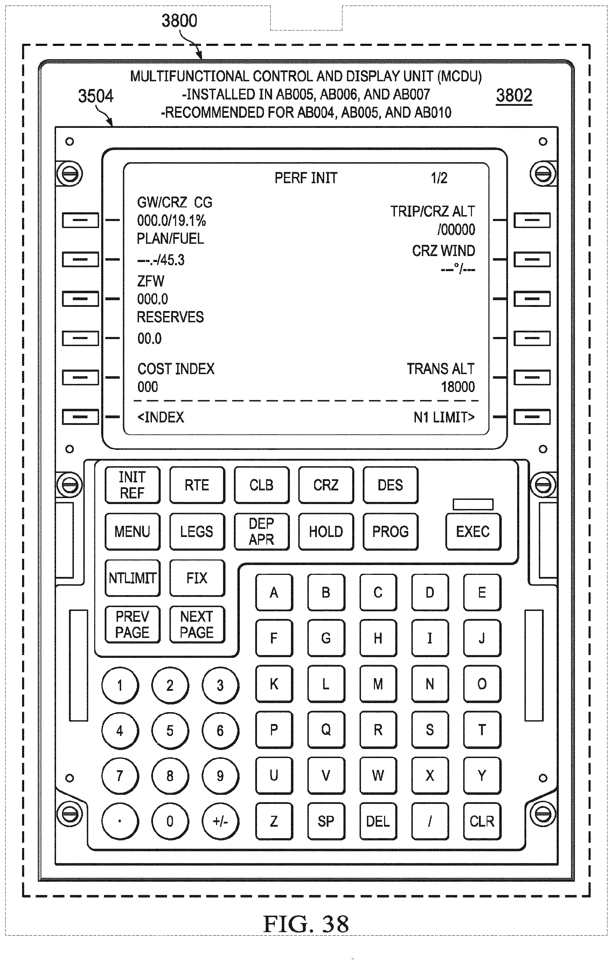

**Figure 38** is another illustration of a callout window for display within simulation marketplace **3400** from **Figures 34-35** in accordance with an illustrative embodiment. Callout window **3800** is an example of a window that may be displayed in response to a selection of interactive component **3506** in Figure **35****.** In this illustrative example, callout window **3800** includes image **3802** and customized information **3804.** Image **3802** presents an enlarged view of the multifunctional control and display unit represented by interactive component **3506** in **Figure 35****.** Customized information **3804** presents information customized for user with respect to the feature. For example, customized information **3804** includes an install status for the feature, which indicates each flight simulator (or model of aircraft) in which the feature was previously installed.

The illustrations of graphical user interface **400** in **Figures 4-38** are not meant to imply physical or architectural limitations to the manner in which an illustrative embodiment may be implemented. Other components in addition to or in place of the ones illustrated may be used. Some components may be optional. The different components shown in **Figures 4-38** may be illustrative examples of how components shown in block form in **Figures 1-3** can be implemented as physical structures. Additionally, some of the components in **Figures 4-38** may be combined with components in **Figures 1-****3**, used with components in **Figure** 1-3, or a combination of the two.

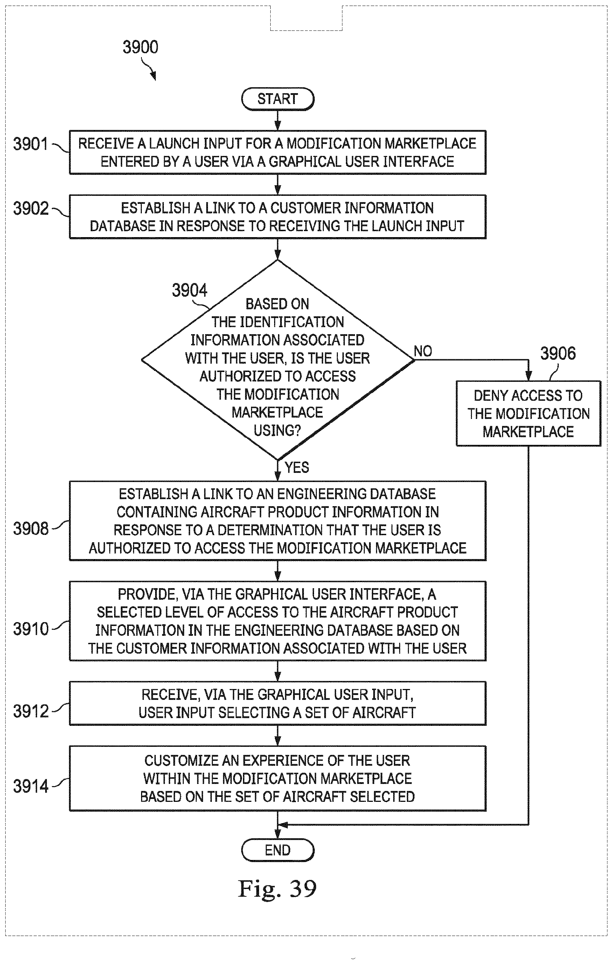

**Figure 39** is a flowchart of a process for managing modifications to aircraft in accordance with an example embodiment. Process **3900** is an example of one manner in which modifications to aircraft, such as, but not limited, to retrofit features, may be managed. Process **3900** may be implemented within, for example, virtual aircraft marketplace **100** in **Figure 1****.** In particular, process **3900** may be implemented using modification marketplace **102** described in **Figures 1** and **2****.**

Process **3900** may begin by receiving a launch input for a modification marketplace entered by a user via a graphical user interface (operation **3901**). A link to a customer information database is then established in response to receiving the launch input (operation **3902**). The customer information database includes identification information and customer information associated with the user.

A determination is then made as to whether the user is authorized to access the modification marketplace using the identification information associated with the user (operation **3904**). With reference to operation **3904**, if the user is not authorized, access is denied (operation **3906**), with process 3900 terminating thereafter. If the user is authorized, however, a link to an engineering database containing aircraft product information is established (operation **3908**). In some illustrative examples, operation **3908** includes establishing a link with any number of data systems to obtain aircraft product information.

For example, the modification marketplace may establish a link with one or more of the data systems in plurality of data systems **112** in **Figures 1** and **2** in order to access aircraft product information. This aircraft product information may include information about the various aircraft models, information about the different stock configurations for different aircraft models, information about the various retrofit features available for each aircraft model and aircraft configuration, information about governmental mandates and regulations regarding aircraft features, other types of information, or a combination thereof.

Thereafter, a selected level of access to the aircraft product information in the engineering database is provided to the user via the graphical user interface based on the customer information associated with the user (operation **3910**). In one or more illustrative examples, the selected level of access is determined as part of operation **3910.** In other examples, the selected level of access is determined at some point after operation the determination in operation **3906** is made but before operation **3910.** In one or more examples, the selected level of access to be provided to the user is determined using at least one of a purchase authorization filter, a product access filter, or a business scenario filter. For example, the purchase authorization filter limits features available to the user based on an owner status of a customer with which the user is associated. The product access filter limits features available to the user based on a customer type of the customer. Further, the business scenario filter is used to determine what types of business scenarios are applicable to the customer.

User input selecting a set of aircraft is received via the graphical user interface (operation **3912**). An experience of the user within the modification marketplace is customized based on the set of aircraft selected (operation **3914**), with the process terminating thereafter.

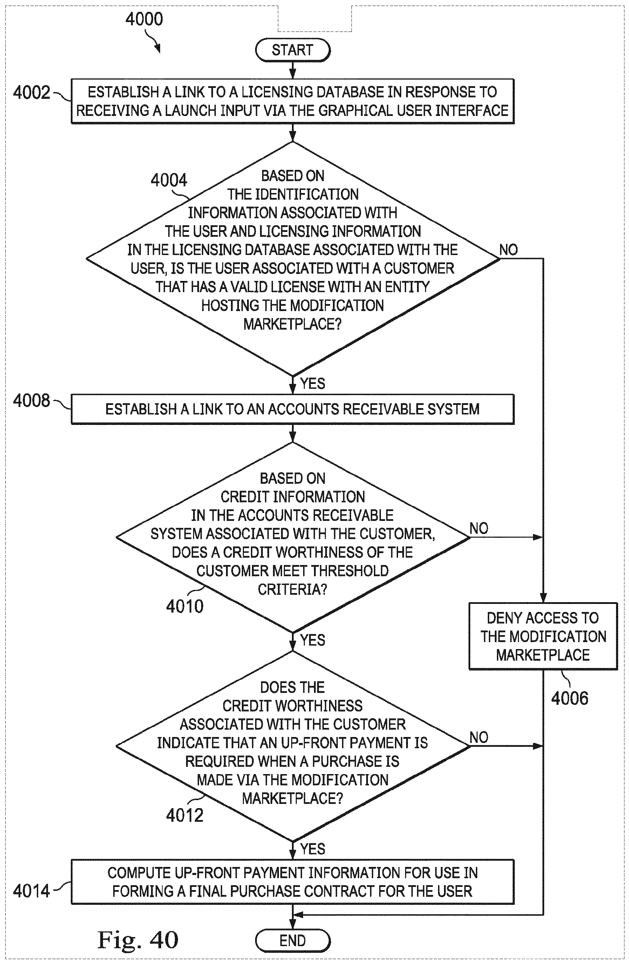

**Figure 40** is a flowchart of a process for determining whether a user is authorized to access a modification marketplace in accordance with an illustrative embodiment. Process **4000** is an example of one manner in which a determination is made about whether a user is authorized to access modification marketplace **102** described in **Figures 1** and **2****.** Process **4000** may be implemented using, for example, access manager **200** of modification marketplace **102.** Further, process **4000** may be an example of one manner in which operation **3904** in **Figure 39** may be implemented.

Process **4000** begins by establishing a link to a licensing database in response to receiving a launch input via the graphical user interface (operation **4002**). A determination is made as to whether the user is associated with a customer that has a valid license with an entity hosting the modification marketplace based on the identification information associated with the user and licensing information in the licensing database associated with the user (operation **4004**). In operation **4004**, the identification information may be obtained from a customer information database, such as customer information database **114** described in **Figures 1** and **2****.** For example, the identification information may include the same identification information described above in **Figure 39**.

If the customer does not have a valid license with the entity, access to the modification marketplace is denied (operation **4006**). Otherwise, if the customer does have a valid license, a link to an accounts receivable system is established (operation **4008**). A determination is then made as to whether a credit worthiness of the customer meets threshold criteria based on credit information in the accounts receivable system associated with the customer (operation **4010**).

If the credit worthiness of the customer does not meet the threshold criteria, process **4000** proceeds to operation **4006** as described above. Otherwise, if the credit worthiness of the customer does meet the threshold criteria, optionally, a determination is made as to whether the credit worthiness associated with the customer indicates that an up-front payment is required when a purchase is made via the modification marketplace (operation **4012**). For example, in some cases, a customer may have a sufficiently high credit rating such that the customer meets the threshold criteria for gaining access to the modification marketplace. However, the credit rating may not be high enough to meet a secondary threshold. In these cases, the customer may be required to provide an up-front payment (*e*.*g*., a down payment) for any purchase made via modification marketplace.

If an up-front payment is required, up-front payment information is computed for use in forming a final purchase contract for the user (operation **4014**). This up-front payment information may include, for example, a percentage of the total price, a standard amount, or a list of amounts with each being applicable for a different range of purchase price.

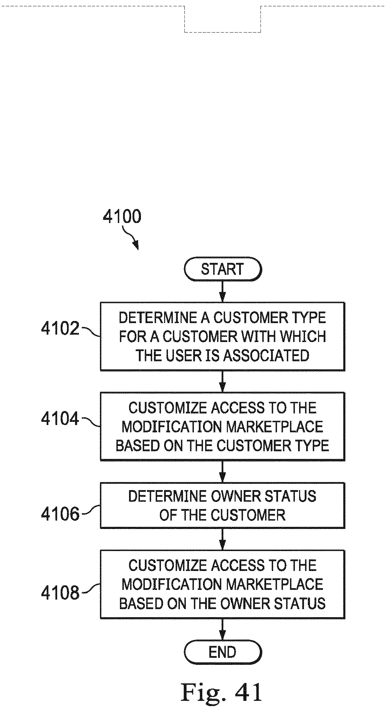

**Figure 41** is a flowchart of a process for providing a selected level of access to aircraft product information in accordance with an illustrative embodiment. Process **4100** is an example of one manner in which a selected level of access to aircraft product information is **Figures 1** and **2****.** Process **4100** may be implemented using, for example, access manager **200** of modification marketplace **102.** Further, process **4100** may be an example of one manner in which operation **3910** in **Figure 39** may be implemented.

Process **4100** begins by determining a customer type for a customer with which the user is associated (operation **4102**). Next, access to the modification marketplace is customized based on the customer type (operation **4104**). The customer type may be, for example, an aircraft purchaser, aircraft owner, aircraft lessor, aircraft operator, an airline, an air freight company, an aircraft charter company, an aircraft leasing company, a third-party aircraft modification center, or some other type of customer. In one or more examples, in operation **4104**, the user's level of access to the modification marketplace may be limited based on the customer type so that only product information and business scenarios relevant for the customer type are accessible or presented to the user in the modification marketplace. This type of tailoring helps streamline the process for the user and makes the experience of modification marketplace more efficient.

The owner status of the customer is determined (operation **4106**). Access to the modification marketplace is customized based on the owner status (operation **4108**). In operation **4108**, the owner status may be selected from one of owner or non-owner. In one or more examples, in operation **4108**, the user's level of access to the modification marketplace may be limited based on the owner status such that the user is only allowed to make purchases if the user is associated with a customer who is an owner. In other words, the user is only allowed to make purchases if the user is or represents an owner. This type of tailoring further helps streamline the process for the user and makes the experience of modification marketplace more efficient.

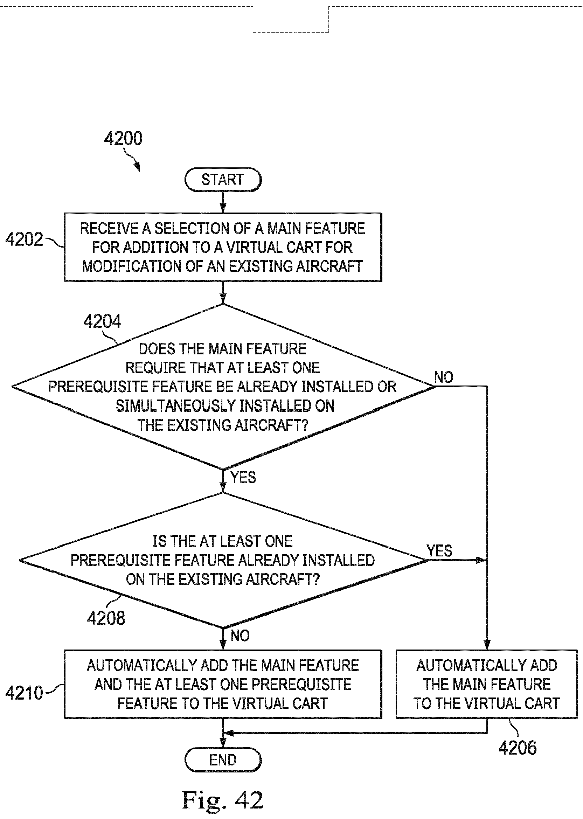

**Figure 42** is a flowchart of a process for modifications to an aircraft in accordance with an illustrative embodiment. Process **4200** is an example of one manner in which a modification marketplace manages the addition of retrofit features to existing aircraft. Process **4200** may be implemented within, for example, virtual aircraft marketplace **100** in **Figure 1****.** In particular, process **4200** may be implemented using modification marketplace **102** described in **Figures 1** and **2****.**

Process **4200** begins by receiving a selection of a main feature for addition to a virtual cart for modification of an existing aircraft (operation **4202**). A determination is made as to whether the main feature requires that at least one prerequisite feature be already installed or simultaneously installed on the existing aircraft (operation **4204**). This determination may be made using information from, for example, an engineering database.

If no prerequisite features are required, the main feature is automatically added to the virtual cart (operation **4206**) and the process terminates. However, if at least one prerequisite feature is required, a determination is made as to whether the at least one prerequisite feature is already installed on the existing aircraft (operation **4208**). This determination may be made based on information obtained from at least one of an engineering database, a project management database, an aircraft tracking configuration database, or some other type of data system. If the prerequisite feature is already installed, the process proceeds to operation **4206** as described above. Otherwise, the main feature and the at least one prerequisite feature are automatically added to the virtual cart (operation **4210**), with the process terminating thereafter.

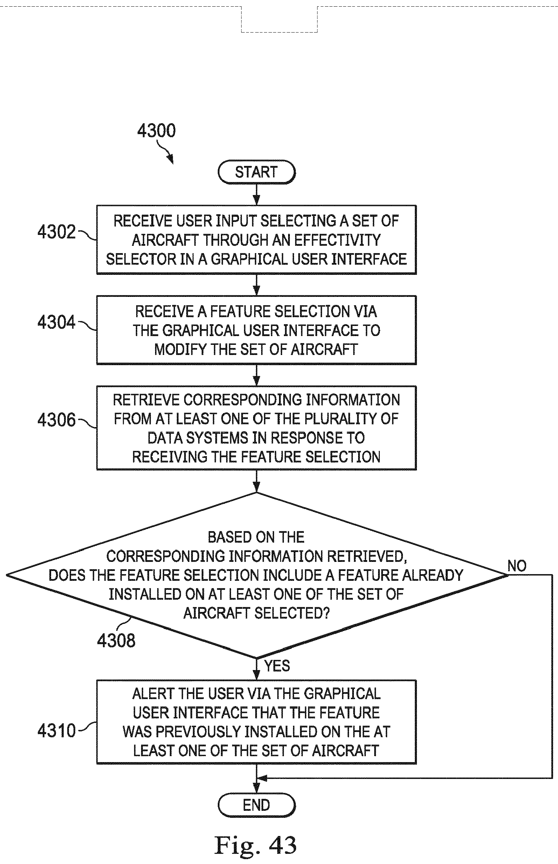

**Figure 43** is a flowchart of a process for managing modifications to an aircraft in accordance with an illustrative embodiment. Process **4300** is an example of one manner in which the addition of retrofit features to existing aircraft may be managed. Process **4300** may be implemented within, for example, virtual aircraft marketplace **100** in **Figure 1****.** In particular, process **4300** may be implemented using modification marketplace **102** described in **Figures 1** and **2****.**

Process **4300** may begin by receiving user input selecting a set of aircraft through an effectivity selector in a graphical user interface (operation **4302**). A feature selection is received via the graphical user interface to modify the set of aircraft (operation **4304**). Corresponding information is retrieved from at least one of the plurality of data systems in response to receiving the feature selection (operation **4306**). The corresponding information may be retrieved from at least one of a customer information database, an engineering database, an aircraft tracking configuration database, a contract database, or a project management database.

A determination is made as to whether the feature selection includes a feature already installed on at least one of the set of aircraft selected based on the corresponding information retrieved (operation **4308**). If the feature is not already installed on the at least one of the set of aircraft, the process terminates. Otherwise, the user is alerted via the graphical user interface that the feature was previously installed on the at least one of the set of aircraft (operation **4310**).

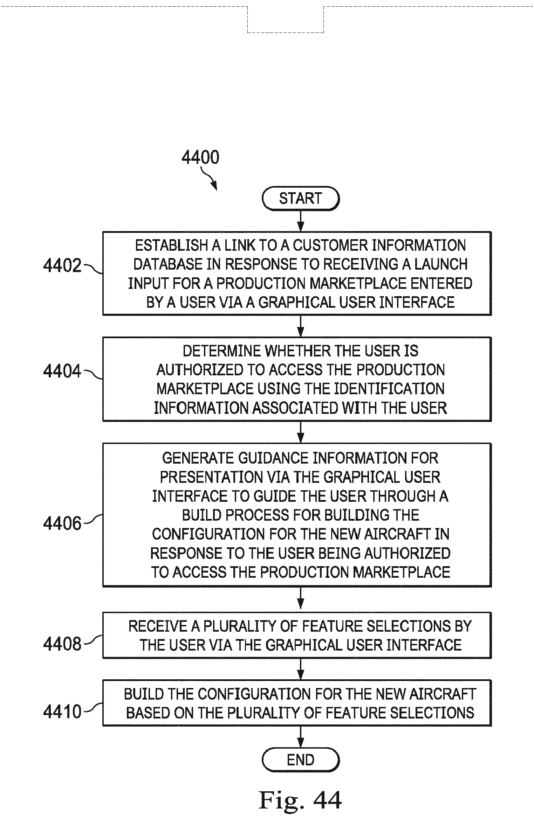

**Figure 44** is a flowchart of a process for managing the building of a configuration for a new aircraft in accordance with an illustrative embodiment. Process **4400** is an example of one manner in which a configuration for a new aircraft may be built within a production marketplace. Process **4400** may be implemented within, for example, virtual aircraft marketplace **100** in **Figure 1****.** In particular, process **4400** may be implemented using production marketplace **104** described in **Figures 1** and **3****.**

Process **4400** begins by establishing a link to a customer information database in response to receiving a launch input for a production marketplace entered by a user via a graphical user interface (operation **4402**). The user is associated with a customer. The user may be associated with a customer by being the customer or by representing the customer. In some cases, the user is an employee of the customer. In other examples, the user is a sales agent or account manager representing the entity hosting production marketplace **104** and acting on behalf of the customer. The customer information database includes identification information associated with the user.

A determination is made as to whether the user is authorized to access the production marketplace using the identification information associated with the user (operation **4404**). Guidance information is generated for presentation via the graphical user interface to guide the user through a build process for building the configuration for the new aircraft in response to the user being authorized to access the production marketplace (operation **4406**). The guidance information is customized for the customer. A plurality of feature selections by the user is received via the graphical user interface (operation **4408**). The configuration for the new aircraft is built based on the plurality of feature selections (operation **4410**), with the process terminating thereafter.

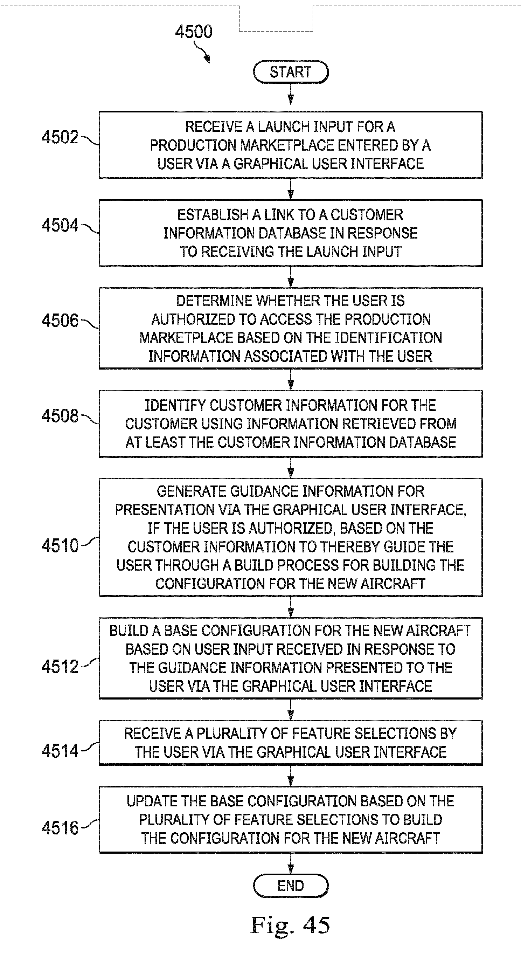

**Figure 45** is a flowchart of a process for managing the building of a configuration for a new aircraft in accordance with an illustrative embodiment. Process **4500** is an example of one manner in which a configuration for a new aircraft may be built within a production marketplace. Process **4500** may be implemented within, for example, virtual aircraft marketplace **100** in **Figure 1****.** In particular, process **4500** may be implemented using production marketplace **104** described in **Figures 1** and **3****.**

Process **4500** may begin by receiving a launch input for a production marketplace entered by a user via a graphical user interface (operation **4502**). A link to a customer information database is established in response to receiving the launch input (operation **4504**). The user is associated with a customer and the customer information database includes identification information associated with the user.

A determination is made as to whether the user is authorized to access the production marketplace based on the identification information associated with the user (operation **4506**). Customer information is identified for the customer using information retrieved from at least the customer information database (operation **4508**). The customer information includes at least one of a customer type or an owner status for the customer;

Thereafter, guidance information is generated for presentation via the graphical user interface, if the user is authorized, based on the customer information to thereby guide the user through a build process for building the configuration for the new aircraft (operation **4510**). In this manner, the guidance information is customized for the customer. A base configuration is built for the new aircraft based on user input received in response to the guidance information presented to the user via the graphical user interface (operation **4512**). The base configuration comprises a partially completed configuration that provides a starting point for building the configuration for the new aircraft. In other examples, the base configuration is a completed configuration that may be changed or revised to build the configuration for the new aircraft.

A plurality of feature selections is received by the user via the graphical user interface (operation **4514**). The base configuration is updated based on the plurality of feature selections to build the configuration for the new aircraft (operation **4516**), with the process terminating thereafter.

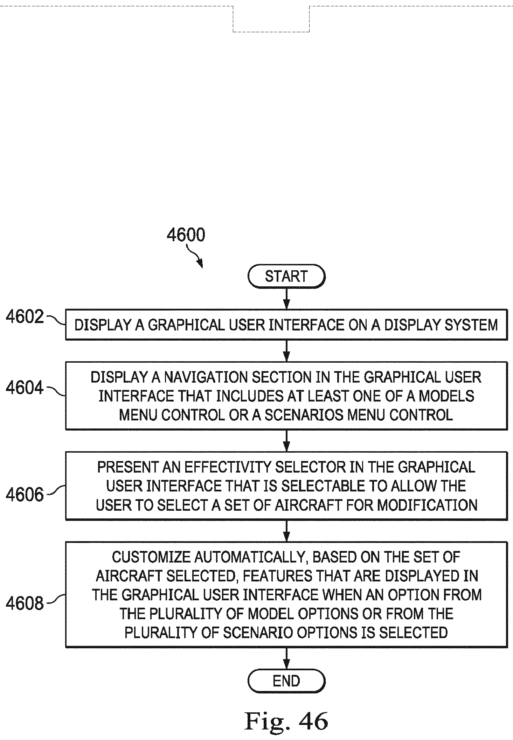

**Figure 46** is a flowchart of a process for managing aircraft modifications via a graphical user interface in accordance with an illustrative embodiment. Process **4600** is an example of one manner of managing aircraft modifications using a graphical user interface. Process **4600** may be implemented within, for example, virtual aircraft marketplace **100** in **Figure 1****.** In particular, process **4600** may be implemented using graphical user interface **108** described in **Figures 1** and **2****.**

Process **4600** may begin by displaying a graphical user interface on a display system (operation **4602**). A navigation section that includes at least one of a models menu control or a scenarios menu control is displayed in the graphical user interface (operation **4604**). The models menu control is selectable to present a plurality of model options to a user in which the plurality of model options is customized based on at least one of identification information associated with the user or customer information retrieved for the customer with which the user is associated. Further, the scenarios menu control is selectable to present a plurality of scenario options to a user in which the plurality of scenario options is tailored for the customer based on the at least one of identification information associated with the user or customer information retrieved for the customer.

An effectivity selector that is selectable to allow the user to select a set of aircraft for modification is presented in the graphical user interface (operation **4606**). Based on the set of aircraft selected, features that are displayed in the graphical user interface when an option from the plurality of model options or from the plurality of scenario options is selected are customized automatically (operation **4608**), with the process terminating thereafter.

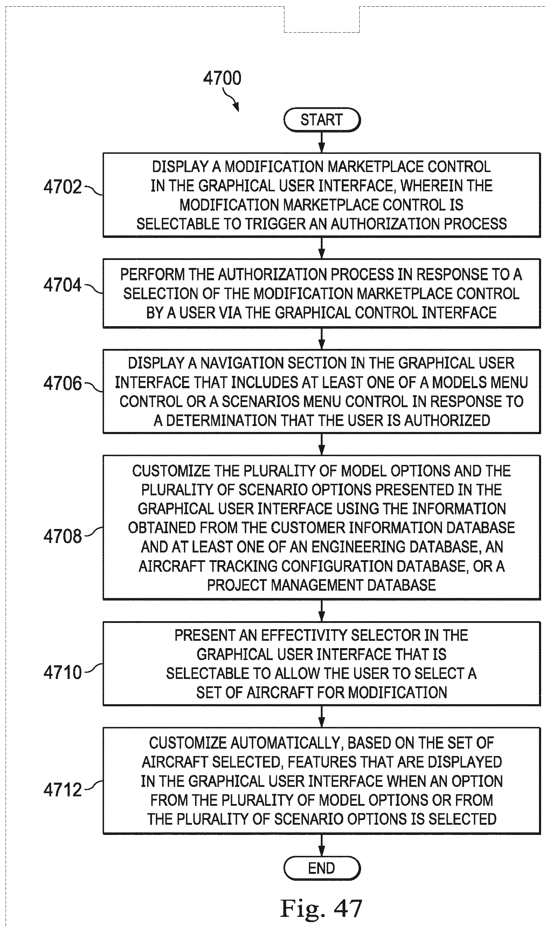

**Figure 47** is a flowchart of a process for managing aircraft modifications via a graphical user interface in accordance with an illustrative embodiment. Process **4700** is an example of one manner of managing aircraft modifications using a graphical user interface. Process **4700** may be implemented within, for example, virtual aircraft marketplace **100** in **Figure 1****.** In particular, process **4700** may be implemented using graphical user interface **108** described in **Figures 1** and **2****.**

Process **4700** may begin by displaying a modification marketplace control in the graphical user interface (operation **4702**). The modification marketplace control is selectable to trigger an authorization process. The authorization process is performed in response to a selection of the modification marketplace control by a user via the graphical control interface (operation **4704**). The authorization process may include, for example, establishing a link with a customer information database, a licensing database, and an accounts receivable system to thereby obtain information for determining whether the user is authorized.

A navigation section that includes at least one of a models menu control or a scenarios menu control is displayed in the graphical user interface in response to a determination that the user is authorized (operation **4706**). The models menu control is selectable to present a plurality of model options to a user and the scenarios menu control is selectable to present a plurality of scenario options to a user. The plurality of model options and the plurality of scenario options presented in the graphical user interface are customized using the information obtained from the customer information database and at least one of an engineering database, an aircraft tracking configuration database, or a project management database (operation **4708**).

An effectivity selector that is selectable to allow the user to select a set of aircraft for modification is presented in the graphical user interface (operation **4710**). Based on the set of aircraft selected, features that are displayed in the graphical user interface when an option from the plurality of model options or from the plurality of scenario options is selected are customized automatically (operation **4712**), with the process terminating thereafter.

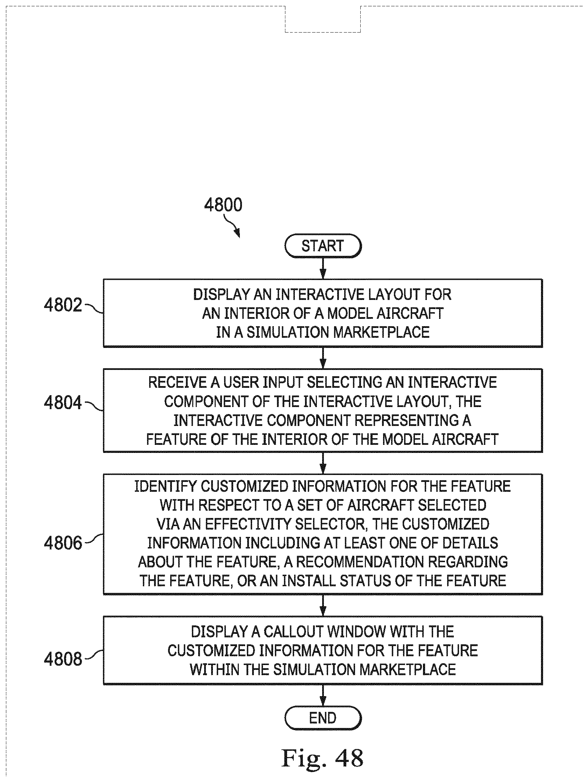

**Figure 48** is a flowchart of a process for managing aircraft modifications via a graphical user interface in accordance with an illustrative embodiment. Process **4800** is an example of one manner of managing aircraft modifications using a graphical user interface. Process **4800** may be implemented within, for example, virtual aircraft marketplace **100** in **Figure 1****.** In particular, process **4700** may be implemented within simulation marketplace **105** using graphical user interface **108** described in **Figure 1****.**

Process **4800** begins by displaying an interactive layout for an interior of a model aircraft in a simulation marketplace (operation **4802**). The simulation marketplace is displayed to the user. In these illustrative examples, the model aircraft may be a representation of a simulator for a generic aircraft or for at least one of a set of aircraft selected by a user via an effectivity selector for simulation. In one illustrative example, the interactive layout is a layout of the cockpit or flight deck of the model aircraft. In other words, the interior layout may represent a simulator for the flight deck of the model aircraft. In some cases, the model aircraft may be the flight simulator.

A user input selecting an interactive component of the interactive layout is received, the interactive component representing a feature of the interior of the model aircraft (operation **4804**). The interactive component may be an image, a portion of an image, a graphical feature, or a graphical control displayed as part of the interactive layout. For example, the interactive component may represent a head up display, a primary flight display unit, a multifunctional control and display unit, or some other type of feature. In some illustrative examples, the interactive component may represent a pilot control, a flight control button, or some other type of control or feature found in the cockpit or flight deck of the model aircraft. The user input received in operation **4804** may be, for example, a cursor being moved over the interactive component, a selection of the interactive component via a user input device (*e*.*g*., a touchscreen, a mouse, a joystick, a keyboard, etc.), or some other type of user input.

Next, customized information for the feature is identified with respect to a set of aircraft selected via an effectivity selector, the customized information including at least one of details about the feature, a recommendation regarding the feature, or an install status of the feature (operation **4806**). In operation **4806**, details about the feature may include at least one of, for example, without limitation, an identification of the feature, requirements regarding the feature, a price associated with the feature, a number of prerequisite features that are typically required to be installed before the feature is installed, a number of sub-features included as part of the feature, or some other type of feature.

A recommendation regarding the feature may include, for example, without limitation, a recommendation of one or more related features that should be installed after the feature. In some cases, the recommendation may identify what types of aircraft simulators in which the feature should be installed. In other cases, the recommendation may identify whether new regulations or requirements require installation of the feature in certain aircraft simulators. The install status of the feature may indicate, based on customer information retrieved for the user, whether the feature was previously installed in the simulator for each of the selected set of aircraft. In some cases, the install status may list each aircraft simulator owned or operated by the user in which the feature has already been installed.

A callout window with the customized information for the feature is then displayed in the simulation marketplace (operation **4808**), with the process terminating thereafter. The callout window may be displayed over or adjacent to the interactive component. The callout window may also be referred to as a popup window. In other illustrative examples, operation **4808** may be instead performed by displaying the customized information in some other way within the simulation marketplace.

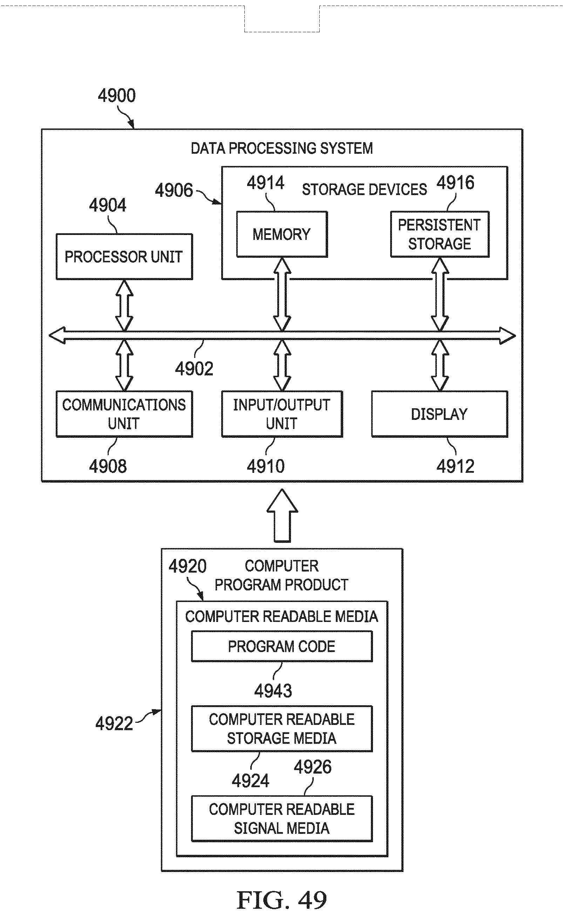

**Figure 49** is a block diagram of a data processing system, depicted in accordance with an illustrative embodiment. Data processing system **4900** may be used to computer system **496** in **Figure 1****.** As depicted, data processing system **4900** includes communications framework **4902**, which provides communications between processor unit **4904**, storage devices **4906**, communications unit **4908**, input/output unit **4910**, and display **4912.** In some cases, communications framework **4902** may be implemented as a bus system.

Processor unit **4904** is configured to execute instructions for software to perform a number of operations. Processor unit **4904** may comprise a number of processors, a multi-processor core, and/or some other type of processor, depending on the implementation. In some cases, processor unit **4904** may take the form of a hardware unit, such as a circuit system, an application specific integrated circuit (ASIC), a programmable logic device, or some other suitable type of hardware unit.

Instructions for the operating system, applications, and/or programs run by processor unit **4904** may be located in storage devices **4906.** Storage devices **4906** may be in communication with processor unit **4904** through communications framework **4902.** As used herein, a storage device, also referred to as a computer readable storage device, is any piece of hardware capable of storing information on a temporary and/or permanent basis. This information may include, but is not limited to, data, program code, and/or other information.

Memory **4914** and persistent storage **4916** are examples of storage devices **4906.** Memory **4914** may take the form of, for example, a random access memory or some type of volatile or non-volatile storage device. Persistent storage **4916** may comprise any number of components or devices. For example, persistent storage **4916** may comprise a hard drive, a flash memory, a rewritable optical disk, a rewritable magnetic tape, or some combination of the above. The media used by persistent storage **4916** may or may not be removable.

Communications unit **4908** allows data processing system **4900** to communicate with other data processing systems and/or devices. Communications unit **4908** may provide communications using physical and/or wireless communications links.

Input/output unit **4910** allows input to be received from and output to be sent to other devices connected to data processing system **4900.** For example, input/output unit **4910** may allow user input to be received through a keyboard, a mouse, and/or some other type of input device. As another example, input/output unit **4910** may allow output to be sent to a printer connected to data processing system **4900.**

Display **4912** is configured to display information to a user. Display **4912** may comprise, for example, without limitation, a monitor, a touch screen, a laser display, a holographic display, a virtual display device, and/or some other type of display device.

In this illustrative example, the processes of the different illustrative embodiments may be performed by processor unit **4904** using computer-implemented instructions. These instructions may be referred to as program code, computer usable program code, or computer readable program code and may be read and executed by one or more processors in processor unit **4904.**

In these examples, program code **4918** is located in a functional form on computer readable media **4920**, which is selectively removable, and may be loaded onto or transferred to data processing system 4900 for execution by processor unit **4904.** Program code **4918** and computer readable media **4920** together form computer program product **4922.** In this illustrative example, computer readable media **4920** may be computer readable storage media **4924** or computer readable signal media **4926.**

Computer readable storage media **4924** is a physical or tangible storage device used to store program code 4918 rather than a medium that propagates or transmits program code **4918.** Computer readable storage media **4924** may be, for example, without limitation, an optical or magnetic disk or a persistent storage device that is connected to data processing system **4900.**

Alternatively, program code **4918** may be transferred to data processing system **4900** using computer readable signal media **4926.** Computer readable signal media **4926** may be, for example, a propagated data signal containing program code **4918.** This data signal may be an electromagnetic signal, an optical signal, and/or some other type of signal that can be transmitted over physical and/or wireless communications links.

The illustration of data processing system **4900** in **Figure 49** is not meant to provide architectural limitations to the manner in which the illustrative embodiments may be implemented. The different illustrative embodiments may be implemented in a data processing system that includes components in addition to or in place of those illustrated for data processing system **4900.** Further, components shown in **Figure 49** may be varied from the illustrative examples shown.

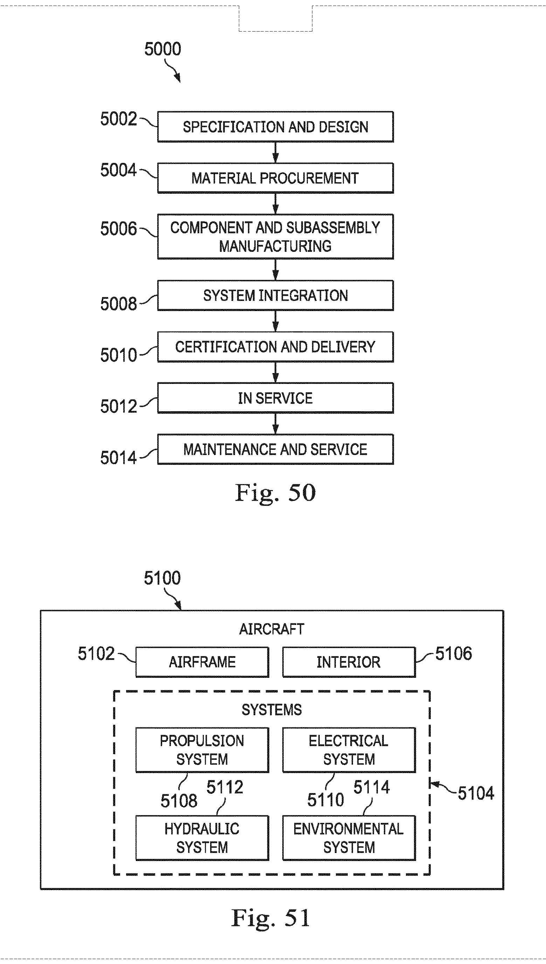

Illustrative embodiments of the disclosure may be described in the context of aircraft manufacturing and service method **5000** as shown in **Figure 50** and aircraft **5100** as shown in **Figure 51. Figure 50** is a block diagram of an aircraft manufacturing and service method, depicted in accordance with an illustrative embodiment. Aircraft manufacturing and service method **5000** may be used to manufacture, for example, aircraft **490** in **Figure 1****.** During pre-production, aircraft manufacturing and service method **5000** may include specification and design **5002** of aircraft **5100** in **Figure 51** and material procurement **5004.**

During production, component and subassembly manufacturing **5006** and system integration **5008** of aircraft **5100** in **Figure 51** takes place. Thereafter, aircraft **5100** in **Figure 51** may go through certification and delivery **5010** in order to be placed in service **5012.** While in service **5012** by a customer, aircraft **5100** in **Figure 51** is scheduled for routine maintenance and service **5014**, which may include modification, reconfiguration, refurbishment, and other maintenance or service.

Each of the processes of aircraft manufacturing and service method **5000** may be performed or carried out by a system integrator, a third party, and/or an operator. In these examples, the operator may be a customer. For the purposes of this description, a system integrator may include, without limitation, any number of aircraft manufacturers and major-system subcontractors; a third party may include, without limitation, any number of vendors, subcontractors, and suppliers; and an operator may be an airline, a leasing company, a military entity, a service organization, and so on.

**Figure 51** is a block diagram of an aircraft, depicted in accordance with an illustrative embodiment. In this example, aircraft **5100** is produced by aircraft manufacturing and service method **5000** in **Figure 50** and may include airframe **5102** with plurality of systems **5104** and interior **5106.** Examples of systems 5104 include one or more of propulsion system 5108, electrical system 5110, hydraulic system 5112, and environmental system 5114. Any number of other systems may be included. Although an aerospace example is shown, different illustrative embodiments may be applied to other industries, such as the automotive industry.

Apparatuses and methods embodied herein may be employed during at least one of the stages of aircraft manufacturing and service method 5000 in Figure 50. In particular, modifications may be made to aircraft 5100 using modification marketplace 102 and graphical user interface 108 in Figures 1 and 2. For example, modifications may be made to aircraft 5100 during any one or more of system integration 5008, certification and delivery 5010, in service 5012, and routine maintenance and service 5014. When aircraft 5100 is a new aircraft being built, production marketplace 104 and graphical user interface 108 may be used to build a new configuration for aircraft 5100. For example, production marketplace 104 may be used to build a new configuration for aircraft 5100 during any one or more of the stages of specification and design 5002, material procurement 5004, system integration 5008, or certification and delivery 5010.

In one illustrative example, components or subassemblies produced in component and subassembly manufacturing 5006 in Figure 50 may be fabricated or manufactured in a manner similar to components or subassemblies produced while aircraft 5100 is in service 5012 in Figure 50. As yet another example, one or more apparatus embodiments, method embodiments, or a combination thereof may be utilized during production stages, such as component and subassembly manufacturing 5006 and system integration 5008 in Figure 50. One or more apparatus embodiments, method embodiments, or a combination thereof may be utilized while aircraft 5100 is in service 5012 and/or during maintenance and service 5014 in Figure 50. The use of a number of the different illustrative embodiments may substantially expedite the assembly of and/or reduce the cost of aircraft 5100.

Further, the disclosure comprises embodiments according to the following clauses:
1. A method for managing aircraft modification, the method comprising: establishing a link to a customer information database in response to receiving a launch input for a modification marketplace entered by a user via a graphical user interface, wherein the customer information database includes identification information and customer information associated with the user; determining whether the user is authorized to access the modification marketplace using the identification information associated with the user; establishing a link to an engineering database containing aircraft product information in response to a determination that the user is authorized to access the modification marketplace; and providing, via the graphical user interface, a selected level of access to the aircraft product information in the engineering database based on the customer information associated with the user.
2. The method of clause 1, further comprising: receiving, via the graphical user interface, user input selecting a set of aircraft; and customizing an experience of the user within the modification marketplace based on the set of aircraft selected.
3. The method of any of clauses 1 or 2, wherein providing, via the graphical user interface, the selected level of access to the aircraft product information comprises: retrieving the customer information from the customer information database, wherein the customer information includes at least one of a customer type or an owner status associated with the user; and limiting access of the user to the selected level of access based on the at least one of the customer type or the owner status associated with the user such that the user is allowed to only access a portion of the aircraft product information in the engineering database.
4. The method of clause 3, wherein providing, via the graphical user interface, the selected level of access to the aircraft product information further comprises: identifying a fleet associated with the user based on the customer information associated with the user, wherein the selected level of access allows access to only a portion of the aircraft product information that is relevant to the fleet.
5. The method of clause 4, wherein the owner status indicates whether the user is associated with a customer that owns the fleet, wherein a number of cart options available to the user is limited based on whether the customer owns the fleet, and wherein the cart options include a purchase option, a firm proposal option, and a rough order of magnitude option.
6. The method of any of clauses 1-5, further comprising: identifying a plurality of aircraft relevant to the user based on the customer information; and displaying an effectivity selector in the graphical user interface that allows the user to select a set of aircraft to be modified from the plurality of aircraft, wherein the effectivity selector provides access to effectivity information for each aircraft in the plurality of aircraft.
7. The method of any of clauses 1-6, wherein determining whether the user is authorized to access the modification marketplace comprises: establishing a link to a licensing database in response to receiving the launch input; and determining, based on the identification information associated with the user and licensing information in the licensing database associated with the user, whether the user is associated with a customer having a valid license with an entity hosting the modification marketplace.
8. The method of clause 7, wherein determining whether the user is authorized to access the modification marketplace further comprises: denying access to the modification marketplace in response to a determination that the customer does not have the valid license.
9. The method of clause 7, wherein determining whether the user is authorized to access the modification marketplace further comprises: establishing a link to an accounts receivable system in response to a determination that the user is associated with the customer having the valid license with the entity; and determining, based on credit information in the accounts receivable system associated with the customer, whether a credit worthiness of the customer meets threshold criteria.
10. The method of clause 9, wherein determining whether the user is authorized to access the modification marketplace further comprises: denying access to the modification marketplace if the credit worthiness does not meet the threshold criteria.
11. The method of clause 9, wherein determining whether the user is authorized to access the modification marketplace further comprises: determining whether the credit worthiness associated with the customer indicates that an up-front payment is required when a purchase is made via the modification marketplace, in response to a determination that the credit worthiness of the customer meets the threshold criteria; and computing up-front payment information for use in forming a final purchase contract for the user in response to a determination that the credit worthiness indicates that the up-front payment is required.
12. The method of any of clauses 1-11, wherein determining whether the user is authorized to access the modification marketplace comprises: determining the selected level of access to be provided to the user using at least one of a purchase authorization filter, a product access filter, or a business scenario filter, wherein the purchase authorization filter limits features available to the user based on an owner status of a customer with which the user is associated; wherein the product access filter limits features available to the user based on a customer type of the customer; and wherein the business scenario filter is used to determine what types of business scenarios are applicable to the customer.
13. The method of any of clauses 1-12, further comprising: customizing an experience of the user within the modification marketplace based on a set of aircraft selected by the user.
14. The method of clause 13, wherein customizing the experience of the user comprises: receiving a feature selection via the graphical user interface; retrieving corresponding information from at least one of a customer information database, an engineering database, an aircraft tracking configuration database, a contract database, or a project management database in response to receiving the feature selection; and determining whether the feature selection includes a feature already installed on at least one of the set of aircraft selected based on the corresponding information retrieved.
15. The method of clause 14, wherein customizing the experience of the user further comprises: alerting the user, via the graphical user interface, that the feature was previously installed on the at least one of the set of aircraft.
16. The method of clause 13, wherein customizing the experience of the user comprises: receiving a feature selection via the graphical user interface; generating, automatically, pricing information for the feature selection based on a number of aircraft included in the set of aircraft selected.
17. A method for managing aircraft modification, the method comprising: establishing a link to a customer information database in response to receiving a launch input for a modification marketplace entered by a user via a graphical user interface, wherein the customer information database includes identification information and customer information associated with the user; determining whether the user is authorized to access the modification marketplace using the identification information associated with the user; establishing a link to at least one of a plurality of data systems containing aircraft product information in response to a determination that the user is authorized to access the modification marketplace; providing, via the graphical user interface, a selected level of access to the aircraft product information based on the customer information associated with the user; receiving, via the graphical user interface, user input selecting a set of aircraft; receiving, via the graphical user interface, a feature selection to modify the set of aircraft; retrieving corresponding information from at least one of the plurality of data systems in response to receiving the feature selection; determining whether the feature selection includes a feature already installed on at least one of the set of aircraft selected based on the corresponding information retrieved; and alerting the user, via the graphical user interface, that the feature was previously installed on the at least one of the set of aircraft.
18. A system for managing modifications to aircraft, the system comprising: a graphical user interface for display on a display system; and a modification marketplace presented to a user via the graphical user interface, wherein the modification marketplace comprises: an access manager that establishes a link to a customer information database in response to receiving a launch input for a modification marketplace entered by the user via a graphical user interface, wherein the customer information database includes identification information and customer information associated with the user; determines whether the user is authorized to access the modification marketplace using the identification information associated with the user; establishes a link to at least one of a plurality of data systems containing aircraft product information in response to a determination that the user is authorized to access the modification marketplace; and provides, via the graphical user interface, a selected level of access to the aircraft product information based on the customer information associated with the user; and a retrofit manager that receives, via the graphical user interface, user input selecting a set of aircraft and customizes an experience of the user within the modification marketplace based on the set of aircraft selected.
19. The system of clause 18, wherein the customer information includes at least one of a customer type or an owner status associated with the user.
20. The system of clause 19, wherein the modification marketplace identifies a fleet associated with the user based on the customer information associated with the user and wherein the selected level of access allows access to only a portion of the aircraft product information that is relevant to the fleet.
21. The system of clause 20, wherein the owner status indicates whether the user is associated with a customer that owns the fleet, wherein a number of cart options available to the user is limited based on whether the customer owns the fleet, and wherein the cart options include a purchase option, a firm proposal option, and a rough order of magnitude option.
22. The system of any of clauses 18-21, wherein the modification marketplace displays an effectivity selector in the graphical user interface that allows the user to select the set of aircraft to be modified from the plurality of aircraft, wherein the effectivity selector provides access to effectivity information for each aircraft in the plurality of aircraft.
23. The system of any of clauses 18-22, wherein the access manager determines the selected level of access to be provided to the user using at least one of a purchase authorization filter, a product access filter, or a business scenario filter.
24. The system of clause 23, wherein the purchase authorization filter limits features available to the user based on an owner status of a customer with which the user is associated.
25. The system of any of clauses 23 or 24, wherein the product access filter limits features available to the user based on a customer type of the customer.
26. The system of any of clauses 23-25, wherein the business scenario filter is used to determine what types of business scenarios are applicable to the customer.
27. The system of any of clauses 18-26, wherein the modification marketplace further comprises: a layout tool that presents at least one of an interactive interior layout or an interactive flight deck layout that allows the user to make feature selections for at least one of an interior of an aircraft or a flight deck of the aircraft, respectively.
28. The system of any of clauses 18-27, wherein the modification marketplace further comprises: a weight change manager that enables the user to make feature selections based on a desired weight change for an aircraft, wherein the weight change manager uses weight requirement information and operational weight information obtained from a weight data system to determine whether the desired weight change meets requirements.
29. A method for building a configuration for a new aircraft, the method comprising: establishing a link to a customer information database in response to receiving a launch input for a production marketplace entered by a user via a graphical user interface, wherein the user is associated with a customer; and wherein the customer information database includes identification information associated with the user; and determining whether the user is authorized to access the production marketplace using the identification information associated with the user; generating guidance information for presentation via the graphical user interface to guide the user through a build process for building the configuration for the new aircraft in response to the user being authorized to access the production marketplace, wherein the guidance information is customized for the customer; and receiving a plurality of feature selections by the user via the graphical user interface; and building the configuration for the new aircraft based on the plurality of feature selections.
30. The method of clause 29, further comprising: identifying customer information for the customer using information retrieved from at least the customer information database, wherein the customer information includes at least one of a customer type or an owner status for the customer.
31. The method of clause 30, wherein generating the guidance information comprises: generating a plurality of questions customized for the customer based on the customer information identified for the customer.
32. The method of clause 31, wherein generating the guidance information further comprises:
   building a base configuration for the new aircraft based on responses to the plurality of questions provided by the user via the graphical user interface, wherein the base configuration comprises a partially completed configuration that provides a starting point for building the configuration for the new aircraft.
33. The method of clause 30, wherein generating the guidance information comprises: tailoring a plurality of business scenarios for presentation to the user via the graphical user interface based on the customer information.
34. The method of clause 33, wherein generating the guidance information comprises: building a base configuration for the new aircraft based on a selection of at least one business scenario of the plurality of business scenarios by the user via the graphical user interface, wherein the base configuration comprises a partially completed configuration that provides a starting point for building the configuration for the new aircraft.
35. The method of any of clauses 29-34, wherein generating the guidance information comprises:
   generating the guidance information using information obtained from the customer information database and at least one of an engineering database, an aircraft tracking configuration database, a weight data system, a contract database, or a project management database.
36. The method of any of clauses 29-34, wherein generating the guidance information comprises:
   identifying a previous configuration used for an existing aircraft, wherein the previous configuration is used as a starting point for building the configuration for the new aircraft.
37. The method of clause 36, wherein the existing aircraft is one of a fleet of aircraft owned by the customer.
38. The method of any of clauses 29-37, wherein building the configuration for the new aircraft comprises: analyzing a main feature included in the plurality of feature selections using information from an engineering database to determine whether a secondary feature relates to the main feature; determining whether a choice for an attribute of the secondary feature is associated with the secondary feature; and automatically adding the secondary feature along with the main feature to the configuration for the new aircraft in response to a determination that no choice is associated with the secondary feature.
39. The method of clause 38, wherein building the configuration for the new aircraft comprises:
   presenting the choice for the attribute of the secondary feature via the graphical user interface in response to a determination that the choice is associated with the secondary feature.
40. The method of clause 39, wherein building the configuration for the new aircraft comprises:
   identifying a selected attribute for the secondary feature based on user input received via the graphical user interface; and adding the secondary feature having the selected attribute along with the main feature to the configuration for the new aircraft.
41. The method of any of clauses 29-40, further comprising: generating, at any point during the build process, a summary of the configuration being built in response to receiving a request for the summary via the graphical user interface.
42. The method of clause 41, wherein the summary includes pricing information for the configuration.
43. The method of any of clauses 29-42, further comprising: generating a report that provides a lifecycle status for the new aircraft.
44. A method for building a configuration for a new aircraft, the method comprising: receiving a launch input for a production marketplace entered by a user via a graphical user interface; establishing a link to a customer information database in response to receiving the launch input, wherein the user is associated with a customer and wherein the customer information database includes identification information associated with the user; determining whether the user is authorized to access the production marketplace based on the identification information associated with the user; identifying customer information for the customer using information retrieved from at least the customer information database, wherein the customer information includes at least one of a customer type or an owner status for the customer; generating guidance information for presentation via the graphical user interface, if the user is authorized, based on the customer information to thereby guide the user through a build process for building the configuration for the new aircraft, wherein the guidance information is customized for the customer; receiving a plurality of feature selections by the user via the graphical user interface; and building the configuration for the new aircraft based on the plurality of feature selections.
45. The method of clause 44, wherein generating the guidance information comprises: building a base configuration for the new aircraft based on user input received in response to the guidance information presented to the user via the graphical user interface, wherein the base configuration comprises a partially completed configuration that provides a starting point for building the configuration for the new aircraft.
46. The method of clause 45, wherein building the configuration comprises: updating the based configuration based on the plurality of feature selections to build the configuration for the new aircraft.
47. A virtual system for building a configuration for a new aircraft, the virtual system comprising: a graphical user interface for display on a display system; and a production marketplace presented to a user via the graphical user interface, wherein the production marketplace comprises: an access manager that establishes a link to a customer information database in response to receiving a launch input for the production marketplace entered by a user via the graphical user interface, wherein the user is associated with a customer and wherein the customer information database includes identification information associated with the user; and determines whether the user is authorized to access the production marketplace using the identification information associated with the user; and a configurator that generates guidance information for presentation via the graphical user interface to guide the user through a build process for building the configuration for the new aircraft, wherein the guidance information is customized for the customer; receives a plurality of feature selections by the user via the graphical user interface; and builds the configuration for the new aircraft based on the plurality of feature selections.
48. The virtual system of clause 47, wherein the access manager identifies customer information for the customer using information retrieved from at least the customer information database, wherein the customer information includes at least one of a customer type or an owner status for the customer.
49. The virtual system of clause 48, wherein the configurator generates a plurality of questions customized for the customer based on the customer information identified for the customer and builds a base configuration for the new aircraft based on responses to the plurality of questions provided by the user via the graphical user interface, wherein the base configuration comprises a partially completed configuration that provides a starting point for building the configuration for the new aircraft.
50. The virtual system of clause 49, wherein the configurator tailors a plurality of business scenarios for presentation to the user via the graphical user interface based on the customer information builds a base configuration for the new aircraft based on a selection of at least one business scenario of the plurality of business scenarios by the user via the graphical user interface, wherein the base configuration comprises a partially completed configuration that provides a starting point for building the configuration for the new aircraft.
51. The virtual system of clause 48, wherein the configurator generates the guidance information using information obtained from the customer information database and at least one of an engineering database, an aircraft tracking configuration database, a weight data system, a contract database, or a project management database.
52. The virtual system of clause 48, wherein the configurator identifies a previous configuration used for an existing aircraft and uses the previous configuration as a starting point for building the configuration for the new aircraft.
53. A system comprising: a graphical user interface for presentation to a user via a display system, wherein the user is associated with a customer; a navigation section in the graphical user interface that includes at least one of a models menu control or a scenarios menu control, wherein the models menu control is selectable to present a plurality of model options to a user in which the plurality of model options is tailored for the customer based on at least one of identification information associated with the user or customer information retrieved for the customer; and wherein the scenarios menu control is selectable to present a plurality of scenario options to a user in which the plurality of scenario options is tailored for the customer based on the at least one of identification information associated with the user or customer information retrieved for the customer; and an effectivity selector in the graphical user interface that is selectable to allow the user to select a set of aircraft for modification, wherein the set of aircraft results in automatic tailoring of features that are displayed in the graphical user interface when an option from the plurality of model options or from the plurality of scenario options is selected.
54. The system of clause 53, further comprising: a modification marketplace control displayed in the graphical user interface that is selectable to trigger an authorization process.
55. The system of clause 54, wherein the authorization process includes establishing a link with a customer information database, a licensing database, and an accounts receivable system to thereby obtain information for determining whether the user is authorized.
56. The system of clause 55, wherein the graphical user interface displays the navigation section and the effectivity selector in the graphical user interface if the user is authorized and wherein the plurality of model options and the plurality of scenario options are customized using the information obtained from the customer information database and at least one of an engineering database, an aircraft tracking configuration database, or a project management database.
57. The system of any of clauses 53-56, wherein a selection of the effectivity selector presents effectivity information for a plurality of aircraft related to the customer, wherein an aircraft in the plurality of aircraft is related to the customer by being one of owned by the customer, leased by the customer, or operated by the customer.
58. The system of clause 57, wherein the effectivity information includes a variable number, a registration number, a manufacturer serial number (MSN), and a line number.
59. The system of clause 57, wherein an aircraft of the plurality of aircraft is selectable using a graphical control displayed in associated with the effectivity information for the aircraft.
60. The system of any of clauses 53-59, wherein the plurality of scenario options includes an add airplane to fleet scenario, a reconfigure interior scenario, and an airspace and mandates scenario category and wherein the airspace and mandates scenario category is selectable to present a plurality of airspace and mandates scenarios that include future mandate scenarios, location regulations scenarios, and route specific scenarios.
61. The system of any of clauses 53-60, further comprising: a cart control in the graphical user interface that is selectable to display a virtual cart in the graphical user interface, wherein each feature included in the virtual cart is displayed in association with an estimated lead time, a total price, and a price control.
62. The system of clause 61, wherein the price control is selectable to display a price calculation chart that identifies the total price for a quantity of aircraft included in the set of aircraft and an individual price for each feature.
63. A method for managing modifications to aircraft using a graphical user interface, the method comprising: displaying a graphical user interface on a display system; displaying a navigation section in the graphical user interface that includes at least one of a models menu control or a scenarios menu control, wherein the models menu control is selectable to present a plurality of model options to a user in which the plurality of model options is customized based on at least one of identification information associated with the user or customer information retrieved for the customer with which the user is associated; and wherein the scenarios menu control is selectable to present a plurality of scenario options to a user in which the plurality of scenario options is tailored for the customer based on the at least one of identification information associated with the user or customer information retrieved for the customer; presenting an effectivity selector in the graphical user interface that is selectable to allow the user to select a set of aircraft for modification; and customizing automatically, based on the set of aircraft selected, features that are displayed in the graphical user interface when an option from the plurality of model options or from the plurality of scenario options is selected.
64. The method of clause 63, further comprising: displaying a modification marketplace control in the graphical user interface, wherein the modification marketplace control is selectable to trigger an authorization process.
65. The method of clause 64, further comprising: performing the authorization process in response to a selection of the modification marketplace control, wherein the authorization process includes establishing a link with a customer information database, a licensing database, and an accounts receivable system to thereby obtain information for determining whether the user is authorized.
66. The method of clause 65, wherein the graphical user interface displays the navigation section and the effectivity selector in the graphical user interface in response to a determination that the user is authorized and further comprising: customizing the plurality of model options and the plurality of scenario options presented in the graphical user interface using the information obtained from the customer information database and at least one of an engineering database, an aircraft tracking configuration database, or a project management database.
67. The method of any of clauses 63-66, further comprising: receiving a selection of the effectivity selector; and presenting effectivity information for a plurality of aircraft related to the customer in response to receiving the selection of the effectivity selector, wherein an aircraft in the plurality of aircraft is related to the customer by being one of owned by the customer, leased by the customer, or operated by the customer.
68. The method of clause 67, wherein the effectivity information includes a variable number, a registration number, a manufacturer serial number (MSN), and a line number.
69. The method of clause 67, wherein presenting the effectivity information comprises: presenting the effectivity information for an aircraft of the plurality of aircraft is displayed in associated with a graphical control that allows selection of the aircraft.
70. The method of any of clauses 63-69, wherein the plurality of scenario options includes an add airplane to fleet scenario, a reconfigure interior scenario, and an airspace and mandates scenario category and wherein the airspace and mandates scenario category is selectable to present a plurality of airspace and mandates scenarios that include future mandate scenarios, location regulations scenarios, and route specific scenarios.
71. The method of any of clauses 63-70, further comprising: displaying a cart control in the graphical user interface, wherein the cart control is selectable to display a virtual cart in the graphical user interface, wherein each feature included in the virtual cart is displayed in association with an estimated lead time, a total price, and a price control that is selectable to display a price calculation chart that identifies the total price for a quantity of aircraft included in the set of aircraft selected and an individual price for each feature.
72. A method for managing modifications to aircraft using a graphical user interface, the method comprising: displaying a modification marketplace control in the graphical user interface, wherein the modification marketplace control is selectable to trigger an authorization process; performing the authorization process in response to a selection of the modification marketplace control by a user via the graphical control interface, wherein the authorization process includes establishing a link with a customer information database, a licensing database, and an accounts receivable system to thereby obtain information for determining whether the user is authorized; displaying a navigation section in the graphical user interface that includes at least one of a models menu control or a scenarios menu control in response to a determination that the user is authorized; wherein the models menu control is selectable to present a plurality of model options to a user; and wherein the scenarios menu control is selectable to present a plurality of scenario options to a user; customizing the plurality of model options and the plurality of scenario options presented in the graphical user interface using the information obtained from the customer information database and at least one of an engineering database, an aircraft tracking configuration database, or a project management database; presenting an effectivity selector in the graphical user interface that is selectable to allow the user to select a set of aircraft for modification; and customizing automatically, based on the set of aircraft selected, features that are displayed in the graphical user interface when an option from the plurality of model options or from the plurality of scenario options is selected.

As used herein, the phrase "at least one of," when used with a list of items, means different combinations of one or more of the listed items may be used and only one of the items in the list may be needed. The item may be a particular object, thing, step, operation, process, or category. In other words, "at least one of' means any combination of items or number of items may be used from the list, but not all of the items in the list may be required. For example, without limitation, "at least one of item A, item B, or item C" or "at least one of item A, item B, and item C" may mean item A; item A and item B; item B; item A, item B, and item C; item B and item C; or item A and C. In some cases, "at least one of item A, item B, or item C" or "at least one of item A, item B, and item C" may mean, but is not limited to, two of item A, one of item B, and five of item C; three of item B and six of item C; or some other suitable combination.

The flowcharts and block diagrams in the different depicted embodiments illustrate the architecture, functionality, and operation of some possible implementations of apparatuses and methods in an illustrative embodiment. In this regard, each block in the flowcharts or block diagrams may represent a module, a segment, a function, and/or a portion of an operation or step. In some alternative implementations of an illustrative embodiment, the function or functions noted in the blocks may occur out of the order noted in the figures. For example, in some cases, two blocks shown in succession may be executed substantially concurrently, or the blocks may sometimes be performed in the reverse order, depending upon the functionality involved. Also, other blocks may be added in addition to the illustrated blocks in a flowchart or block diagram.

The description of the different example embodiments has been presented for purposes of illustration and description, and is not intended to be exhaustive or limited to the embodiments in the form disclosed. Many modifications and variations will be apparent to those of ordinary skill in the art. Further, different example embodiments may provide different features as compared to other desirable embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

## Claims

1. A method for managing aircraft modification, the method comprising:
establishing a link to a customer information database in response to receiving a launch input for a modification marketplace entered by a user via a graphical user interface, wherein the customer information database includes identification information and customer information associated with the user;
determining whether the user is authorized to access the modification marketplace using the identification information associated with the user;
establishing a link to an engineering database containing aircraft product information in response to a determination that the user is authorized to access the modification marketplace; and
providing, via the graphical user interface, a selected level of access to the aircraft product information in the engineering database based on the customer information associated with the user.

2. The method of claim 1, further comprising:
receiving, via the graphical user interface, user input selecting a set of aircraft; and
customizing an experience of the user within the modification marketplace based on the set of aircraft selected.

3. The method of any of claims 1 or 2, wherein providing, via the graphical user interface, the selected level of access to the aircraft product information comprises:
retrieving the customer information from the customer information database, wherein the customer information includes at least one of a customer type or an owner status associated with the user; and
limiting access of the user to the selected level of access based on the at least one of the customer type or the owner status associated with the user such that the user is allowed to only access a portion of the aircraft product information in the engineering database.

4. The method of claim 3, wherein providing, via the graphical user interface, the selected level of access to the aircraft product information further comprises:
identifying a fleet associated with the user based on the customer information associated with the user, wherein the selected level of access allows access to only a portion of the aircraft product information that is relevant to the fleet.

5. The method of claim 4, wherein the owner status indicates whether the user is associated with a customer that owns the fleet, wherein a number of cart options available to the user is limited based on whether the customer owns the fleet, and wherein the cart options include a purchase option, a firm proposal option, and a rough order of magnitude option.

6. The method of any of claims 1-5, further comprising:
identifying a plurality of aircraft relevant to the user based on the customer information; and
displaying an effectivity selector in the graphical user interface that allows the user to select a set of aircraft to be modified from the plurality of aircraft, wherein the effectivity selector provides access to effectivity information for each aircraft in the plurality of aircraft.

7. The method of any of claims 1-6, wherein determining whether the user is authorized to access the modification marketplace comprises:
establishing a link to a licensing database in response to receiving the launch input; and
determining, based on the identification information associated with the user and licensing information in the licensing database associated with the user, whether the user is associated with a customer having a valid license with an entity hosting the modification marketplace;
denying access to the modification marketplace in response to a determination that the customer does not have the valid license.

8. The method of claim 7, wherein determining whether the user is authorized to access the modification marketplace further comprises:
establishing a link to an accounts receivable system in response to a determination that the user is associated with the customer having the valid license with the entity; and
determining, based on credit information in the accounts receivable system associated with the customer, whether a credit worthiness of the customer meets threshold criteria.

9. The method of claim 8, wherein determining whether the user is authorized to access the modification marketplace further comprises:
denying access to the modification marketplace if the credit worthiness does not meet the threshold criteria.

10. The method of claim 8, wherein determining whether the user is authorized to access the modification marketplace further comprises:
determining whether the credit worthiness associated with the customer indicates that an up-front payment is required when a purchase is made via the modification marketplace, in response to a determination that the credit worthiness of the customer meets the threshold criteria; and
computing up-front payment information for use in forming a final purchase contract for the user in response to a determination that the credit worthiness indicates that the up-front payment is required.

11. The method of any of claims 1-10, wherein determining whether the user is authorized to access the modification marketplace comprises:
determining the selected level of access to be provided to the user using at least one of a purchase authorization filter, a product access filter, or a business scenario filter,
wherein the purchase authorization filter limits features available to the user based on an owner status of a customer with which the user is associated;
wherein the product access filter limits features available to the user based on a customer type of the customer; and
wherein the business scenario filter is used to determine what types of business scenarios are applicable to the customer.

12. The method of any of claims 1-11, further comprising:
customizing an experience of the user within the modification marketplace based on a set of aircraft selected by the user;
wherein customizing the experience of the user comprises:
receiving a feature selection via the graphical user interface;
retrieving corresponding information from at least one of a customer information database, an engineering database, an aircraft tracking configuration database, a contract database, or a project management database in response to receiving the feature selection; and
determining whether the feature selection includes a feature already installed on at least one of the set of aircraft selected based on the corresponding information retrieved.

13. The method of claim 12, wherein customizing the experience of the user further comprises:
alerting the user, via the graphical user interface, that the feature was previously installed on the at least one of the set of aircraft; and/or
receiving a feature selection via the graphical user interface, and generating, automatically, pricing information for the feature selection based on a number of aircraft included in the set of aircraft selected.

14. A system for managing modifications to aircraft, the system comprising:
a graphical user interface for display on a display system; and
a modification marketplace presented to a user via the graphical user interface, wherein the modification marketplace operable to perform the steps of any of claims 1-13, and comprises:
an access manager that establishes a link to a customer information database in response to receiving a launch input for a modification marketplace entered by the user via a graphical user interface, wherein the customer information database includes identification information and customer information associated with the user; determines whether the user is authorized to access the modification marketplace using the identification information associated with the user; establishes a link to at least one of a plurality of data systems containing aircraft product information in response to a determination that the user is authorized to access the modification marketplace; and provides, via the graphical user interface, a selected level of access to the aircraft product information based on the customer information associated with the user; and
a retrofit manager that receives, via the graphical user interface, user input selecting a set of aircraft and customizes an experience of the user within the modification marketplace based on the set of aircraft selected.

15. The system of claim 14, wherein the modification marketplace further comprises:
a layout tool that presents at least one of an interactive interior layout or an interactive flight deck layout that allows the user to make feature selections for at least one of an interior of an aircraft or a flight deck of the aircraft, respectively; and/or
a weight change manager that enables the user to make feature selections based on a desired weight change for an aircraft, wherein the weight change manager uses weight requirement information and operational weight information obtained from a weight data system to determine whether the desired weight change meets requirements.
